# EUROPEAN PATENT SPECIFICATION

(11) **EP 4 314 115 B1**
(45) Date of publication and mention of the grant of the patent: **02.12.2026**
(21) Application number: 22718026.2
(22) Date of filing: 14.03.2022
(51) Int. Cl.: C08G 75/045, C08G 59/50, C08G 59/66, C08L 81/02, C09D 181/02

(54) **HYBRID DUAL CURE COMPOSITIONS**
HYBRIDE DUAL-CURE-ZUSAMMENSETZUNGEN
COMPOSITIONS HYBRIDES À DOUBLE DURCISSEMENT

(30) Priority: 29.03.2021 US 202163200780 P
(43) Date of publication of application: 07.02.2024
(73) Proprietor: PRC-Desoto International, Inc., Sylmar, California 91342 (US)
(72) Inventor: FU, Na, Camarillo, California 93012 (US); SRIVATSAN, Nagarajan, Diamond Bar, California 91765 (US); PENG, Shane Xiufeng, Valencia, California 91354 (US)
(74) Representative: f & e patent
(86) International application number: PCT/US2022/071117
(87) International publication number: WO 2022/213016

(56) References cited:
- US-A1- 2003 008 977
- US-A1- 2020 199 300
- US-A1- 2020 317 917
- CLARK LESLIE J ET AL: "Use of Permapol s P3.1 polymers and epoxy resins in the formulation of aerospace sealants", INTERNATIONAL JOURNAL OF ADHESION & ADHESIVES, vol. 23, 1 January 2003 (2003-01-01), pages 343 - 348, XP055929264, DOI: 10.1016/S0143-7496(03)00002-2

## Description

### FIELD

The disclosure relates to free radical-curable thiol-ene compositions a polyepoxide or a combination of a polyepoxide and a polyamine, and an organic peroxide as further defined in the claims. The hybrid dual cure compositions have an extended working time, a fast tack-free time, and a fast cure time. The compositions are useful as sealants.

### BACKGROUND

US 2020/317917 A1 relates to dual cure compositions including a combination of an organoborane complex and a radical oxidizing agent as co-catalysts. Dual cure sealants are described in US 2020/199300 A1. Aerospace sealants are described by L. J. Clark et al. (International Journal of Adhesion and Adhesives 2003, 23, 343-348), and sealant and potting formulations are described in US 2003/008977 A1.

Combinations of metal complexes and organic peroxides can be used as free radical catalysts for curing thiol-ene compositions. Combinations of metal complexes and organic peroxides can also impart useful hybrid dual cure properties to radiation curable compositions such as UV curable sealants. The cure dynamics can depend on the combination of metal complexes and organic peroxides. Using different solvent mixtures to disperse the metal complexes it is also possible to control the gel time of the compositions and control the time to fully cure the compositions under dark conditions. The physical properties and adhesion of compositions cured using a dark cure redox radical initiated reaction are comparable to those of compositions cured using actinic radiation only (in the absence of the dark cure catalyst system) such as UV-radiation. Such hybrid dual cure compositions have several advantages. For example, the surface of a composition can be rapidly cured by exposure to the radiation enabling the part to be manipulated and handled while the unexposed portion of the composition fully cures. Using a hybrid dual cure mechanism, the surface of a composition can be rapidly cured without exposing the full depth of the composition to the radiation and thereafter the unexposed composition can fully cure. Also, in geometries and configurations where it is not possible to directly expose a curable composition to radiation, a portion of the composition can be exposed to the radiation thereby initiating dark cure redox curing mechanisms that can propagate through unexposed areas of the composition. Hybrid dual cure mechanisms can further provide opportunities to control the cure rate of a composition, which can lead to improved properties such as improved tensile strength, %elongation, solvent resistance, and adhesion.

Although free-radical initiated thiol-ene chemistry is relatively insensitive to oxygen inhibition, under low radiation flux conditions oxygen inhibition can have a significant impact on the cure dynamics. A dark cure free radical polymerization initiator such as a metal complex/organic peroxide can generate radicals under low flux conditions. However, free radicals generated through peroxide scission can react with atmospheric oxygen and thereby inhibit curing. Cure inhibition is particularly pronounced at the surface of the composition where oxygen concentration is high and results in long tack-free times. Long tack-free times are can decrease production efficiency.

Reducing the tack free time by increasing the redox catalyst level reducing the working time of the sealant to an unacceptable level. In addition, the thermal stability of the cured compositions and the depth of cure cam be compromised when a high concentration of catalyst is used.

### SUMMARY

According to the present invention, compositions comprise a thiol-functional prepolymer; a polyalkenyl; a polyepoxide, or a combination of a polyepoxide and a polyamine; and an organic peroxide.

### DETAILED DESCRIPTION

For purposes of the following detailed description, it is to be understood that embodiments provided by the present disclosure may assume various alternative variations and step sequences, except where expressly specified to the contrary. Moreover, other than in any operating examples, or where otherwise indicated, all numbers expressing, for example, quantities of ingredients used in the specification and claims are to be understood as being modified in all instances by the term "about." Accordingly, unless indicated to the contrary, the numerical parameters set forth in the following specification and attached claims are approximations that may vary depending upon the desired properties to be obtained by the present invention. At the very least, and not as an attempt to limit the application of the doctrine of equivalents to the scope of the claims, each numerical parameter should at least be construed in light of the number of reported significant digits and by applying ordinary rounding techniques.

Notwithstanding that the numerical ranges and parameters setting forth the broad scope of the invention are approximations, the numerical values set forth in the specific examples are reported as precisely as possible. Any numerical value, however, inherently contains certain errors necessarily resulting from the standard variation found in their respective testing measurements.

Also, it should be understood that any numerical range recited herein is intended to include all sub-ranges subsumed therein. For example, a range of "1 to 10" is intended to include all sub-ranges between (and including) the recited minimum value of 1 and the recited maximum value of 10, that is, having a minimum value equal to or greater than 1 and a maximum value of equal to or less than 10.

When reference is made to a chemical group defined, for example, by a number of carbon atoms, the chemical group is intended to include all sub-ranges of carbon atoms as well as a specific number of carbon atoms. For example, a C₂₋₁₀ alkanediyl includes a C₂₋₄ alkanediyl, a C₅₋₇ alkanediyl, and other sub-ranges, a C₂ alkanediyl, a C₆ alkanediyl, and alkanediyls having other specific number(s) of carbon atoms from 2 to 10.

An "alkenyl" group refers to a group having the structure -CR=C(R)₂ where the alkenyl group can be bonded to a larger molecule. In an alkenyl group, each R can independently be selected from, for example, hydrogen and C₁₋₃ alkyl. Each R can be hydrogen and an alkenyl group can have the structure -CH=CH₂.

An "alkenyl ether" group refers to group having the structure -O-CR=C(R)₂ where the alkenyl group can be bonded to a larger molecule. In an alkenyl ether, each R can independently be selected from, for example, hydrogen and C₁₋₃ alkyl. Each R can be hydrogen and an alkenyl ether group can have the structure -O-CH=CH₂.

"Alkanediyl" refers to a diradical of a saturated, branched or straight-chain, acyclic hydrocarbon group having, for example, from 1 to 18 carbon atoms (C₁₋₁₈), from 1 to 14 carbon atoms (C₁₋₁₄), from 1 to 6 carbon atoms (C₁₋₆), from 1 to 4 carbon atoms (C₁₋₄), or from 1 to 3 hydrocarbon atoms (C₁₋₃). A branched alkanediyl has a minimum of three carbon atoms. An alkanediyl can be C₂₋₁₄ alkanediyl, C₂₋₁₀ alkanediyl, C₂₋₈ alkanediyl, C₂₋₆ alkanediyl, C₂₋₄ alkanediyl, or C₂₋₃ alkanediyl. Examples of alkanediyl groups include methane-diyl (-CH₂-), ethane-1,2-diyl (-CH₂CH₂-), propane-1,3-diyl and iso-propane-1,2-diyl (*e.g.,* -CH₂CH₂CH₂- and -CH(CH₃)CH₂-), butane-1,4-diyl (-CH₂CH₂CH₂CH₂-), pentane-1,5-diyl (-CH₂CH₂CH₂CH₂CH₂-), hexane-1,6-diyl (-CH₂CH₂CH₂CH₂CH₂CH₂-), heptane-1,7-diyl, octane-1,8-diyl, nonane-1,9-diyl, decane-1,10-diyl, and dodecane-1,12-diyl.

"Alkanecycloalkyl" refers to a saturated hydrocarbon group having one or more cycloalkyl and/or cycloalkanediyl groups and one or more alkyl and/or alkanediyl groups, where cycloalkyl, cycloalkanediyl, alkyl, and alkanediyl are defined herein. Each cycloalkyl and/or cycloalkanediyl group can be C₃₋₆, C₅₋₆, cyclohexyl or cyclohexanediyl. Each alkyl and/or alkanediyl group(s) can be C₁₋₆, C₁₋₄, C₁₋₃, methyl, methanediyl, ethyl, or ethane-1,2-diyl. An alkanecycloalkyl group can be C₄₋₁₈ alkanecycloalkyl, C₄₋₁₆ alkanecycloalkyl, C₄₋₁₂ alkanecycloalkyl, C₄₋₈ alkanecycloalkyl, C₆₋₁₂ alkanecycloalkyl, C₆₋₁₀ alkanecycloalkyl, or C₆₋₉ alkanecycloalkyl. Examples of alkanecycloalkyl groups include 1,1,3,3-tetramethylcyclohexane and cyclohexylmethane.

"Alkynyl" group refers to a moiety, -C≡CR where the alkynyl group is bonded to a larger molecule. In an alkynyl group, each R can independently comprise, for example, hydrogen or C₁₋₃ alkyl. Each R can be hydrogen and an alkynyl group can have the structure, -C≡CH.

"Alkoxy" refers to a -OR group where R is alkyl as defined herein. Examples of alkoxy groups include methoxy, ethoxy, n-propoxy, isopropoxy, and n-butoxy. An alkoxy group can be, for example, C₁₋₈ alkoxy, C₁₋₆ alkoxy, C₁₋₄ alkoxy, or C₁₋₃ alkoxy.

"Alkyl" refers to a monoradical of a saturated, branched or straight-chain, acyclic hydrocarbon group having, for example, from 1 to 20 carbon atoms, from 1 to 10 carbon atoms, from 1 to 6 carbon atoms, from 1 to 4 carbon atoms, or from 1 to 3 carbon atoms. It will be appreciated that a branched alkyl has a minimum of three carbon atoms. An alkyl group can be, for example, C₁₋₆ alkyl, C₁₋₄ alkyl, or C₁₋₃ alkyl. Examples of alkyl groups include methyl, ethyl, n-propyl, iso-propyl, n-butyl, iso-butyl, *tert-butyl,* n-hexyl, n-decyl, and tetradecyl.

"Arenediyl" refers to diradical monocyclic or polycyclic aromatic group. Examples of arenediyl groups include benzene-diyl and naphthalene-diyl. An arenediyl group can be, for example, C₆₋₁₂ arenediyl, C₆₋₁₀ arenediyl, C₆₋₉ arenediyl, or benzene-diyl.

"Aryl" refers to a monovalent aromatic hydrocarbon radical derived by the removal of one hydrogen atom from a single carbon atom of a parent aromatic ring system. Aryl encompasses 5- and 6-membered carbocyclic aromatic rings, for example, benzene; bicyclic ring systems wherein at least one ring is carbocyclic and aromatic, for example, naphthalene, indane, and tetralin; and tricyclic ring systems wherein at least one ring is carbocyclic and aromatic, for example, fluorene. Aryl encompasses multiple ring systems having at least one carbocyclic aromatic ring fused to at least one carbocyclic aromatic ring, cycloalkyl ring, or heterocycloalkyl ring. For example, aryl includes a phenyl ring fused to a 5- to 7-membered heterocycloalkyl ring containing one or more heteroatoms selected from N, O, and S. For such fused, bicyclic ring systems wherein only one of the rings is a carbocyclic aromatic ring, the radical carbon atom may be at the carbocyclic aromatic ring or at the heterocycloalkyl ring. Examples of aryl groups include groups derived from aceanthrylene, acenaphthylene, acephenanthrylene, anthracene, azulene, benzene, chrysene, coronene, fluoranthene, fluorene, hexacene, hexaphene, hexalene, as-indacene, s-indacene, indane, indene, naphthalene, octacene, octaphene, octalene, ovalene, pentacene, pentalene, pentaphene, perylene, phenalene, phenanthrene, picene, pleiadene, pyrene, pyranthrene, rubicene, triphenylene, trinaphthalene, and the like. In certain embodiments, an aryl group is C₆₋₁₀ aryl, and in certain embodiments, phenyl. Aryl, however, does not encompass or overlap in any way with heteroaryl, separately defined herein.

Average molecular weight" refers to number average molecular weight. Number average molecular weight can be determined by gel permeation chromatography using a polystyrene standard, or for thiol-functional prepolymers, can be determined using iodine titration.

"Composition" is intended to encompass a product comprising the specified components in the specified amounts, as well as any product which results, directly or indirectly, from the combination of the specified ingredients in the specified amounts.

A "core" of a compound or a polymer refers to the segment between the reactive terminal groups. For example, the core of a polythiol HS-R-SH will be -R-. A core of a compound or prepolymer can also be referred to as a backbone of a compound or a backbone of a prepolymer. A core of a polyfunctionalizing agent can be an atom or a structure such as a cycloalkane, a substituted cycloalkane, heterocycloalkane, substituted heterocycloalkane, arene, substituted arene, heteroarene, or substituted heteroarene from which moieties having a reactive functional are bonded.

A "core" of a polyfunctionalizing agent B(-V)_{z} refers to the moiety B. In a polyfunctionalizing have the formula B(-V)_{z}, B is the core of the polyfunctionalizing agent, each V is a moiety terminated in a reactive functional group such as a thiol group, an alkenyl group, an alkynyl group, an epoxy group, an isocyanate group, or a Michael acceptor group, and z is an integer from 3 to 6, such as 3, 4, 5, or 6. In polyfunctionalizing agents of Formula (1), each -V can have the structure, for example, -R-SH or -R-CH=CH₂, where R can be, for example, C₂₋₁₀ alkanediyl, C₂₋₁₀ heteroalkanediyl, substituted C₂₋₁₀ alkanediyl, or substituted C₂₋₁₀ heteroalkanediyl.

When the moiety V is reacted with another compound the moiety -V¹- results and is said to be derived from the reaction with the other compound. For example, when V is -R-CH=CH₂ and is reacted, for example, with a thiol group, the moiety V¹ is -R-CH₂-CH₂- and is derived from the reaction with the thiol.

In a polyfunctionalizing agent, B can be, for example C₂₋₈ alkane-triyl, C₂₋₈ heteroalkane-triyl, C₅₋₈ cycloalkane-triyl, C₅₋₈ heterocycloalkane-triyl, substituted C₅₋₈ cycloalkene-triyl, C₅₋₈ heterocycloalkane-triyl, C₆ arene-triyl, C₄₋₅ heteroarene-triyl, substituted C₆ arene-triyl, or substituted C₄₋₅ heteroarene-triyl.

In a polyfunctionalizing agents, B can be, for example, C₂₋₈ alkane-tetrayl, C₂₋₈ heteroalkane-tetrayl, C₅₋₁₀ cycloalkane-tetrayl, C₅₋₁₀ heterocycloalkane-tetrayl, C₆₋₁₀ arene-tetrayl, C₄ heteroarene-tetrayl, substituted C₂₋₈ alkane-tetrayl, substituted C₂₋₈ heteroalkane-tetrayl, substituted C₅₋₁₀ cycloalkane-tetrayl, substituted C₅₋₁₀ heterocycloalkane-tetrayl, substituted C₆₋₁₀ arene-tetrayl, and substituted C₄₋₁₀ heteroarene-tetrayl.

Examples of suitable alkenyl-terminated polyfunctionalizing agents include triallyl cyanurate (TAC), triallylisocyanurate (TAIC), 1,3,5-triallyl-1,3,5-triazinane-2,4,6-trionel,3-bis(2-methylallyl)-6-methylene-5-(2-oxopropyl)-1,3,5-triazinone-2,4-dione, tris(allyloxy)methane, pentaerythritol triallyl ether, 1-(allyloxy)-2,2-bis((allyloxy)methyl)butane, 2-prop-2-ethoxy-1,3,5-tris(prop-2-enyl)benzene, 1,3,5-tris(prop-2-enyl)-1,3,5-triazinane-2,4-dione, and 1,3,5-tris(2-methylallyl)-1,3,5-triazinane-2,4,6-trione, 1,2,4-trivinylcyclohexane, and combinations of any of the foregoing.

An alkenyl-terminated polyfunctionalizing agent can comprise include triallyl cyanurate (TAC), triallylisocyanurate (TAIC), or a combination thereof.

A polyfunctionalizing agent of Formula (1) can be thiol terminated.

Examples of suitable trifunctional thiol-terminated polyfunctionalizing agents include, for example, 1,2,3-propanetrithiol, 1,2,3-benzenetrithiol, heptane-1,3-7-trithiol, 1,3,5-triazine-2,4-6-trithiol, isocyanurate-containing trithiols, and combinations thereof, as disclosed in U.S. Application Publication No. 2010/0010133, and the polythiols described in U.S. Patent Nos. 4,366,307; 4,609,762; and 5,225,472.

Combinations of polyfunctionalizing agents can also be used.

"Cycloalkanediyl" refers to a diradical saturated monocyclic or polycyclic hydrocarbon group. A cycloalkanediyl group can be, for example, C₃₋₁₂ cycloalkanediyl, C₃₋₈ cycloalkanediyl, C₃₋₆ cycloalkanediyl, or C₅₋₆ cycloalkanediyl. Examples of cycloalkanediyl groups include cyclohexane-1,4-diyl, cyclohexane-1,3-diyl, and cyclohexane-1,2-diyl.

"Cycloalkyl" refers to a saturated monocyclic or polycyclic hydrocarbon mono-radical group. A cycloalkyl group can be, for example, C₃₋₁₂ cycloalkyl, C₃₋₈ cycloalkyl, C₃₋₆ cycloalkyl, or C₅₋₆ cycloalkyl.

A dash ("-") that is not between two letters or symbols is used to indicate a point of bonding for a substituent or between two atoms. For example, -CONH₂ is attached to another moiety through the carbon atom.

"Derived from the reaction of -V with a thiol" refers to a moiety -V¹- that results from the reaction of a thiol group with a moiety comprising a terminal group reactive with a thiol group. For example, a group V- can comprise CH₂=CH-CH₂-O-, where the terminal alkenyl group CH₂=CH- is reactive with a thiol group -SH. Upon reaction with a thiol group, the moiety -V¹- is -CH₂-CH₂-CH₂-O-.

"Heteroalkanediyl" refers to an alkanediyl group in which one or more of the carbon atoms are replaced with a heteroatom, such as N, O, S, and/or P. In a heteroalkanediyl, the one or more heteroatoms can be N and/or O.

"Heterocycloalkanediyl" refers to a cycloalkanediyl group in which one or more of the carbon atoms are replaced with a heteroatom, such as N, O, S, and/or P. In a heterocycloalkanediyl, the one or more heteroatoms can be N and/or O.

"Heteroarenediyl" refers to an arenediyl group in which one or more of the carbon atoms are replaced with a heteroatom, such as N, O, S, and/or P. In a heteroarenediyl, the one or more heteroatoms can be N and/or O.

"Heteroaryl" refers to a monovalent heteroaromatic radical derived by the removal of one hydrogen atom from a single atom of a parent heteroaromatic ring system. Heteroaryl encompasses multiple ring systems having at least one heteroaromatic ring fused to at least one other ring, which may be aromatic or non-aromatic. For example, heteroaryl encompasses bicyclic rings in which one ring is heteroaromatic and the second ring is a heterocycloalkyl ring. For such fused, bicyclic heteroaryl ring systems wherein only one of the rings contains one or more heteroatoms, the radical carbon may be at the aromatic ring or at the heterocycloalkyl ring. In certain embodiments, when the total number of N, S, and O atoms in the heteroaryl group exceeds one, the heteroatoms may or may not be adjacent to one another. In certain embodiments, the total number of heteroatoms in the heteroaryl group is not more than two. In certain embodiments of heteroaryl, the heteroatomic group is selected from -O-, -S-, -NH-, -N(-CH₃)-, -SO-, and -SO₂-, in certain embodiments, the heteroatomic group is selected from -O- and -NH-, and in certain embodiments the heteroatomic group is -O- or -NH-. A heteroaryl group can be selected from C₅₋₁₀ heteroaryl, C₅₋₉ heteroaryl, C₅₋₈ heteroaryl, C₅₋₇ heteroaryl, and C₅₋₆ heteroaryl, such as C₅ heteroaryl and C₆ heteroaryl.

Examples of heteroaryl groups include groups derived from acridine, arsindole, carbazole, α-carboline, chromane, chromene, cinnoline, furan, imidazole, indazole, indole, indoline, indolizine, isobenzofuran, isochromene, isoindole, isoindoline, isoquinoline, isothiazole, isoxazole, naphthyridine, oxadiazole, oxazole, perimidine, phenanthridine, phenanthroline, phenazine, phthalazine, pteridine, purine, pyran, pyrazine, pyrazole, pyridazine, pyridine, pyrimidine, pyrrole, pyrrolizine, quinazoline, quinoline, quinolizine, quinoxaline, tetrazole, thiadiazole, thiazole, thiophene, triazole, xanthene, thiazolidine, oxazolidine, and the like. In certain embodiments, heteroaryl groups are those derived from thiophene, pyrrole, benzothiophene, benzofuran, indole, pyridine, quinoline, imidazole, oxazole, or pyrazine. For example, heteroaryl can be selected from furyl, thienyl, pyrrolyl, imidazolyl, pyrazolyl, isothiazolyl, or isoxazolyl. In certain embodiments, heteroaryl is C₆ heteroaryl, and is selected from pyridinyl, pyrazinyl, pyrimidinyl, and pyridazinyl.

A "polyalkynyl" refers to a compound having at least two alkynyl groups. A polyalkynyl can be a dialkynyl, having two alkynyl groups. A polyalkynyl can have more than two alkynyl groups such as from three to six alkynyl groups. A polyalkynyl can comprise a single type of polyalkynyl, can be a combination of polyalkynyls having the same alkynyl functionality, or can be a combination of polyalkynyls having different alkynyl functionalities.

"Application time" refers to the duration during which a curable composition can be applied to a surface. The application time can be for example, greater than 2 hours, greater than 4 hours, greater than 6 hours, greater than 12 hours, greater than 16 hours, greater than 20 hours, or greater than 24 hours. The application time can depend on the method of application such as, for example, by extrusion, roller coating, brushing, or spreading. The application time of a curable composition can be quantified by measuring the extrusion rate of a composition as described in the Examples. For example, the application time of a curable composition provided by the present disclosure can be defined as the duration until the curable composition exhibits an extrusion rate, as determined by extrusion through a No. 440 nozzle (Semco, 6.35 mm [0.125-inch] internal diameter and 10.2 cm [4-inch] length, available from PPG Aerospace) at a pressure of 90 psi (620 KPa) that is 15 g/min, 30 g/min, 50 g/min, or 100 g/min. A suitable application time can depend on the application conditions such as, for example, on the specific application method, temperature, humidity, thickness, surface area and volume.

"Cure time" or "time to cure" refers to the duration from the time when coreactive components are first combined and mixed to form a curable composition or a curing reaction of the curable composition is first initiated until the compositing exhibits a hardness that is within 10% such as within 5% of the maximum hardness attained by the composition. A composition provided by the present disclosure can have a hardness within a range from Shore 30A to Shore 70A as determined according to ASTM D2240 at 25 °C and 50%RH. A cure time can be, for example, from 1 week to 2 weeks, from 1 week to 6 weeks, from 2 weeks to 5 weeks, or from 3 weeks to 5 weeks.

A compound having a thiol functionality, or a thiol-reactive functionality refers to a compound which has reactive thiol groups or thiol-reactive groups, respectively. The reactive thiol groups or thiol-reactive groups may be terminal groups bonded to the ends of a molecule such as a monomer or a prepolymer, may be bonded to the backbone of a molecule such as the backbone of a prepolymer, or a molecule may contain thiol groups or thiol-reactive groups that are terminal groups and that are bonded to the backbone such as the backbone of a prepolymer.

"Cure" or "cured" as used in connection with a composition such as "composition when cured" or a "cured composition", means that the composition has a hardness that is within 10% such as within 5% of the maximum hardness of the cured composition.

The term "equivalent" refers to the number of reactive functional reactive groups of a compound.

"Equivalent weight" is effectively equal to the molecular weight of a compound divided by the valence or number of functional reactive groups of the compound.

A "backbone" of a prepolymer refers to the segment between the reactive terminal groups. A prepolymer backbone typically includes repeating subunits. For example, the backbone of a polythiol HS-[R]ₙ-SH is -[R]ₙ-.

A "core" of a polyfunctionalizing agent B(-V)_{z} refers to the moiety B.

A "curable composition" refers to a composition that comprises at least two reactants capable of reacting to form a cured composition.

"Cure time" refers to the duration from when a curing reaction is first initiated, for example, by combining and mixing to coreactive components to form a curable composition and/or by exposing a curable composition to actinic radiation, until a layer prepared from the curable composition exhibits a hardness of Shore 30A at conditions of 25 °C and 50%RH. For an actinic radiation-curable composition the cure time refers to the duration from when the curable composition is first exposed to actinic radiation to the time when a layer prepared from the exposed curable composition exhibits a hardness within 10% such as within 5% of the maximum hardness of the cured composition. For sealant compositions disclosed herein, depending on the composition, the maximum hardness can be within a range, for example from Shore 30A to Shore 70A, as measured according to ASTM D2240 at conditions of 25 °C and 50%RH.

"Dark cure" refers to curing mechanisms that do not require exposure to actinic radiation such as UV radiation to initiate the generation of free radicals. Actinic radiation may be applied to a dark cure system to accelerate curing of all or a part of a composition but exposing the composition to actinic radiation is not necessary to cure the composition. A dark cure composition can fully cure under dark conditions without exposure to actinic radiation.

A dash ("-") that is not between two letters or symbols is used to indicate a point of bonding for a substituent or between two atoms. For example, -CONH₂ is attached through the carbon atom.

"Derived from" as in "a moiety derived from a compound" refers to a moiety that is generated upon reaction of a parent compound with a reactant. For example, a bis(alkenyl) compound CH₂=CH-R-CH=CH₂ can react with another compound such as a compound having thiol groups to produce the moiety -(CH₂)₂-R-(CH₂)₂-, which is derived from the reaction of the alkenyl groups of the bis(alkenyl) compound with the thiol groups. As another example, for a parent dithiol having the structure HS-R-SH, a moiety derived from ta reaction of the dithiol with a thiol-reactive group has the structure -S-R-S-.

"Derived from the reaction of -R with a thiol" refers to a moiety -R'- that results from the reaction of a thiol group with a moiety comprising a thiol-reactive group. For example, a group R-can comprise CH₂=CH-CH₂-O-, where the alkenyl group CH₂=CH- is reactive with a thiol group - SH. Upon reaction with a thiol group, the moiety -R'- is -CH₂-CH₂-CH₂-O-.

Glass transition temperature T_{g} is determined by dynamic mechanical analysis (DMA) using a TA Instruments Q800 apparatus with a frequency of 1 Hz, an amplitude of 20 microns, and a temperature ramp of -80 °C to 25 °C, with the T_{g} identified as the peak of the tan δ curve.

"Molecular weight" refers to a theoretical molecular weight estimated from the chemical structure of a compound such as a monomeric compound, or a number average molecular weight of a prepolymer and can be determined, for example, using gel permeation chromatography with polystyrene standards.

A "monomer" or "monomeric compound" refers to a compound having a molecular weight, for example, less than 1,000 Da, less than 800 Da less than 600 Da, less than 500 Da, less than 400 Da, or less than 300 Da. A monomer can have a molecular weight, for example, from 100 Da to 1,000 Da, from 100 Da to 800 Da, from 100 Da to 600 Da, from 150 Da, to 550 Da, or from 200 Da to 500 Da. A monomer can have a molecular weight greater than 100 Da, greater than 200 Da, greater than 300 Da, greater than 400 Da, greater than 500 Da, greater than 600 Da, or greater than 800 Da. A monomer can have a reactive functionality of two or more, for example, from 2 to 6, from 2 to 5, or from 2 to 4. A monomer can have a functionality of 2, 3, 4, 5, 6, or a combination of any of the foregoing. A monomer can have an average reactive functionality, for example, from 2 to 6, from 2 to 5, from 2 to 4, from 2 to 3, from 2.1 to 2.8, or from 2.2 to 2.6. Reactive functionality refers to the number of reactive functional groups per molecule. A combination of monomers having a different number of reactive functional groups can have a non-integer average number of reactive functional groups. A monomer does not typically have repeating units having the same or similar molecular structure.

A "polyalkenyl" refers to a compound having two or more alkenyl groups. A polyalkenyl can be a dialkenyl having two alkenyl groups. A polyalkenyl can have more than two alkenyl groups such as from three to six alkenyl groups. A polyalkenyl can comprise a single type of polyalkenyl, can be a combination of polyalkenyls having the same alkenyl functionality, or can be a combination of polyalkenyls having different alkenyl functionalities.

"Polymerization initiator" refers to a compound or complex capable of generating free radicals and initiating a free radical polymerization reaction following activation of the polymerization initiator. A polymerization initiator can be activated, for example, upon exposure to actinic radiation or heat.

"Prepolymer" refers to homopolymers, and copolymers. For thiol-functional prepolymers, molecular weights are number average molecular weights "Mn" as determined by end group analysis using iodine titration. For prepolymers that are not thiol-functional, the number average molecular weights are determined by gel permeation chromatography using polystyrene standards. A prepolymer comprises a backbone and reactive groups capable of reacting with another compound such as a curing agent or crosslinker to form a cured polymer. A prepolymer includes multiple repeating subunits bonded to each other than can be the same or different. The multiple repeating subunits make up the backbone of the prepolymer.

"Reaction product of" refers to a chemical reaction product(s) of at least the recited reactants and can include partial reaction products as well as fully reacted products and other reaction products that are present in a lesser amount. For example, a "prepolymer comprising the reaction product of reactants" refers to a prepolymer or combination of prepolymers that are the reaction product of at least the recited reactants. The reactants can further comprise additional reactants.

Shore A hardness is measured using a Type A durometer in accordance with ASTM D2240.

Specific gravity and density of particles is determined according to ISO 787-11.

"Tack free time" refers to the duration from the time when a curing reaction of a curable composition is initiated, for example, by mixing two coreactive components to form the curable composition or by exposing a curable composition to energy such as actinic radiation or heat, until the time when the composition is tack free. The property of being tack free is determined by applying a polyethylene sheet to the surface of the composition with hand pressure and observing whether the composition adheres to the surface of the polyethylene sheet. The surface of the composition is considered to be tack free when the polyethylene sheet separates easily from the surface of the composition. For an actinic radiation-curable composition, the tack free time refers to the time from when the curable composition is exposed to actinic radiation to the time when the surface of the composition is longer tack free.

Tensile strength and elongation are measured according to AMS 3279.

"Substituted" refers to a group in which one or more hydrogen atoms are each independently replaced with the same or different substituent(s). A substituent can comprise halogen, -S(O)₂OH, - S(O)₂, -SH, -SR where R is C₁₋₆ alkyl, -COOH, -NO₂, -NR₂ where each R is independently hydrogen or C₁₋₃ alkyl, -CN, =O, C₁₋₆ alkyl, -CF₃, -OH, phenyl, C₂₋₆ heteroalkyl, C₅₋₆ heteroaryl, C₁₋₆ alkoxy, or -C(O)R where R is C₁₋₆ alkyl. A substituent can be -OH, -NH₂, or C₁₋₃ alkyl.

Specific gravity is determined according to ASTM D1475.

Shore A hardness is measured using a Type A durometer in accordance with ASTM D2240.

Tensile strength and elongation are measured according to AMS 3279.

Reference is now made to certain compounds, compositions, and methods of the present invention. The disclosed compounds, compositions, and methods are not intended to be limiting of the claims. To the contrary, the claims are intended to cover all alternatives, modifications, and equivalents.

Hybrid dual cure compositions provided by the present disclosure exhibit an acceptable working time, a short tack-free time, and a fast cure time. The thiol-ene compositions include a a polyepoxide or a combination of a polyepoxide and a polyamine, and an organic peroxide. The organic peroxide can generate free radicals under dark conditions. The compositions are curable by both free radical and reactive mechanisms. The compositions can be radiation curable and can include a radiation-initiated free radical polymerization initiator.

A hybrid dual cure composition provided by the present disclosure can comprise a thiol-functional prepolymer, a polyalkenyl, a polyepoxide or a combination of a polyepoxide and a polyamine, an organic peroxide and a radiation-activated polymerization initiator.

A hybrid dual cure composition provided by the present disclosure can comprise a polythiol or combination of polythiols. A polythiol can comprise a monomeric polythiol, a combination of monomeric polythiols, a polymeric polythiol, a combination of polymeric polythiols, or a combination thereof.

A polythiol can serve as matrix of the cured polymer, a cross-linking agent, or as a curing agent.

As a matrix material of the cured polymer, a polythiol can serve as a main reactive organic constituent of the composition such that the organic reactive constituents can comprise, for example, from 45 wt% to 85 wt% of the polythiol, where wt% is based on the total weight of the dual cure composition. As a crosslinking agent, a hybrid dual cure composition can contain, for example, from 1 wt% to 5 wt% of the polythiol, where wt% is based on the total weight of the dual cure composition. As a curing agent, a dual cure composition can comprise, for example, from 1 wt% to 5 wt% of the polythiol, where wt% is based on the total weight of the dual cure composition.

A polythiol can comprise a monomeric polythiol or a combination of monomeric polythiols.

In a combination of monomeric polythiols, the monomeric polythiols can differ, for example, with respect to molecular weight, thiol functionality, core chemistry, or a combination of any of the foregoing.

A monomeric polythiol can have a molecular weight, for example, less than 2,000 Daltons, less than 1,500 Daltons, less than 1,000 Daltons, less than 500 Daltons, or less than 250 Daltons. Suitable combinations of monomeric polythiols can be characterized, for example, by a weight average molecular weight from 200 Daltons to 2,000 Daltons, from 200 Daltons to 1,500 Daltons, from 200 Daltons to 1000, Daltons, from 500 Daltons to 2,000 Daltons, or from 500, Daltons to 1,500 Daltons.

A monomeric polythiol can comprise a polythiol having a thiol functionality greater than 2 such as a thiol functionality from 3 to 6, or a combination of any of the forgoing. A monomeric polythiol can comprise a combination of monomeric polythiols having an average thiol functionality greater than 2 such as a thiol functionality from 2.1 to 5.9, or from 2.1 to 2.9. A monomeric polythiol having a thiol-functionality greater than 3, or a combination of polythiols having a thiol-functionality greater than 2 can be used to increase the cross-lining density of a cured hybrid dual cure composition.

A monomeric polythiol can comprise a dithiol monomer or combination of dithiol monomers. A monomeric dithiol can have, for example, the structure of Formula (1):

HS-R¹-SH (1)

wherein,
R' is selected from C₂₋₆ alkanediyl, C₆₋₈ cycloalkanediyl, C₆₋₁₀ alkanecycloalkanediyl, C₅₋₈ heterocycloalkanediyl, and -[-(CHR³)ₚ-X-]_{q}-(CHR³)ᵣ-; wherein,
each R³ is independently selected from hydrogen and methyl;
each X is independently selected from -O-, -S-, -NH-, and -N(-CH₃)-;
p is an integer from 2 to 6;
q is an integer from 1 to 5; and
r is an integer from 2 to 10.

A polythiol monomer of Formula (1) can have a sulfur content, for example, greater than 5 wt%, greater than 10 wt%, greater than 15 wt%, or greater than 25 wt%, where wt% is based on the weight of the polythiol.

In a dithiol of Formula (1), R¹ can be -[-(CHR³)ₚ-X-]_{q}-(CHR³)ᵣ-.

In a dithiol of Formula (1), X can be-O- or -S-, and thus -[-(CHR³)ₚ-X-]_{q}-(CHR³)ᵣ- in Formula (1) can be -[(CHR³)ₚ-O-]_{q}-(CHR³)ᵣ-, -[(-CHR³-)ₚ-S-]_{q}-(CHR³)ᵣ-, -[(CH₂)ₚ-O-]_{q}-(CH₂)ᵣ-, or -[(CH₂)ₚ-S-]_{q}-(CH₂)ᵣ-. In a dithiol of Formula (1), p and r can be equal, such as where p and r can be both two.

In a dithiol of Formula (1), R¹ can be C₂₋₆ alkanediyl or -[-(CHR³)ₚ-X-]_{q}-(CHR³)ᵣ-.

In a dithiol of Formula (1), R¹ can be -[-(CHR³)ₚ-X-]_{q}-(CHR³)ᵣ-, where X can be -O-, or X can be -S-.

In a dithiol of Formula (1), R¹ can be -[-(CH₂)ₚ-X-]_{q}-(CH₂)ᵣ-, or X can be -O-, or X can be -S-.

In a dithiol of Formula (1) where R¹ can be -[-(CHR³)ₚ-X-]_{q}-(CHR³)ᵣ-, p can be 2, r can be 2, q is 1, and X can be -S-; p can be 2, q can be 2, r can be 2, and X is -O-; or p can be 2, r can be 2, q can be 1, and X can be -O-.

In a dithiol of Formula (1) where R¹ can be -[-(CH₂)ₚ-X-]_{q}-(CH₂)ᵣ-, p can be 2, r can be 2, q can be 1, and X can be -S-; p can be 2, q can be 2, r can be 2, and X can be -O-; or p can be 2, r can be 2, q can be 1, and X can be -O-.

In a dithiol of Formula (1) where R¹ can be -[-(CHR³)ₚ-X-]_{q}-(CHR³)ᵣ-, each R³ can be hydrogen, or at least one R³ can be methyl.

In a dithiol of Formula (1), each R¹ can be derived from dimercaptodioxaoctane (DMDO) or each R¹ is derived from dimercaptodiethylsulfide (DMDS).

In a dithiol of Formula (1), each p can be independently 2, 3, 4, 5, or 6; or each p can be the same and can be 2, 3, 4, 5, or 6.

In a dithiol of Formula (1), each r can be 2, 3, 4, 5, 6, 7, or 8.

In a dithiol of Formula (1), each q can be 1, 2, 3, 4, or 5.

Examples of suitable dithiols include 1,2-ethanedithiol, 1,2-propanedithiol, 1,3-propanedithiol, 1,3-butanedithiol, 1,4-butanedithiol, 2,3-butanedithiol, 1,3-pentanedithiol, 1,5-pentanedithiol, 1,6-hexanedithiol, 1,3-dimercapto-3-methylbutane, dipentenedimercaptan, ethylcyclohexyldithiol (ECHDT), dimercaptodiethylsulfide, methyl-substituted dimercaptodiethylsulfide, dimethyl-substituted dimercaptodiethylsulfide, dimercaptodioxaoctane, 1,5-dimercapto-3-oxapentane, and a combination of any of the foregoing.

Other examples of suitable dithiols include dimercaptodiethylsulfide (DMDS) (in Formula (1), R' is -[-(CH₂)ₚ-X-]_{q}-(CH₂)ᵣ-, wherein p is 2, r is 2, q is 1, and X is -S-); dimercaptodioxaoctane (DMDO) (in Formula (1), R¹ is -[-(CH₂)ₚ-X-]_{q}-(CH₂)ᵣ-, wherein p is 2, q is 2, r is 2, and X is -O-); and 1,5-dimercapto-3-oxapentane (in Formula (1), R¹ is -[-(CH₂)ₚ-X-]_{q}-(CH₂)ᵣ-, wherein p is 2, r is 2, q is 1, and X is -O-). It is also possible to use dithiols that include both a heteroatom in the carbon backbone and a pendent alkyl group, such as a pendent methyl group. Such compounds include, for example, methyl-substituted DMDS, such as HS-CH₂CH(CH₃)-S-CH₂CH₂-SH, HS-CH(CH₃)CH₂-S-CH₂CH₂-SH and dimethyl substituted DMDS, such as HS-CH₂CH(CH₃)-S-CHCH₃CH₂-SH and HS-CH(CH₃)CH₂-S-CH₂CH(CH₃)-SH.

A polythiol may have one or more pendent groups selected from a lower (e.g., C₁₋₆) alkyl group, a lower alkoxy group, and a hydroxyl group. Suitable alkyl pendent groups include, for example, C₁₋₆ linear alkyl, C₃₋₆ branched alkyl, cyclopentyl, and cyclohexyl.

A polythiol can comprise a polythiol of Formula (2):

B(-V)_{z} (2)

wherein,
B comprises a core of a z-valent polyfunctionalizing agent B(-V)_{z};
z is an integer from 3 to 6; and
each -V is independently a moiety comprising a terminal thiol group.

In polythiols of Formula (2), V can be, for example, thiol-terminated C₁₋₁₀ alkanediyl, thiol-terminated C₁₋₁₀ heteroalkanediyl, thiol-terminated substituted C₁₋₁₀ alkanediyl, or thiol-terminated substituted C₁₋₁₀ heteroalkanediyl.

In polythiols of Formula (2), z can be, for example, 3, 4, 5, or 6.

In polythiols of Formula (2), z can be 3. Suitable trifunctional polythiols include, for example, 1,2,3-propanetrithiol, isocyanurate-containing trithiols, and combinations thereof, as disclosed in U.S. Application Publication No. 2010/0010133, and the polythiols described in U.S. Patent Nos. 4,366,307; 4,609,762; and 5,225,472. Mixtures polythiols of Formula (2) may also be used.

Examples of suitable trifunctional thiol-functional polyfunctionalizing agents include, for example, 1,2,3-propanetrithiol, 1,2,3-benzenetrithiol, heptane-1,3-7-trithiol, 1,3,5-triazine-2,4-6-trithiol, isocyanurate-containing trithiols, and combinations thereof, as disclosed in U.S. Application Publication No. 2010/0010133, and the polythiols described in U.S. Patent Nos. 4,366,307; 4,609,762; and 5,225,472. Combinations of polyfunctionalizing agents may also be used.

For example, a monomeric polythiol can be trifunctional, tetrafunctional, pentafunctional, hexafunctional, or a combination of any of the foregoing. A monomeric polythiol can comprise a trithiol.

Suitable a monomeric polythiol can include, for example, mercapto-propionates, mercapto-acetates, mercapto-acrylates, and other polythiols.

Examples of suitable mercapto-propionates include pentaerythritol tetrakis(3-mercaptopropionate) (PETMP), trimethylol-propane tri(3-mercaptopropionate) (TMPMP), glycol di(3-mercaptopropionate) (GDMP), tris[2-(3-mercapto-propionyloxy)ethyl]isocyanurate (TEMPIC), di-pentaerythritol hexa(3-mercaptopropionate) (di-PETMP), tri(3-mercaptopropionate) pentaerythritol, and triethylolethane tri-(3-mercaptopropionate).

Examples of suitable mercapto-acetates include pentaerythritol tetramercaptoacetate (PRTMA), trimethylolpropane trimercaptoacetate (TMPMA), glycol dimercaptoacetate (GDMA), ethyleneglycol dimercaptoacetate, and di-trimethylolpropane tetramercaptoacetate.

Examples of suitable mercapto-acrylates include pentaerythritol tetra-acrylate, tris[2-(3-mercaptopropionyloxy)ethyl]isocyanurate, 2,3-di(2-mercaptoethylthio)-1-propane-thiol, dimercaptodiethylsulfide (2,2'-thiodiethanethiol), dimercaptodioxaoctane (2,2'-(ethylenedioxy)diethanethiol, and 1,8-dimercapto-3,6-dioxaoctane.

Other examples of polythiol polyfunctionalizing agents and polythiol monomers include pentaerythritol tetra(3-mercaptopropionate) (PETMP), pentaerythritol tetramercaptoacetate (PETMA), dipentaerythritol tetra(3-mercaptopropionate), dipentaerythritol tetramercaptoacetate, dipentaerythritol penta(3-mercaptopropionate), dipentaerythritol pentamercaptoacetate, dipentaerythritol hexa(3-mercaptopropionate), dipentaerythritol hexamercaptoacetate, ditrimethylolpropane tetra(3-mercaptopropionate), ditrimethylolpropane tetramercaptoacetate, and also alkoxylated, for example, ethoxylated and/or propoxylated, such as ethoxylated, products of these compounds. Examples include, pentaerythritol tetra(3-mercaptopropionate) (PETMP), pentaerythritol tetramercaptoacetate (PETMA), dipentaerythritol tetra(3-mercaptopropionate), dipentaerythritol tetramercaptoacetate, dipentaerythritol penta(3-mercaptopropionate), dipentaerythritol pentamercaptoacetate, dipentaerythritol hexa(3-mercaptopropionate), dipentaerythritol hexamercaptoacetate, ditrimethylolpropane tetra(3-mercaptopropionate), ditrimethylolpropane tetramercaptoacetate, particularly pentaerythritol tetra(3-mercaptopropionate) (PETMP), pentaerythritol tetramercaptoacetate (PETMA), dipentaerythritol hexa(3-mercaptopropionate), dipentaerythritol hexamercaptoacetate, ditrimethylolpropane tetra(3-mercaptopropionate), and ditrimethylolpropane tetramercaptoacetate.

A monomeric polythiol can comprise pentaerythritol tetrakis(3-mercaptopropionte) (PETMP).

Suitable monomeric polythiols such as Thiocure^{®} 331 (pentaerythritol tetrakis(3-mercaptopropionate) are commercially available from Bruno Bock Thiochemicals under the Thiocure^{®} tradename.

A hybrid dual cure composition provided by the present disclosure can comprise, for example, from 0.1 wt% to 10 wt% of a monomeric polythiol, from 0.5 wt% to 8 wt%, from 1 wt% to 6 wt%, or from 2 wt% to 4 wt% of a monomeric polythiol, where wt% is based on the total weight of the hybrid dual cure composition.

A hybrid dual cure composition provided by the present disclosure can comprise, for example, greater than 0.1 wt% of a monomeric polythiol, greater than 0.5 wt%, greater than 1 wt%, greater than 2 wt%, greater than 4 wt%, greater than 6 wt%, or greater than 8 wt% of a monomeric polythiol, where wt% is based on the total weight of the hybrid dual cure composition.

A hybrid dual cure composition provided by the present disclosure can comprise, for example, less than 10 wt% of a monomeric polythiol, less than 8 wt%, less than 6 wt%, less than 4 wt%, less than 2 wt% less than 1 wt%, or less than 0.5 wt% of a monomeric polythiol, where wt% is based on the total weight of the hybrid dual cure composition.

A hybrid dual cure composition provided by the present disclosure may not contain a monomeric polythiol.

A polythiol can comprise a thiol-functional prepolymer or a combination of thiol-functional prepolymers.

In a combination of thiol-functional prepolymers, the thiol-functional prepolymers can differ, for example, with respect to molecular weight, thiol functionality, backbone chemistry, and/or a combination of any of the foregoing.

A thiol-functional prepolymer or combination of thiol-functional prepolymers can have a number average molecular weight, for example, less than 20,000 Da, less than 15,000 Da, less than 10,000 Da, less than 8,000 Da, less than 6,000 Da, less than 4,000 Da, or less than 2,000 Da. A thiol-functional prepolymer or combination of thiol-functional prepolymers can have a number average molecular weight, for example, greater than 2,000 Da, greater than 4,000 Da, greater than 6,000 Da, greater than 8,000 Da, greater than 10,000 Da, or greater than 15,000 Da. A thiol-functional prepolymer or combination of thiol-functional prepolymers can have a number average molecular weight, for example, from 1,000 Da to 20,000 Da, from 2,000 Da to 10,000 Da, from 3,000 Da to 9,000 Da, from 4,000 Da to 8,000 Da, or from 5,000 Da to 7,000 Da.

A thiol-functional prepolymer can have an average thiol functionality, for example, from 2 to 6, from 2 to 5, from 2 to 4, or from 2 to 3. A thiol-functional prepolymer can have a thiol functionality, for example, of 2, 3, 4, 5, or 6.

A thiol-functional prepolymer can be liquid at 25 °C and can have a glass transition temperature Tg, for example, less than -20 °C, less than -30 °C, or less than -40 °C.

A thiol-functional prepolymer can exhibit a viscosity, for example, within a range from 20 poise to 500 poise (2 Pa-sec to 50 Pa-sec), from 20 poise to 200 poise (2 Pa-sec to 20 Pa-sec) or from 40 poise to 120 poise (4 Pa-sec to 12 Pa-sec), measured using a Brookfield CAP 2000 viscometer, with a No. 6 spindle, at speed of 300 rpm, and a temperature of 25 °C.

A thiol-functional prepolymer can have any suitable polymeric backbone. A polymeric backbone can be selected, for example, to impart a desired property to a cured composition prepared using a composition provided by the present disclosure such as to impart a desired solvent resistance, to impart desired physical properties such as tensile strength, %elongation, Young's modulus, impact resistance, or to impart other property or combination of properties useful for a particular application.

A thiol-functional prepolymer can comprise segments having different chemical structures and properties within the prepolymer backbone. The segments can be distributed randomly, in a regular distribution, or in blocks. The segments can be used to impart certain properties to the thiol-functional prepolymer backbone. For example, the segments can comprise flexible linkages such as thioether linkages. Segments having pendent groups can be incorporated into the thiol-functional prepolymer backbone.

For example, a thiol-functional prepolymer backbone can comprise a polythioether, a polysulfide, a polyformal, a polyisocyanate, a polyurea, polycarbonate, polyphenylene sulfide, polyethylene oxide, polystyrene, acrylonitrile-butadiene-styrene, polycarbonate, styrene acrylonitrile, poly(methylmethacrylate), polyvinylchloride, polybutadiene, polybutylene terephthalate, poly(p-phenyleneoxide), polysulfone, polyethersulfone, polyethylenimine, polyphenylsulfone, acrylonitrile styrene acrylate, polyethylene, syndiotactic or isotactic polypropylene, polylactic acid, polyamide, ethyl-vinyl acetate homopolymer or copolymer, polyurethane, copolymers of ethylene, copolymers of propylene, impact copolymers of propylene, polyetheretherketone, polyoxymethylene, syndiotactic polystyrene (SPS), polyphenylene sulfide (PPS), liquid crystalline polymer (LCP), homo- and copolymer of butene, homo- and copolymers of hexene; and combinations of any of the foregoing.

Examples of other suitable prepolymer backbones include polyolefins (such as polyethylene, linear low density polyethylene (LLDPE), low density polyethylene (LDPE), high density polyethylene, polypropylene, and olefin copolymers), styrene/butadiene rubbers (SBR), styrene/ethylene/butadiene/styrene copolymers (SEBS), butyl rubbers, ethylene/propylene copolymers (EPR), ethylene/propylene/diene monomer copolymers (EPDM), polystyrene (including high impact polystyrene), poly(vinyl acetates), ethylene/vinyl acetate copolymers (EVA), poly(vinyl alcohols), ethylene/vinyl alcohol copolymers (EVOH), poly(vinyl butyral), poly(methyl methacrylate) and other acrylate polymers and copolymers (including such as methyl methacrylate polymers, methacrylate copolymers, polymers derived from one or more acrylates, methacrylates, ethyl acrylates, ethyl methacrylates, butyl acrylates, butyl methacrylates and the like), olefin and styrene copolymers, acrylonitrile/butadiene/styrene (ABS), styrene/acrylonitrile polymers (SAN), styrene/maleic anhydride copolymers, isobutylene/maleic anhydride copolymers, ethylene/acrylic acid copolymers, poly(acrylonitrile), polycarbonates (PC), polyamides, polyesters, liquid crystalline polymers (LCPs), poly(lactic acid), poly(phenylene oxide) (PPO), PPO-polyamide alloys, polysulfone (PSU), polyetherketone (PEK), polyetheretherketone (PEEK), polyimides, polyoxymethylene (POM) homo- and copolymers, polyetherimides, fluorinated ethylene propylene polymers (FEP), poly(vinyl fluoride), poly(vinylidene fluoride), poly(vinylidene chloride), and poly(vinyl chloride), polyurethanes (thermoplastic and thermosetting), aramides (such as Kevlar^{®} and Nomex^{®}), polytetrafluoroethylene (PTFE), polysiloxanes (including polydimethylenesiloxane, dimethylsiloxane/vinylmethylsiloxane copolymers, vinyldimethylsiloxane functional poly(dimethylsiloxane)), elastomers, epoxy polymers, polyureas, alkyds, cellulosic polymers (such as ethyl cellulose, ethyl hydroxyethyl cellulose, carboxymethyl cellulose, cellulose acetate, cellulose acetate propionates, and cellulose acetate butyrates), polyethers and glycols such as poly(ethylene oxide)s (also known as poly(ethylene glycol)s, poly(propylene oxide)s (also known as poly(propylene glycol)s, and ethylene oxide/propylene oxide copolymers, acrylic latex polymers, polyester acrylate oligomers and polymers, polyester diol diacrylate polymers, and UV-curable resins.

A thiol-functional prepolymer can comprise an elastomeric polymer backbone. "Elastomer," "elastomeric" and similar terms refer to materials with "rubber-like" properties and generally have a low Young's modulus and a high tensile strain. For example, elastomers can have a Young's modulus/tensile strength from about 4 MPa to about 30 MPa. Elastomers can have a tensile strain (elongation at break), for example, from about 100% to about 2,000%. The Young's modulus/tensile strength and tensile strain can be determined according to ASTM D412.4893. Elastomers can exhibit a tear strength, for example, from 50 kN/m to 200 kN/m. Tear strength of an elastomer can be determined according to ASTM D624. The Young's modulus of an elastomer can range from 0.5 MPa to 6 MPa as determined according to ASTM D412.4893.

Examples of suitable prepolymers having an elastomeric backbone include polyethers, polybutadienes, fluoroelastomers, perfluoroelastomers, ethylene/acrylic copolymers, ethylene propylene diene terpolymers, nitriles, polythiolamines, polysiloxanes, chlorosulfonated polyethylene rubbers, isoprenes, neoprenes, polysulfides, polythioethers, silicones, styrene butadienes, and combinations of any of the foregoing. An elastomeric prepolymer can comprise a polysiloxane, such as, for example, a polymethylhydrosiloxane, polydimethylsiloxane, polyhydrodiethylsiloxane, polydiethylsiloxane, or a combination of any of the foregoing. The elastomeric prepolymer can comprise terminal functional groups that have a low reactivity with amine and isocyanate groups such as silanol groups.

Examples of prepolymers that exhibit high solvent resistance include fluoropolymers, ethylene propylene diene terpolymer (EPDM), and other chemically resistant prepolymers disclosed herein, cured polymeric matrices having a high crosslinking density, chemically resistant organic filler such as polyamides, polyphenylene sulfides, and polyethylenes, or a combination of any of the foregoing.

Examples of prepolymers having a chemically resistant backbone include polytetrafluorethylene, polyvinylidene difluoride, polyethylenetetrafluoroethylene, fluorinated ethylene propylene, perfluoroalkoxy, ethylene chlorotrifluorethylene, polychlorotrifluoroethylene, fluorinated ethylene propylene polymers polyamide, polyethylene, polypropylene, ethylene-propylene, fluorinated ethylene-propylene, polysulfone, polyarylether sulfone, polyether sulfone, polyimide, polyethylene terephthalate, polyetherketone, polyetherether ketone, polyetherimide, polyphenylene sulfide, polyarylsulfone, polybenzimidazole, polyamideimide, liquid crystal polymers, and combinations of any of the foregoing.

Examples of prepolymers that exhibit low temperature flexibility include silicones, polytetrafluoroethylenes, polythioethers, polysulfides, polyformals, polybutadienes, certain elastomers, and combinations of any of the foregoing.

Examples of prepolymers that exhibit hydrolytic stability include silicones, polytetrafluoroethylenes, polythioethers, polysulfides, polyformals, polybutadienes, certain elastomers, and combinations of any of the foregoing, and compositions having a high crosslinking density.

Examples of prepolymers that exhibit high temperature resistance include silicones, polytetrafluoroethylenes, polythioethers, polysulfides, polyformals, polybutadienes, certain elastomers, combinations of any of the foregoing; and prepolymers having a higher reactive functionality to increase the crosslinking density.

Examples of prepolymers that exhibit high tensile include silicones and polybutadiene, compositions having high crosslinking density, a high inorganic filler content, and combinations of any of the foregoing.

A thiol-functional prepolymer can comprise a thiol-functional sulfur-containing prepolymer or a combination of thiol-functional sulfur-containing prepolymers. Thiol-functional sulfur-containing prepolymers can impart solvent resistance to a cured composition and therefore can be used as sealants.

For applications where chemical resistance is required, prepolymers having a sulfur-containing backbone can be used. The chemical resistance can be with respect to, for example, cleaning solvents, fuels, hydraulic fluids, lubricants, oils, and/or salt spray. Chemical resistance refers to the ability of a part to maintain acceptable physical and mechanical properties following exposure to atmospheric conditions such as moisture and temperature and following exposure to chemicals such as cleaning solvents, fuels, hydraulic fluid, lubricants, and/or oils. In general, a chemically resistant cured composition such as a sealant can exhibit a % swell less than 25%, less than 20%, less than 15%, or less than 10%, following immersion in a relevant chemical for 7 days at 70 °C, where % swell is determined according to EN ISO 10563. Examples of relevant chemicals include 3% NaCl, Jet Reference Fluid Type 1, and phosphate ester hydraulic fluid such as Skydrol^{®} LD-4. A sulfur-containing prepolymer refers to a prepolymer that has one or more thioether -Sₙ- groups, where n can be, for example, 1 to 6, in the backbone of the prepolymer. Prepolymers that contain only thiol or other sulfur-containing groups either as terminal groups or as pendent groups of the prepolymer are not encompassed by sulfur-containing prepolymers as used herein. The prepolymer backbone refers to the portion of the prepolymer having repeating segments. Thus, a prepolymer having the structure of HS-R-R(-CH₂-SH)-[-R-(CH₂)₂-S(O)₂-(CH₂)-S(O)₂]ₙ-CH=CH₂ where each R is a moiety that does not contain a sulfur atom in the prepolymer backbone, is not encompassed by a sulfur-containing prepolymer. A prepolymer having the structure HS-R-R(-CH₂-SH)-[-R-(CH₂)₂-S(O)₂-(CH₂)-S(O)₂]-CH=CH₂ where at least one R is a moiety that contains a sulfur atom, such as a thioether group, is encompassed by a sulfur-containing prepolymer.

Sulfur-containing prepolymers having a high sulfur content can impart chemical resistance to a cured composition. For example, a sulfur-containing prepolymer backbone can have a sulfur content greater than 10 wt%, greater than 12 wt%, greater than 15 wt%, greater than 18 wt%, greater than 20 wt%, or greater than 25 wt%, where wt% is based on the total weight of the prepolymer backbone. A chemically resistant sulfur-containing prepolymer backbone can have a sulfur content, for example, from 10 wt% to 25 wt%, from 12 wt% to 23 wt%, from 13 wt% to 20 wt%, or from 14 wt% to 18 wt%, where wt% is based on the total weight of the prepolymer backbone. Sulfur content can be determined according to ASTM D297.

Examples of prepolymers having a sulfur-containing backbone include polythioether prepolymers, polysulfide prepolymers, sulfur-containing polyformal prepolymers, monosulfide prepolymers, and combinations of any of the foregoing.

A sulfur-containing prepolymer can comprise a polythioether prepolymer or a combination of polythioether prepolymers.

A sulfur-containing prepolymer can comprise a thiol-functional polythioether prepolymer. Examples of suitable thiol-functional polythioether prepolymers are disclosed, for example, in U.S. Patent No. 6,172,179, which is incorporated by reference in its entirety. A thiol-functional polythioether prepolymer can comprise Permapol^{®} P3.1E, Permapol^{®} P3.1E-2.8, Permapol^{®} L56086, or a combination of any of the foregoing, each of which is available from PPG Industries Inc. Permapol^{®} P3.1E, Permapol^{®} P3.1E-2.8, Permapol^{®} L56086 are encompassed by the disclosure of U.S. Patent No. 6,172,179.

A polythioether prepolymer can comprise a polythioether prepolymer comprising at least one moiety having the structure of Formula (3) or a thiol-functional polythioether prepolymer of Formula (3a):

-S-R¹-[S-A-S-R¹-]ₙ-S- (3)

HS-R¹-[S-A-S-R¹-]ₙ-SH (3a)

wherein,
n can be an integer from 1 to 60;
each R¹ can independently be selected from C₂₋₁₀ alkanediyl, C₆₋₈ cycloalkanediyl, C₆₋₁₄ alkanecycloalkanediyl, C₅₋₈ heterocycloalkanediyl, and -[(CHR)ₚ-X-]_{q}(CHR)ᵣ-, where,
   p can be an integer from 2 to 6;
   q can be an integer from 1 to 5;
   r can be an integer from 2 to 10;
   each R can independently be selected from hydrogen and methyl; and
   each X can independently be selected from O, S, and S-S; and
each A can independently be a moiety derived from a polyvinyl ether of Formula (4) or a polyalkenyl polyfunctionalizing agent of Formula (5):

   CH₂=CH-O-(R²-O)ₘ-CH=CH₂ (4)

   B(-R⁴-CH=CH₂)_{z} (5)

   wherein,
   m can be an integer from 0 to 50;
   each R² can independently be selected from C₁₋₁₀ alkanediyl, C₆₋₈ cycloalkanediyl, C₆₋₁₄ alkanecycloalkanediyl, and -[(CHR)ₚ-X-]_{q}(CHR)ᵣ-, wherein p, q, r, R, and X are as defined as for R¹;
   B represents a core of a z-valent, polyalkenyl polyfunctionalizing agent B(-R⁴-CH=CH₂)_{z} wherein,
   z can be an integer from 3 to 6;
   each R⁴ can independently be selected from C₁₋₁₀ alkanediyl, C₁₋₁₀ heteroalkanediyl, substituted C₁₋₁₀ alkanediyl, and substituted C₁₋₁₀ heteroalkanediyl.

A moiety derived from a polyvinyl ether of Formula (4) can have the structure of Formula (4a) and a moiety derived from a polyalkenyl polyfunctionalizing agent of Formula (5) can have the structure of Formula (5a):

-CH₂-CH₂-O-(R²-O)ₘ-CH₂-CH₂- (4a)

B(-R⁴-CH₂-CH₂-)_{z} (5a)

wherein m, R², z, B, and R⁴ are defined as for compounds of Formula (4) and Formula (5).

In moieties of Formula (3) and prepolymers of Formula (3a), R¹ can be C₂₋₁₀ alkanediyl.

In moieties of Formula (3) and prepolymers of Formula (3a), R¹ can be -[(CHR)ₚ-X-]_{q}(CHR)ᵣ-.

In moieties of Formula (3) and prepolymers of Formula (3a), X can be selected from O and S, and thus -[(CHR)ₚ-X-]_{q}(CHR)ᵣ- can be -[(CHR)ₚ-O-]_{q}(CHR)ᵣ- or -[(CHR)ₚ-S-]_{q}(CHR)ᵣ-. P and r can be equal, such as where p and r can both be two.

In moieties of Formula (3) and prepolymers of Formula (3a), R¹ can be selected from C₂₋₆ alkanediyl and -[(CHR)ₚ-X-]_{q}(CHR)ᵣ-.

In moieties of Formula (3) and prepolymers of Formula (3a), R¹ can be -[(CHR)ₚ-X-]_{q}(CHR)ᵣ-, and X can be O, or X can be S.

In moieties of Formula (3) and prepolymers of Formula (3a), R¹ can be -[(CHR)ₚ-X-]_{q}(CHR)ᵣ-, p can be 2, r can be 2, q can be 1, and X can be S; or p can be 2, q can be 2, r can be 2, and X can be O; or p can be 2, r can be 2, q can be 1, and X can be O.

In moieties of Formula (3) and prepolymers of Formula (3a), R¹ can be -[(CHR)ₚ-X-]_{q}(CHR)ᵣ-, each R can be hydrogen, or at least one R can be methyl.

In moieties of Formula (3) and prepolymers of Formula (3a), R¹ can be -[(CH₂)ₚ-X-]_{q}(CH₂)ᵣ-wherein each X can independently be selected from O and S.

In moieties of Formula (3) and prepolymers of Formula (3a), R¹ can be -[(CH₂)ₚ-X-]_{q}(CH₂)ᵣ-wherein each X can be O or each X can be S.

In moieties of Formula (3) and prepolymers of Formula (3a), R¹ can be -[(CH₂)ₚ-X-]_{q}(CH₂)ᵣ-, where p can be 2, X can be O, q can be 2, r can be 2, R² can be ethanediyl, m can be 2, and n can be 9.

In moieties of Formula (3) and prepolymers of Formula (3a), each R¹ can be derived from 1,8-dimercapto-3,6-dioxaoctane (DMDO; 2,2-(ethane-1,2-diylbis(sulfanyl))bis(ethan-1-thiol)), or each R¹ can be derived from dimercaptodiethylsulfide (DMDS; 2,2'-thiobis(ethan-1-thiol)), and combinations thereof.

In moieties of Formula (3) and prepolymers of Formula (3a), each p can independently be selected from 2, 3, 4, 5, and 6. Each p can be the same and can be 2, 3, 4, 5, or 6.

In moieties of Formula (3) and prepolymers of Formula (3a), each q can independently be 1, 2, 3, 4, or 5. Each q can be the same and can be 1, 2, 3, 4, or 5.

In moieties of Formula (3) and prepolymers of Formula (3a), each r can independently be 2, 3, 4, 5, 6, 7, 8, 9, or 10. Each r can be the same and can be 2, 3, 4, 5, 6, 7, 8, 9, or 10.

In moieties of Formula (3) and prepolymers of Formula (3a), each r can independently be an integer from 2 to 4, from 2 to 6, or from 2 to 8.

In divinyl ethers of Formula (4), m can be an integer from 0 to 50, such as from 0 to 40, from 0 to 20, from 0 to 10, from 1 to 50, from 1 to 40, from 1 to 20, from 1 to 10, from 2 to 50, from 2 to 40, from 2 to 20, or from 2 to 10.

In divinyl ethers of Formula (4), each R² can independently be selected from C₂₋₁₀ n-alkanediyl, C₃₋₆ branched alkanediyl, and -[(CH₂)ₚ-X-]_{q}(CH₂)ᵣ-.

In divinyl ethers of Formula (4), each R² can independently be C₂₋₁₀ n-alkanediyl, such as methanediyl, ethanediyl, n-propanediyl, or n-butanediyl.

In divinyl ethers of Formula (4), each R² can independently be -[(CH₂)ₚ-X-]_{q}(CH₂)ᵣ-, where each X can be O or S.

In divinyl ethers of Formula (4), each R² can independently be -[(CH₂)ₚ-X-]_{q}(CH₂)ᵣ-.

In divinyl ethers of Formula (4), each m can independently be an integer from 1 to 3. Each m can be the same and can be 1, 2, or 3.

In divinyl ethers of Formula (4), each R² can independently be selected from C₂₋₁₀ n-alkanediyl, C₃₋₆ branched alkanediyl, and -[(CH₂)ₚ-X-]_{q}(CH₂)ᵣ-.

In divinyl ethers of Formula (4), each R² can independently be C₂₋₁₀ n-alkanediyl.

In divinyl ethers of Formula (4), each R² can independently be -[(CH₂)ₚ-X-]_{q}(CH₂)ᵣ-, where each X can be O or S.

In divinyl ethers of Formula (4), each R² can independently be -[(CH₂)ₚ-X-]_{q}(CH₂)ᵣ-, where each X can be O or S, and each p can independently be 2, 3, 4, 5, and 6.

In divinyl ethers of Formula (4), each p can be the same and can be 2, 3, 4, 5, or 6.

In divinyl ethers of Formula (4), each R² can independently be -[(CH₂)ₚ-X-]_{q}(CH₂)ᵣ-, where each X can be O or S, and each q can independently be 1, 2, 3, 4, or 5.

In divinyl ethers of Formula (4), each q can be the same and can be 1, 2, 3, 4, or 5.

In divinyl ethers of Formula (4), each R² can independently be -[(CH₂)ₚ-X-]_{q}(CH₂)ᵣ-, where each X can be O or S, and each r can independently be 2, 3, 4, 5, 6, 7, 8, 9, or 10.

In divinyl ethers of Formula (4), each r can be the same and can be 2, 3, 4, 5, 6, 7, 8, 9, or 10. In divinyl ethers of Formula (4), each r can independently be an integer from 2 to 4, from 2 to 6, or from 2 to 8.

Examples of suitable divinyl ethers include ethylene glycol divinyl ether (EG-DVE), butanediol divinyl ether (BD-DVE), hexanediol divinyl ether (HD-DVE), diethylene glycol divinyl ether (DEG-DVE), triethylene glycol divinyl ether (TEG-DVE), tetraethylene glycol divinyl ether, polytetrahydrofuryl divinyl ether, cyclohexane dimethanol divinyl ether, and combinations of any of the foregoing.

A divinyl ether can comprise a sulfur-containing divinyl ether. Examples of suitable sulfur-containing divinyl ethers are disclosed, for example, in PCT International Publication No. WO 2018/085650.

In moieties of Formula (3) each A can independently be derived from a polyalkenyl polyfunctionalizing agent. A polyalkenyl polyfunctionalizing agent can have the structure of Formula (5), where z can be 3, 4, 5, or 6.

In polyalkenyl polyfunctionalizing agents of Formula (5), each R⁴ can independently be selected from C₁₋₁₀ alkanediyl, C₁₋₁₀ heteroalkanediyl, substituted C₁₋₁₀ alkanediyl, or substituted C₁₋₁₀ heteroalkanediyl. The one or more substituent groups can be selected from, for example, -OH, =O, C₁₋₄ alkyl, and C₁₋₄ alkoxy. The one or more heteroatoms can be selected from, for example, O, S, and a combination thereof.

Examples of suitable polyalkenyl polyfunctionalizing agents include triallyl cyanurate (TAC), triallylisocyanurate (TAIC), 1,3,5-triallyl-1,3,5-triazinane-2,4,6-trione), 1,3,5-triallyl-1,3,5-triazinane-2,4,6-trione), 1,3-bis(2-methylallyl)-6-methylene-5-(2-oxopropyl)-1,3,5-triazinone-2,4-dione, tris(allyloxy)methane, pentaerythritol triallyl ether, 1-(allyloxy)-2,2-bis((allyloxy)methyl)butane, 2-prop-2-ethoxy-1,3,5-tris(prop-2-enyl)benzene, 1,3,5-tris(prop-2-enyl)-1,3,5-triazinane-2,4-dione, and 1,3,5-tris(2-methylallyl)-1,3,5-triazinane-2,4,6-trione, 1,2,4 -trivinylcyclohexane, trimethylolpropane trivinyl ether, and combinations of any of the foregoing.

In moieties of Formula (3) and prepolymers of Formula (3a), the molar ratio of moieties derived from a divinyl ether to moieties derived from a polyalkenyl polyfunctionalizing agent can be, for example, from 0.9 to 0.999, from 0.95 to 0.99, or from 0.96 to 0.99. For example, in moieties of Formula (3) and prepolymers of Formula (3a), from 0.1% to 10% of the A moieties can be derived from a polyalkenyl polyfunctionalizing agent, from 1% to 8%, from 1% to 6% or from 1% tyo 4% of the A moieties can be derived from a polyalkenyl polyfunctionalizing agent, based on the total number of A moieties in the prepolymer. In moieties of Formula (3) and prepolymers of Formula (3a), for example, less than 10% of the A moieties can be derived from a polyalkenyl polyfunctionalizing agent, less than 8%, less than 6% less than 4% or less than 2% of the A moieties can be derived from a polyalkenyl polyfunctionalizing agent, based on the total number of A moieties in the prepolymer.

In moieties of Formula (3) and prepolymers of Formula (3a), each R¹ can be -(CH₂)₂-O-(CH₂)₂-O-(CH₂)₂-; each R² can be -(CH₂)₂-; and m can be an integer from 1 to 4.

In moieties of Formula (3) and prepolymers of Formula (3a), each R² can be derived from a divinyl ether such a diethylene glycol divinyl ether, a polyalkenyl polyfunctionalizing agent such as triallyl cyanurate, or a combination thereof.

In moieties of Formula (3) and prepolymers of Formula (3a), each A can independently be selected from a moiety of Formula (4a) and a moiety of Formula (5a):

-(CH₂)₂-O-(R²-O)ₘ-(CH₂)₂- (4a)

B{-R⁴-(CH₂)₂-}₂{-R⁴-(CH₂)₂-S-[-R¹-S-A-S-R¹-]ₙ-SH}_{z-2} (5a)

where m, R¹, R⁴, A, B, m, n, and z are defined as in Formula (3), Formula (4), and Formula (5).

In moieties of Formula (3) and prepolymers of Formula (3a), each R¹ can be -(CH₂)₂-O-(CH₂)₂-O-(CH₂)₂-; each R² can be -(CH₂)₂-; m can be an integer from 1 to 4; and the polyfunctionalizing agent B(-R⁴-CH=CH₂)_{z} comprises triallyl cyanurate where z is 3 and each R⁴ can be -O-CH₂-CH=CH₂.

The backbone of a thiol-functional polythioether prepolymer can be modified to increase one or more properties such as adhesion, tensile strength, elongation, UV resistance, hardness, and/or flexibility of sealants prepared using polythioether prepolymers. For example, adhesion promoting groups, antioxidants, metal ligands, and/or urethane linkages can be incorporated into the backbone of a polythioether prepolymer to improve one or more performance attributes. Examples of backbone-modified polythioether prepolymers are disclosed, for example, in U.S. Patent No. 8,138,273 (urethane containing), U.S. Patent No. 9,540,540 (sulfone-containing), U.S. Patent No. 8,952,124 (bis(sulfonyl)alkanol-containing), U.S. Patent No. 9,382,642 (metal-ligand containing), U.S. Application Publication No. 2017/0114208 (antioxidant-containing), PCT International Application Publication No. WO 2018/085650 (sulfur-containing divinyl ether), and PCT International Application Publication No. WO 2018/031532 (urethane-containing). Examples of polythioether prepolymers include prepolymers described in U.S. Application Publication Nos. 2017/0369737 and 2016/0090507.

Examples of suitable thiol-functional polythioether prepolymers are disclosed, for example, in U.S. Patent No. 6,172,179. A thiol-functional polythioether prepolymer can comprise Permapol^{®} P3.1E, Permapol^{®} P3.1E-2.8, Permapol^{®} L56086, or a combination of any of the foregoing, each of which is available from PPG Aerospace. These Permapol^{®} products are encompassed by the thiol-functional polythioether prepolymers of Formula (3) and Formula (3a). Thiol-functional polythioether prepolymers include prepolymers described in U.S. Patent No. 7,390,859 and urethane-containing polythiols described in U.S. Application Publication Nos. 2017/0369757 and 2016/0090507.

Methods of synthesizing thiol-functional polythioether prepolymers are disclosed, for example, in U.S. Patent No. 6,172,179.

A sulfur-containing prepolymer can comprise a polysulfide prepolymer or a combination of polysulfide prepolymers.

A polysulfide prepolymer refers to a prepolymer that contains one or more polysulfide linkages, i.e., -Sₓ- linkages, where x is from 2 to 4, in the prepolymer backbone. A polysulfide prepolymer can have two or more sulfur-sulfur linkages. Suitable thiol-functional polysulfide prepolymers are commercially available, for example, from AkzoNobel and Toray Industries, Inc. under the tradenames Thioplast^{®} and from Thiokol-LP^{®}, respectively.

Examples of suitable polysulfide prepolymers are disclosed, for example, in U.S. Patent Nos. 4,623,711; 6,172,179; 6,509,418; 7,009,032; and 7,879,955.

Examples of suitable thiol-functional polysulfide prepolymers include Thioplast^{®} G polysulfides such as Thioplast^{®} G1, Thioplast^{®} G4, Thioplast^{®} G10, Thioplast^{®} G12, Thioplast^{®} G21, Thioplast^{®} G22, Thioplast^{®} G44, Thioplast^{®} G122, and Thioplast^{®} G131, which are commercially available from AkzoNobel. Suitable thiol-functional polysulfide prepolymers such as Thioplast^{®} G resins are blends of di- and tri-functional molecules where the difunctional thiol-functional polysulfide prepolymers have the structure of Formula (6) and the trifunctional thiol-functional polysulfide polymers can have the structure of Formula (7):

HS-(-R⁵-S-S-)ₙ-R⁵-SH (6)

HS-(-R⁵-S-S-)ₐ-CH₂-CH{-CH₂-(-S-S-R⁵-)_{b}-SH}{-(-S-S-R⁵-)_{c}-SH} (7)

where each R⁵ is -(CH₂)₂-O-CH₂-O-(CH₂)₂-, and n = a + b + c, where the value for n can be from 7 to 38 depending on the amount of the trifunctional cross-linking agent (1,2,3-trichloropropane; TCP) used during synthesis of the polysulfide prepolymer. Thioplast^{®} G polysulfides can have a number average molecular weight from less than 1,000 Da to 6,500 Da, a -SH content from 1 wt% to greater than 5.5 wt%, and a cross-linking density from 0 wt% to 2.0 wt%.

Examples of suitable thiol-functional polysulfide prepolymers also include Thiokol^{®} LP polysulfides available from Toray Industries, Inc. such as Thiokol^{®} LP2, Thiokol^{®} LP3, Thiokol^{®} LP12, Thiokol^{®} LP23, Thiokol^{®} LP33, and Thiokol^{®} LP55. Thiokol^{®} LP polysulfides have a number average molecular weight from 1,000 Da to 7,500 Da, a -SH content from 0.8% to 7.7%, and a cross-linking density from 0% to 2%. Thiokol^{®} LP polysulfide prepolymers have the structure of Formula (8):

HS-[(CH₂)₂-O-CH₂-O-(CH₂)₂-S-S-]ₙ-(CH₂)₂-O-CH₂-O-(CH₂)₂-SH (8)

where n can be such that the number average molecular weight from 1,000 Da to 7,500 Da, such as, for example an integer from 8 to 80. A thiol-functional sulfur-containing prepolymer can comprise a Thiokol-LP^{®} polysulfide, a Thioplast^{®} G polysulfide, or a combination thereof.

A polysulfide prepolymer can comprise a polysulfide prepolymer comprising a moiety of Formula (9), a thiol-functional polysulfide prepolymer of Formula (9a), or a combination of any of the foregoing:

-R⁶-(S_{y}-R⁶)ₜ- (9)

HS-R⁶-(S_{y}-R⁶)ₜ-SH (9a)

where,
t can be an integer from 1 to 60;
each R⁶ can independently be selected from branched alkanediyl, branched arenediyl, and a moiety having the structure -(CH₂)ₚ-O-(CH₂)_{q}-O-(CH₂)ᵣ-;
q can be an integer from 1 to 8;
p can be an integer from 1 to 10;
r can be an integer from 1 to 10; and
y can have an average value within a range from 1.0 to 1.5.

In moieties of Formula (9) and prepolymers of Formula (9a), 0% to 20% of the R⁶ groups can comprise branched alkanediyl or branched arenediyl, and 80% to 100% of the R⁶ groups can be - (CH₂)ₚ-O-(CH₂)_{q}-O-(CH₂)ᵣ-.

In moieties of Formula (9) and prepolymers of Formula (9a), a branched alkanediyl or a branched arenediyl can have the structure -R(-A)ₙ- where R is a hydrocarbon group, n is 1 or 2, and A is a branching point. A branched alkanediyl can have the structure -CH₂(-CH(-CH₂-)-)-.

Examples of thiol-functional polysulfide prepolymers of Formula (9a) are disclosed, for example, in U.S. Application Publication No. 2016/0152775, in U.S. Patent No. 9,079,833, and in U.S. Patent No. 9,663,619.

A polysulfide prepolymer can comprise a polysulfide prepolymer comprising a moiety of Formula (10), a thiol-functional polysulfide prepolymer of Formula (10a), or a combination of any of the foregoing:

-(R⁷-O-CH₂-O-R⁷-Sₘ-)ₙ₋₁-R⁷-O-CH₂-O-R⁷- (10)

HS-(R⁷-O-CH₂-O-R⁷-Sₘ-)ₙ₋₁-R⁷-O-CH₂-O-R⁷-SH (10a)

where R⁷ is C₂₋₄ alkanediyl, m is an integer from 2 to 8, and n is an integer from 2 to 370.

Moieties of Formula (10) and prepolymers of Formula (10a), are disclosed, for example, in JP 62-53354.

A sulfur-containing prepolymer can comprise a sulfur-containing polyformal prepolymer or a combination of sulfur-containing polyformal prepolymers. Sulfur-containing polyformal prepolymers useful in sealant applications are disclosed, for example, in U.S. Patent No. 8,729,216 and in U.S. Patent No. 8,541,513.

A sulfur-containing polyformal prepolymer can comprise a moiety of Formula (11), a thiol-functional sulfur-containing polyformal prepolymer of Formula (11a), a thiol-functional sulfur-containing polyformal prepolymer of Formula (11b), or a combination of any of the foregoing:

-R⁸-(S)ₚ-R⁸-[O-C(R⁹h-O-R⁸-(S)ₚ-R⁸-]ₙ- (11)

R¹⁰-R⁸-(S)ₚ-R⁸-[O-C(R⁹)₂-O-R⁸-(S)ₚ-R⁸-]ₙ-R¹⁰ (11a)

{R¹⁰-R⁸-(S)ₚ-R⁸-[O-C(R⁹_{b}-O-R⁸-(S)ₚ-R⁸-]ₙ-O-C(R⁹)₂-O-}ₘZ (11b)

where n can be an integer from 1 to 50; each p can independently be selected from 1 and 2; each R⁸ can be C₂₋₆ alkanediyl; and each R⁹ can independently be selected from hydrogen, C₁₋₆ alkyl, C₇₋₁₂ phenylalkyl, substituted C₇₋₁₂ phenylalkyl, C₆₋₁₂ cycloalkylalkyl, substituted C₆₋₁₂ cycloalkylalkyl, C₃₋₁₂ cycloalkyl, substituted C₃₋₁₂ cycloalkyl, C₆₋₁₂ aryl, and substituted C₆₋₁₂ aryl; each R¹⁰ is a moiety comprising a terminal thiol group; and Z can be derived from the core of an m-valent parent polyol Z(OH)ₘ.

A sulfur-containing prepolymer can comprise a monosulfide prepolymer or a combination of monosulfide prepolymers.

A monosulfide prepolymer can comprise a moiety of Formula (12), a thiol-functional monosulfide prepolymer of Formula (12a), a thiol-functional monosulfide prepolymer of Formula (12b), or a combination of any of the foregoing:

-S-R¹³-[-S-(R¹¹-X)ₚ-(R¹²-X)_{q}-R¹³-]ₙ-S- (12)

HS-R¹³-[-S-(R¹¹-X)ₚ-(R¹²-X)_{q}-R¹³-]ₙ-SH (12a)

{HS-R¹³-[-S-(R¹¹-X)ₚ-(R¹²-X)_{q}-R¹³-]ₙ-S-V¹-}_{z}B (12b)

wherein,
each R¹¹ can independently be selected from C₂₋₁₀ alkanediyl, such as C₂₋₆ alkanediyl; C₂₋₁₀ branched alkanediyl, such as C₃₋₆ branched alkanediyl or a C₃₋₆ branched alkanediyl having one or more pendant groups which can be, for example, alkyl groups, such as methyl or ethyl groups; C₆₋₈ cycloalkanediyl; C₆₋₁₄ alkylcycloalkyanediyl, such as C₆₋₁₀ alkylcycloalkanediyl; and C₈₋₁₀ alkylarenediyl;
each R¹² can independently be selected from C₁₋₁₀ n-alkanediyl, such as C₁₋₆ n-alkanediyl, C₂₋₁₀ branched alkanediyl, such as C₃₋₆ branched alkanediyl having one or more pendant groups which can be, for example, alkyl groups, such as methyl or ethyl groups; C₆₋₈ cycloalkanediyl; C₆₋₁₄ alkylcycloalkanediyl, such as C₆₋₁₀ alkylcycloalkanediyl; and C₈₋₁₀ alkylarenediyl;
each R¹³ can independently be selected from C₁₋₁₀ n-alkanediyl, such as C₁₋₆ n-alkanediyl, C₂₋₁₀ branched alkanediyl, such as C₃₋₆ branched alkanediyl having one or more pendant groups which can be, for example, alkyl groups, such as methyl or ethyl groups; C₆₋₈ cycloalkanediyl group; C₆₋₁₄ alkylcycloalkanediyl, such as a C₆₋₁₀ alkylcycloalkanediyl; and C₈₋₁₀ alkylarenediyl;
each X can independently be selected from O and S;
p can be an integer from 1 to 5;
q can be an integer from 0 to 5;
n can be an integer from 1 to 60, such as from 2 to 60, from 3 to 60, or from 25 to 35;
B represents a core of a z-valent polyfunctionalizing agent B(-V)_{z} wherein:
   z can be an integer from 3 to 6; and
   each V can be a moiety comprising a terminal group reactive with a thiol group; and
each -V¹- can be derived from the reaction of -V with a thiol.

Methods of synthesizing thiol-functional monosulfide comprising moieties of Formula (12) or prepolymers of Formula (12a)-(12b) are disclosed, for example, in U.S. Patent No. 7,875,666.

A monosulfide prepolymer can comprise a moiety of Formula (13), a thiol-functional monosulfide prepolymer comprising a moiety of Formula (13a), a thiol-functional monosulfide prepolymer of Formula (13b), or a combination of any of the foregoing:

-[-S-(R¹⁴-X)ₚ-C(R¹⁵)₂-(X-R¹⁴)_{q}-]ₙ-S- (13)

H-[-S-(R¹⁴-X)ₚ-C(R¹⁵)₂-(X-R¹⁴)_{q}-]ₙ-SH (13a)

{H-[-S-(R¹⁴-X)ₚ-C(R¹⁵)₂-(X-R¹⁴)_{q}-]ₙ-S-V¹-}_{z}B (13b)

wherein,
each R¹⁴ can independently be selected from C₂₋₁₀ alkanediyl, such as C₂₋₆ alkanediyl; a C₃₋₁₀ branched alkanediyl, such as a C₃₋₆ branched alkanediyl or a C₃₋₆ branched alkanediyl having one or more pendant groups which can be, for example, alkyl groups, such as methyl or ethyl groups; a C₆₋₈ cycloalkanediyl; a C₆₋₁₄ alkylcycloalkyanediyl, such as a C₆₋₁₀ alkylcycloalkanediyl; and a C₈₋₁₀ alkylarenediyl;
each R¹⁵ can independently be selected from hydrogen, C₁₋₁₀ n-alkanediyl, such as a C₁₋₆ n-alkanediyl, C₃₋₁₀ branched alkanediyl, such as a C₃₋₆ branched alkanediyl having one or more pendant groups which can be, for example, alkyl groups, such as methyl or ethyl groups; a C₆₋₈ cycloalkanediyl group; a C₆₋₁₄ alkylcycloalkanediyl, such as a C₆₋₁₀ alkylcycloalkanediyl; and a C₈₋₁₀ alkylarenediyl;
each X can independently be selected from O and S;
p can be an integer from 1 to 5;
q can be an integer from 1 to 5;
n can be an integer from 1 to 60, such as from 2 to 60, from 3 to 60, or from 25 to 35;
B represents a core of a z-valent polyfunctionalizing agent B(-V)_{z} wherein:
   z can be an integer from 3 to 6; and
   each V can be a moiety comprising a terminal group reactive with a thiol group; and
each -V¹- can be derived from the reaction of -V with a thiol.

Methods of synthesizing monosulfide moieties of Formula (13) and monosulfides of Formula (13a)-(13b) are disclosed, for example, in U.S. Patent No. 8,466,220.

A hybrid dual cure composition provided by the present disclosure can comprise, for example, from 45 wt% to 85 wt% of a thiol-functional prepolymer, from 50 wt% to 80 wt%, from 55 wt% to 75 wt%, or from 60 wt% to 70 wt% of a thiol-functional prepolymer, where wt% is based on the total weight of the hybrid dual cure composition.

A hybrid dual cure composition provided by the present disclosure can comprise, for example, greater than 45 wt% of a thiol-functional prepolymer, greater than 50 wt%, greater than 55 wt%, greater than 60 wt%, greater than 65 wt%, greater than 70 wt%, or greater than 80 wt% of a thiol-functional prepolymer, where wt% is based on the total weight of the hybrid dual cure composition.

A hybrid dual cure composition provided by the present disclosure can comprise, for example, less than 85 wt% of a thiol-functional prepolymer, less than 80 wt%, less than 75 wt%, less than 70 wt%, less than 65 wt%, less than 60 wt%, less than 55 wt%, or less than 50 wt% of a thiol-functional prepolymer, where wt% is based on the total weight of the hybrid dual cure composition.

A hybrid dual cure composition provided by the present disclosure can comprise a polyfunctional thiol-reactive compound or combination of a polyfunctional thiol-reactive compounds, wherein the polyfunctional thiol-reactive compound is capable of reacting with a polythiol through a free radical mechanism.

In a combination of polyfunctional thiol-reactive compounds, the compounds can differ, for example, with respect to molecular weight, reactive functionality, core chemistry, and/or a combination of any of the foregoing.

A polyfunctional thiol-reactive compound can have, for example, a thiol-reactive functionality or an average thiol-reactive functionality, for example, from 2 to 10, from 2 to 8, from 2 to 6, from 2 to 4, or from 2 to 3.

A thiol-reactive compound can comprise reactive groups capable of reacting with thiol groups through a free radical mechanism.

A polyfunctional thiol-reactive compound can comprise, for example, a polyalkenyl, a combination of polyalkenyls, a polyalkynyl, a combination of polyalkynyls, or a combination of any of the foregoing.

A polyfunctional thiol reactive compound can comprise a polyfunctional thiol-reactive monomer, a combination of polyfunctional thiol-reactive monomers, a polyfunctional thiol-reactive prepolymer, a combination of polyfunctional thiol-reactive prepolymers, or a combination of any of the foregoing.

A polyfunctional thiol-reactive compound can function as a matrix material, as a cross-linking agent, or as a curing agent.

As a matrix material of the cured polymer, a polyfunctional thiol-reactive compound can serve as a main reactive organic constituent of the hybrid dual cure composition such that the organic reactive constituents can comprise, for example, from 40 wt% to 80 wt% of the polyfunctional thiol-reactive compound, where wt% is based on the total weight of the organic reactive constituents. As a crosslinking agent, the organic constituents of a hybrid dual cure composition can contain, for example, from 1 wt% to 5 wt% of the polyfunctional thiol-reactive compound, where wt% is based on the total weight of the organic reactive constituents. As a curing agent, the reactive organic constituents of a hybrid dual cure composition can comprise, for example, from 1 wt% to 5 wt% of the polyfunctional thiol-reactive compound, where wt% is based on the total weight of the organic reactive constituents.

A polyfunctional thiol-reactive compound can comprise a polyfunctional thiol-reactive monomer or a combination of polyfunctional thiol-reactive monomers.

A polyfunctional thiol-reactive monomer can comprise a monomeric polyalkenyl, a combination of monomeric polyalkenyls, a polyalkynyl, a combination of monomeric polyalkynyls, or a combination of any of the foregoing.

In a combination of polyfunctional thiol-reactive monomers, the monomers can differ, for example, with respect to molecular weight, reactive functionality, core chemistry, and/or a combination of any of the foregoing.

A polyfunctional thiol-reactive monomer can comprise reactive groups capable or reacting with thiol groups through a free radical mechanism such as alkenyl groups and/or alkynyl groups.

A polyfunctional thiol-reactive monomer can have a molecular weight or a number average molecular weight, for example, from 150 Da to 2,000 Da, from 200 Da to 1,500 Da, from 300 Da to 1,000 Da, or from 400 Da to 800 Da. A polyfunctional thiol-reactive monomer can have a molecular weight, for example, less than 2,000 Da, less than 1,500 Da, less than 1,000 Da, less than 800 Da, less than 700 Da, less than 600 Da, or less than 500 Da. A polyfunctional thiol-reactive monomer can have a molecular weight, for example, greater than 2,000 Da, greater than 1,500 Da, greater than 1,000 Da, greater than 800 Da, greater than 700 Da, greater than 600 Da, greater than 500 Da, or greater than 150 Da.

A hybrid dual cure composition provided by the present disclosure can comprise a monomeric polyalkenyl or a combination of monomeric polyalkenyls.

A monomeric polyalkenyl can comprise two or more alkenyl -CH=CH₂ groups. For example, a monomeric polyalkenyl can comprise from 2 to 6 alkenyl groups, from 2 to 5, from 2 to 4, or from 2 to 3 alkenyl groups. A polyalkenyl can comprise, for example, 2, 3, 4, 5, or 6 alkenyl groups.

A monomeric polyalkenyl can have an average alkenyl functionality, for example, from 2 to 6, from 2 to 5, from 2 to 4, or from 2 to 3.

A monomeric polyalkenyl can comprise a polyalkenyl having the structure of Formula (14), a polyalkenyl having the structure of Formula (15), or a combination thereof:

B(-R¹-CH=CH₂)_{z} (14)

CH₂=CH-R¹-CH=CH₂ (15)

where B is a polyfunctional core having functionality z, and R¹ is a divalent organic moiety.

In polyalkenyls of Formula (14) z can be selected from 3, 4, 5, and 6.

In polyalkenyls of Formula (14), B can be a core of a polyfunctionalizing agent.

A polyalkenyl monomer can comprise an aliphatic polyalkenyl monomer such as a linear aliphatic polyalkenyl monomer, a branched aliphatic polyalkenyl monomer, or a cycloaliphatic polyalkenyl monomer. For example, in a polyalkenyl monomer of Formula (14) and (15), R¹ can be linear C₁₋₁₀ alkanediyl, branched C₁₋₁₀ alkanediyl, C₆₋₁₂ cycloalkanediyl, or C₇₋₁₀ alkanecycloalkanediyl.

In polyalkenyls of Formula (14) and (15), R¹ can be an organic moiety such as C₁₋₆ alkanediyl, C₅₋₁₂ cycloalkanediyl, C₆₋₂₀ alkanecycloalkane-diyl, C₁₋₆ heteroalkanediyl, C₅₋₁₂ heterocycloalkanediyl, C₆₋₂₀ heteroalkanecycloalkane-diyl, substituted C₁₋₆ alkanediyl, substituted C₅₋₁₂ cycloalkanediyl, substituted C₆₋₂₀ alkanecycloalkane-diyl, substituted C₁₋₆ heteroalkanediyl, substituted C₅₋₁₂ heterocycloalkanediyl, and substituted C₆₋₂₀ heteroalkanecycloalkane-diyl.

A polyalkenyl monomer can comprise an aliphatic polyalkenyl monomer such as a linear aliphatic polyalkenyl monomer, a branched aliphatic polyalkenyl monomer, or a cycloaliphatic polyalkenyl monomer. For example, in a polyalkenyl monomer of Formula (14) and (15) R¹ can be linear C₁₋₁₀ alkanediyl, branched C₁₋₁₀ alkanediyl, C₆₋₁₂ cycloalkanediyl, or C₇₋₁₀ alkanecycloalkanediyl.

In a polyalkenyl monomer of Formula (14), V can be a moiety terminated in a reactive functional group such as a thiol group, an alkenyl group or an alkynyl group, and z is an integer from 3 to 6, such as 3, 4, 5, or 6. In polyalkenyl of Formula (14), each -V can have the structure, for example, -R-SH, -R-CH=CH₂, or -R-C≡CH, where R can be, for example, C₂₋₁₀ alkanediyl, C₂₋₁₀ heteroalkanediyl, substituted C₂₋₁₀ alkanediyl, or substituted C₂₋₁₀ heteroalkanediyl. When the moiety V is reacted with another compound the moiety -V¹- results and is said to be derived from the reaction with the other compound. For example, when V is -R-CH=CH₂ and is reacted, for example, with a thiol group, the moiety V¹ is -R-CH₂-CH₂- is derived from the reaction.

In polyalkenyl of Formula (14), B can be, for example C₂₋₈ alkane-triyl, C₂₋₈ heteroalkane-triyl, C₅₋₈ cycloalkane-triyl, C₅₋₈ heterocycloalkane-triyl, substituted C₅₋₈ cycloalkene-triyl, C₅₋₈ heterocycloalkane-triyl, C₆ arene-triyl, C₄₋₅ heteroarene-triyl, substituted C₆ arene-triyl, or substituted C₄₋₅ heteroarene-triyl.

In a polyalkenyl of Formula (14), B can be, for example, C₂₋₈ alkane-tetrayl, C₂₋₈ heteroalkane-tetrayl, C₅₋₁₀ cycloalkane-tetrayl, C₅₋₁₀ heterocycloalkane-tetrayl, C₆₋₁₀ arene-tetrayl, C₄ heteroarene-tetrayl, substituted C₂₋₈ alkane-tetrayl, substituted C₂₋₈ heteroalkane-tetrayl, substituted C₅₋₁₀ cycloalkane-tetrayl, substituted C₅₋₁₀ heterocycloalkane-tetrayl, substituted C₆₋₁₀ arene-tetrayl, and substituted C₄₋₁₀ heteroarene-tetrayl.

Examples of suitable polyalkenyls include triallyl cyanurate (TAC), triallylisocyanurate (TAIC), 1,3,5-triallyl-1,3,5-triazinane-2,4,6-trione1,3-bis(2-methylallyl)-6-methylene-5-(2-oxopropyl)-1,3,5-triazinone-2,4-dione, tris(allyloxy)methane, pentaerythritol triallyl ether, 1-(allyloxy)-2,2-bis((allyloxy)methyl)butane, 2-prop-2-ethoxy-1,3,5-tris(prop-2-enyl)benzene, 1,3,5-tris(prop-2-enyl)-1,3,5-triazinane-2,4-dione, and 1,3,5-tris(2-methylallyl)-1,3,5-triazinane-2,4,6-trione, 1,2,4-trivinylcyclohexane, and combinations of any of the foregoing.

A monomeric polyalkenyl can comprise a monomeric polyalkenyl ether having two or more alkenyl ether -O-CH=CH₂ groups or a combination of polyalkenyl ethers. For example, a monomeric polyalkenyl ether can comprise from 2 to 6 alkenyl ether groups, from 2 to 5, from 2 to 4, or from 2 to 3 vinyl ether groups. A polyalkenyl ether can comprise, for example, 2, 3, 4, 5, or 6 alkenyl ether groups.

A monomeric polyalkenyl ether can have an average alkenyl ether functionality from 2 to 6, from 2 to 5, from 2 to 4, or from 2 to 3.

A monomeric polyalkenyl ether can have the structure of Formula (16):

B(-R¹-O-CH=CH₂)_{z} (16)

where B is a polyfunctional core having functionality z, and R is a divalent organic moiety,

In a monomeric polyalkenyl of Formula (16) z can be selected from 3, 4, 5, and 6.

In a monomeric polyalkenyl of Formula (16), B and R¹ can be defined as for Formula (14)

A monomeric polyalkenyl can comprise a monomeric bis(alkenyl) ether or a combination of monomeric bis(alkenyl)ethers.

A monomeric bis(alkenyl)ether can have the structure of Formula (17):

CH₂=CH-O-(R²-O-)ₘCH=CH₂ (17)

where m can be an integer from 2 to 6, each R² can independently be selected from C₁₋₁₀ alkanediyl, C₆₋₈ cycloalkanediyl, C₆₋₁₄ alkanecycloalkanediyl, and -[(CHR³)ₚ-X-]_{q}(CHR³)ᵣ-, where each R³ can independently be selected from hydrogen and methyl; each X can independently be selected from O, S, and NR wherein R can be selected from hydrogen and methyl; p can be an integer from 2 to 6; q can be an integer from 1 to 5; and r can be an integer from 2 to 10.

Suitable bis(alkenyl) ethers include, for example, compounds having at least one oxyalkanediyl group -R²-O-, such as from 1 to 4 oxyalkanediyl groups, i.e., compounds in which m in Formula (17) is an integer ranging from 1 to 4. The variable m in Formula (17) can be an integer from 2 to 4, such as 2, 3, or 4. It is also possible to employ commercially available divinyl ether mixtures that are characterized by a non-integral average value for the number of oxyalkanediyl units per molecule. Thus, m in Formula (17) can also take on rational number values ranging from 0 to 10, such as from 1 to 10, from 1.0 to 4, or from 2.0 to 4.

A bis(alkenyl) ether can have one or more pendent groups such as alkyl groups, hydroxyl groups, alkoxy groups, carbonyl groups, or amine groups.

Examples of suitable bis(alkenyl)ethers include 1,4-butanediol divinyl ether, diethylene glycol divinyl ether, tri(ethylene glycol) divinyl ether, trimethyleneglycol divinyl ether, 1,4-cyclohexanedimethanol divinyl ether, di(ethylene glycol)divinyl ether, pentaerythritol triallyl ether, poly(ethylene glycol)divinyl ether, tetra(ethylene glycol) divinyl ether, polytetrahydrofuryl divinyl ether, trimethylolpropane trivinyl ether, and pentaerythritol tetravinyl ether.

A bis(alkenyl)ether monomer can comprise an aliphatic bis(alkenyl)ether monomer such as a linear aliphatic bis(alkenyl)ether monomer, a branched aliphatic bis(alkenyl)ether monomer, or a cycloaliphatic bis(alkenyl)ether monomer. For example, in a bis(alkenyl)ether monomer of Formula (17) R² can be linear C₁₋₁₀ alkanediyl, branched C₁₋₁₀ alkanediyl, C₆₋₁₂ cycloalkanediyl, or C₇₋₁₀ alkanecycloalkanediyl.

A monomeric polyalkenyl can comprise a sulfur-containing polyalkenyl ether or combination of sulfur-containing polyalkenyl ethers. Examples of sulfur-containing polyalkenyl ethers are disclosed in PCT International Publication No. WO 2018/085650.

A sulfur-containing polyalkenyl ether can be used to increase the sulfur content of the composition.

A sulfur-containing polyalkenyl ether can have the structure of Formula (18):

B(-R-O-CH=CH₂)_{z} (18)

where B is a polyfunctional core having functionality z, and R is a divalent organic moiety.

A sulfur-containing polyalkenyl ether can be a sulfur-containing bis(alkenyl) ether having the structure of Formula (19):

CH₂=CH-O-(CH₂)ₙ-Y¹-R⁴-Y¹-(CH₂)ₙ-O-CH=CH₂ (19)

wherein,
each n can be independently an integer from 1 to 4;
each Y¹ can independently be selected from -O- and -S-; and
R⁴ can be selected from C₂₋₆ n-alkanediyl, C₃₋₆ branched alkanediyl, C₆₋₈ cycloalkanediyl, C₆₋₁₀ alkanecycloalkanediyl, and -[(CH₂)ₚ-X-]_{q}-(CH₂)ᵣ-, wherein,
   each X can independently be selected from -O-, -S-, and -S-S-;
   p can be an integer from 2 to 6;
   q can be an integer from 1 to 5; and
   r can be an integer from 2 to 10; and
at least one Y¹ is -S-, or R⁴ is -[(CH₂)ₚ-X-]_{q}-(CH₂)ᵣ- and at least one X is selected from -S- and -S-S-.

In a sulfur-containing bis(alkenyl) ether of Formula (19), each n can be 1, 2, 3, or 4.

In a sulfur-containing bis(alkenyl) ether of Formula (19), each Y¹ can be -O- or each Y¹ can be -S-.

In a sulfur-containing bis(alkenyl) ether of Formula (19), R⁴ can be C₂₋₆ n-alkanediyl, such as ethane-diyl, n-propane-diyl, n-butane-diyl, n-pentane-diyl, or n-hexane-diyl.

In a sulfur-containing bis(alkenyl) ether of Formula (19), R⁴ can be C₂₋₆ n-alkanediyl; both Y¹ can be -S- or one Y¹ can be -S- and the other Y¹ can be -O-.

In a sulfur-containing bis(alkenyl) ether of Formula (19), R⁴ can be -[(CH₂)ₚ-X-]_{q}-(CH₂)ᵣ-.

In a sulfur-containing bis(alkenyl) ether of Formula (19), R⁴ can be -[(CH₂)ₚ-X-]_{q}-(CH₂)ᵣ-, where each X can be -O- or each X can be -S-S- or at least one X can be -O- or at least one X can be -S-S-.

In a sulfur-containing bis(alkenyl) ether of Formula (19), R⁴ can be -[(CH₂)ₚ-X-]_{q}-(CH₂)ᵣ-, where each X can be -S- or at least one X can be -S-.

In a sulfur-containing bis(alkenyl) ether of Formula (19), R⁴ can be -[(CH₂)ₚ-X-]_{q}-(CH₂)ᵣ-, where each p can be 2 and r can be 2.

In a sulfur-containing bis(alkenyl) ether of Formula (19), R⁴ can be -[(CH₂)ₚ-X-]_{q}-(CH₂)ᵣ-, where q can be 1, 2, 3, 4, or 5.

In a sulfur-containing bis(alkenyl) ether of Formula (19), R⁴ can be -[(CH₂)ₚ-X-]_{q}-(CH2)r-, where each p can be 2, r can be 2, and q can be 1, 2, 3, 4, or 5.

In a sulfur-containing bis(alkenyl) ether of Formula (19), R⁴ can be -[(CH₂)ₚ-X-]_{q}-(CH₂)ᵣ-, where each X can be -S-; each p can be 2, r can be 2, and q can be 1, 2, 3, 4, or 5.

In a sulfur-containing bis(alkenyl) ether of Formula (19), R⁴ can be -[(CH₂)ₚ-X-]_{q}-(CH₂)ᵣ-, where each X can be -O-; each p can be 2, r can be 2, and q can be 1, 2, 3, 4, or 5.

In a sulfur-containing bis(alkenyl) ether of Formula (19), R⁴ can be -[(CH₂)ₚ-X-]_{q}-(CH₂)ᵣ-, where each X can be -O-; and each Y¹ can be -S-.

In a sulfur-containing bis(alkenyl) ether of Formula (19), R⁴ can be -[(CH₂)ₚ-X-]_{q}-(CH₂)ᵣ-, where each X can be -S-; and each Y¹ can be -O-.

In a sulfur-containing bis(alkenyl) ether of Formula (19), each n can be 2, each Y¹ can be independently selected from -O- and -S-, and R⁴ can be -[(CH₂)ₚ-X-]_{q}-(CH₂)ᵣ-, where each X is independently selected from -O-, -S-, and -S-S-, p can be 2, q can be selected from 1 and 2, and r can be 2.

In a sulfur-containing bis(alkenyl) ether of Formula (19), each n can be 2, each Y¹ can independently be selected from -O- and -S-, and R⁴ can be C₂₋₄ alkanediyl, such as ethanediyl, n-propanediyl, or n-butanediyl.

A sulfur-containing bis(alkenyl) ether can comprise a sulfur-containing bis(alkenyl) ether of Formula (19a), Formula (19b), Formula (19c), Formula (19d), Formula (19e), Formula (19f), Formula (19g), Formula (19h), or a combination of any of the foregoing:

CH₂=CH-O-(CH₂)₂-S-((CH₂)₂-O-)₂-(CH₂)₂-S-(CH₂)₂-O-CH=CH₂ (19a)

CH₂=CH-O-(CH₂)₂-S-(CH₂)₂-S-(CH₂)₂-S-(CH₂)₂-O-CH=CH₂ (19b)

CH₂=CH-O-(CH₂)₂-S-(CH₂)₂-O-(CH₂)₂-S-(CH₂)₂-O-CH=CH₂ (19c)

CH₂=CH-O-(CH₂)₂-S-(CH₂)₂-S-(CH₂)₂-O-CH=CH₂ (19d)

CH₂=CH-O-(CH₂)₂-S-(CH₂)₂-O-(CH₂)₂-O-CH=CH₂ (19e)

CH₂=CH-O-(CH₂)₂-O-(CH₂)₂-S-(CH₂)₂-O-(CH₂)₂-O-CH=CH₂ (19f)

CH₂=CH-O-(CH₂)₂-O-(CH₂)₂-S-(CH₂)₂-S-(CH₂)₂-O-(CH₂)₂-O-CH=CH₂ (19g)

CH₂=CH-O-(CH₂)₂-O-(CH₂)₂-S-S-(CH₂)₂-O-(CH₂)₂-O-CH=CH₂ (19h)

Examples of suitable sulfur-containing bis(alkenyl) ethers include 3,9,12,18-tetraoxa-6,15-dithiaicosa-1,19-diene, 3,6,15,18-tetraoxa-9,12-dithiaicosa-1,19-diene, 3,15-dioxa-6,9,12-trithiaheptadeca-1,16-diene, 3,9,15-trioxa-6,12-dithiaheptadeca-1,16-diene, 3,6,12,15-tetraoxa-9-thiaheptadeca-1,16-diene, 3,12-dioxa-6,9-dithiatetradeca-1,13-diene, 3,6,12-trioxa-9-thiatetradeca-1,13-diene, 3,6,13,16-tetraoxa-9,10-dithiaoctadeca-1,17-diene, and combinations of any of the foregoing.

A hybrid dual cure composition provided by the present disclosure can comprise, for example, from 1 wt% to 10 wt% of a monomeric polyalkenyl, from 2 wt% to 9 wt%, from 3 wt% to 8 wt%, or from 4 wt% to 6 wt% of a monomeric polyalkenyl, where wt% is based on the total weight of the hybrid dual cure composition.

A hybrid dual cure composition provided by the present disclosure can comprise, for example, greater than 1 wt% of a monomeric polyalkenyl, greater than 2 wt%, greater than 3 wt%, greater than 4 wt%, greater than 5 wt%, greater than 6 wt%, greater than 7 wt%, or greater than 8 wt% of a monomeric polyalkenyl, where wt% is based on the total weight of the hybrid dual cure composition.

A hybrid dual cure composition provided by the present disclosure can comprise, for example, less than 10 wt% of a monomeric polyalkenyl, less than 8 wt%, less than 7 wt%, less than 6 wt%, less than 5 wt%, less than 4 wt%, less than 3 wt%, or less than 2 wt% of a monomeric polyalkenyl, where wt% is based on the total weight of the hybrid dual cure composition.

A hybrid dual cure composition provided by the present disclosure can comprise a monomeric polyalkynyl or combination of monomeric polyalkynyls.

A polyalkynyl can have, for example, a reactive functionality or an average alkynyl functionality, for example, from 2 to 10, from 2 to 8, from 2 to 6, from 2 to 4, or from 2 to 3.

In a combination of polyalkynyls, the compounds can differ, for example, with respect to molecular weight, alkynyl functionality, core chemistry, or a combination of any of the foregoing.

Suitable polyalkynyls can comprise two or more alkynyl groups. For example, a polyalkynyl can have an alkynyl functionality from 2 to 10, from 2 to 8, from 2 to 6, or from 2 to 4. A polyalkynyl can have an alkynyl functionality greater than 2, greater than 4, greater than 6, or greater than 8.

Polyalkynyls may or may not be a sulfur-containing polyalkynyls, which include sulfur atoms.

Examples of suitable polyalkynyls include 1,7-octadiyne, 1,6-heptadiyne, 1,4-dithynylbenzene, 1,4-diethynylbenzene, 1,8-decadiyne, ethylene glycol 1,2-bis(2-propynyl) ether, and combinations of any of the foregoing.

A hybrid dual cure composition provided by the present disclosure can comprise, for example, from 1 wt% to 10 wt% of a monomeric polyalkynyl, from 2 wt% to 9 wt%, from 3 wt% to 8 wt%, or from 4 wt% to 6 wt% of a monomeric polyalkynyl, where wt% is based on the total weight of the hybrid dual cure composition.

A hybrid dual cure composition provided by the present disclosure can comprise, for example, greater than 1 wt% of a monomeric polyalkynyl, greater than 2 wt%, greater than 3 wt%, greater than 4 wt%, greater than 5 wt%, greater than 6 wt%, greater than 7 wt%, or greater than 8 wt% of a monomeric polyalkynyl, where wt% is based on the total weight of the hybrid dual cure composition.

A hybrid dual cure composition provided by the present disclosure can comprise, for example, less than 10 wt% of a monomeric polyalkynyl, less than 8 wt%, less than 7 wt%, less than 6 wt%, less than 5 wt%, less than 4 wt%, less than 3 wt%, or less than 2 wt% of a monomeric polyalkynyl, where wt% is based on the total weight of the hybrid dual cure composition.

A hybrid dual cure composition provided by the present disclosure can comprise a polyepoxide, or a combination of a polyepoxide and a polyamine.

A polyepoxide and/or a polyamine can have an average thiol-reactive functionality, for example, from 2 to 6, from 2 to 5, from 2 to 4, or from 2 to 3.

A polyepoxide and/or a polyamine can have a thiol-reactive functionality, for example, of 2, 3, 4, 5, or 6.

A hybrid dual cure composition provided by the present disclosure can comprise, for example, from 0.01 wt% to 15 wt% of a polyepoxide or a combination of a polyepoxide and a polyamine, from 1 wt% to 12 wt%, from 1 wt% to 9 wt%, or from 1 wt% to 6 wt% of a polyepoxide or a combination of a polyepoxide and a polyamine, where wt% is based on the total weight of the hybrid dual cure composition.

A hybrid dual cure composition provided by the present disclosure can comprise, for example, greater than 0.01 wt% of a polyepoxide or a combination of a polyepoxide and a polyamine, greater than 0.1 wt%, greater than 1 wt%, greater than 3 wt%, greater than 6 wt%, greater than 9 wt% or greater than 12 wt% of a polyepoxide or a combination of a polyepoxide and a polyamine, where wt% is based on the total weight of the hybrid dual cure composition.

A hybrid dual cure composition provided by the present disclosure can comprise, for example, less than 15 wt% of a polyepoxide or a combination of a polyepoxide and a polyamine, less than 12 wt%, less than 9 wt%, less than 6 wt%, less than 3 wt%, or less than 1 wt% of a polyepoxide or a combination of a polyepoxide and a polyamine, where wt% is based on the total weight of the hybrid dual cure composition.

A hybrid dual cure composition provided by the present disclosure can comprise, for example, from 0.01 wt% to 3 wt% of a polyepoxide or a combination of a polyepoxide and a polyamine, from 0.05 to 2.5 wt%, from 0.1 wt% to 2 wt%, or from 0.05 to 1.5 wt% of a polyepoxide or a combination of a polyepoxide and a polyamine, where wt% is based on the total weight of the hybrid dual cure composition.

A hybrid dual cure composition provided by the present disclosure can comprise, for example, greater than 0.01 wt% of a polyepoxide or a combination of a polyepoxide and a polyamine, greater than 0.05 wt%, greater than 0.1 wt%, greater than 0.5 wt%, greater than 1 wt% or greater than 2 wt% of a polyepoxide or a combination of a polyepoxide and a polyamine, where wt% is based on the total weight of the hybrid dual cure composition.

A hybrid dual cure composition provided by the present disclosure can comprise, for example, less than 3 wt% of a polyepoxide or a combination of a polyepoxide and a polyamine, less than 2 wt%, less than 1 wt%, less than 0.5 wt%, less than 0.1 wt% or less than 0.05 wt% of a polyepoxide or a combination of a polyepoxide and a polyamine, where wt% is based on the total weight of the hybrid dual cure composition.

A hybrid dual cure composition can comprise a polyamine or combination of polyamines.

A polyamine can have an average amine functionality, for example, from 2 to 6, from 2 to 5, from 2 to 4, or from 2 to 3.

A polyamine can have an amine functionality, for example, of 2, 3, 4, 5, or 6.

A polyamine can comprise a primary amine, a secondary amine, or a combination thereof.

In certain hybrid dual cure compositions, a polyamine does not comprise a tertiary amine.

A polyamine can be aliphatic, cycloaliphatic, aromatic, polycyclic, or a combination of any of the foregoing.

Examples of suitable polyamines include ethylenediamine (EDA); diethylenetriamine (DETA); triethylenetetramine (TETA); tetraethylenepentamine (TEPA); N-amino ethylpiperazine *(N-*AEP); isophorone diamine (1PDA); 1,3-cyclohexanebis(methylamine) (1,3-BAC); 4,4'-methylenebis(cyclohexylamine) (PACM); m-xylylenediamine (MXDA); or mixtures thereof.

A polyamine can comprise an aliphatic polyamine such as ethylenediamine (EDA), diethylenetriamine (DETA), triethylenetetramine (TETA, tetraethylenepentamine (TEPA), dipropylenediamine, diethylaminopropylamine, polypropylenetriamine, pentaethylenehexamine (PEHA), and *N*-aminoethylpiperazine (N-AEP).

A polyamine can comprise a monomeric polyamine, a polyamine prepolymer, or a combination thereof.

A polyamine can comprise an amine blend/modified amine including a cycloaliphatic amine.

The amine in this application is a cycloaliphatic amine or any amine blend/modified amine including cycloaliphatic amine.

A polyamine can comprise a cycloaliphatic polyamine.

Examples of suitable cycloaliphatic polyamines include cycloaliphatic polyamine such as menthendiamine, isophoronediamine, bis(4-amino-3-methyldicyclohexyl)methane, diaminodicyclohexylmethane, bis(aminomethyl)cyclohexane, N-aminoethylpiperazine, and 3,9-bis(3-aminopropyl)-3,4,8,10-tetraoxaspiro[5,5]undecane, isophorone diamine (IPDA), 1,3-cyclohexanebis(methylamine) (1,3-BAC); and 4,4'-methylenebis(cyclohexylamine) (PACM; bis-(p-aminocyclohexyl)methane).

A cycloaliphatic polyamine can comprise 4,4'-methylenebis(cyclohexylamine).

Examples of suitable secondary amines include, for example, cycloaliphatic diamines such as Jefflink^{®} 754 (*N*-isopropyl-3-((isopropylamino)methyl)3,5,5-trimethylcyclohexan-1-amine) and aliphatic diamines such as Clearlink^{®} 1000 (4,4'-methylenebis(N-secbutylcyclohexanamine)).

A polyamine can comprise an aromatic polyamine. Examples of suitable aromatic polyamines include m-phenylenediamine, p-phenylenediamine, tolylene-2,4-diamine, tolylene-2,6-diamine, mesitylene-2,4-diamine, 3,5-diethyltolylene-2,4-diamine, a 3,5-diethyltolylene-2,6-diamine, biphenylenediamine, 4,4-diaminodiphenylmethane, 2,5-naphthylenediamine, and 2,6-naphthylenediamine, tris(aminophenyl)methane, bis(aminomethyl)norbornane, piperazine, ethylenediamine, diethylenetriamine, triethylenetetramine, tetraethylenepentamine, 1-(2-aminoethyl)piperazine, bis(aminopropyl)ether, bis(aminopropyl)sulfide, isophorone diamine, 1,2-diaminobenzene; 1,3-diaminobenzene; 1,4-diaminobenzene; 4,4'-diaminodiphenylmethane; 4,4'-diaminodiphenylsulfone; 2,2'-diaminodiphenylsulfone; 4,4'-diaminodiphenyl oxide; 3,3',5,5'-tetramethyl-4,4'-diaminodiphenyl; 3,3'-dimethyl-4,4'-diaminodiphenyl; 4,4'-diamino-alpha-methylstilbene; 4,4'-diaminobenzanilide; 4,4'-diaminostilbene; 1,4-bis(4-aminophenyl)-trans-cyclohexane; 1,1-bis(4-aminophenyl)cyclohexane; 1,2-cyclohexanediamine; 1,4-bis(aminocyclohexyl)methane; 1,3-bis(aminomethyl)cyclohexane; 1,4-bis(aminomethyl)cyclohexane; 1,4-cyclohexanediamine; 1,6-hexanediamine, 1,3-xylenediamine; 2,2'-bis(4-aminocyclohexyl)propane; 4-(2-aminopropan-2-yl)-1-methylcyclohexan-1-amine(methane diamine); and combinations of any of the foregoing.

A polyamine can comprise a polyamine prepolymer or combination of polyamine prepolymers.

A polyamine prepolymer can have any of the prepolymer backbones as disclosed herein such as any of the prepolymer backbones described for polythiol prepolymer.

A polyamine prepolymer can comprise an amine-functional sulfur-containing prepolymer such as an amine-functional polythioether prepolymer, an amine-functional polysulfide prepolymer, an amine-functional sulfur-containing polyformal prepolymer, an amine-functional monosulfide prepolymer, or a combination of any of the foregoing.

Examples suitable polymeric polyamines include polyoxyalkylene amines such as Jeffamine^{®} D-230 and Jeffamine^{®} D-400 commercially available from Huntsman Corporation.

Other examples of suitable polymeric polyamines include polyetheramines such as polypropylene glycol diamines (Jeffamine^{®} D), polyethylene glycol diamines (Jeffamine^{®} ED), Jeffamine^{®} EDR diamines, polytetramethylether glycol/polypropylene glycol copolymer diamines or triamines (Jeffamine^{®} THG), polypropylene triamines (Jeffamine^{®} T), and cycloaliphatic polyetheramines (Jeffamine^{®} RFD-270).

A hybrid dual cure composition provided by the present disclosure comprises a polyepoxide and can also comprise a combination of polyepoxides. A polyepoxide refers to a compound having two or more reactive epoxy groups. A polyepoxide may include a combination of polyepoxides. A polyepoxide can be liquid at room temperature (23 °C).

A polyepoxide can have an average epoxy functionality, for example, from 2 to 6, from 2 to 5, from 2 to 4, or from 2 to 3.

A polyepoxide can have an epoxy functionality, for example, of 2, 3, 4, 5, or 6.

A polyepoxide can comprise, for example, an aliphatic polyepoxide, a cycloaliphatic polyepoxide, an aromatic polyepoxide, a heterocyclic polyepoxide, a polymeric polyepoxide, or a combination of any of the foregoing.

Examples of suitable polyepoxides include polyepoxides such as hydantoin diepoxide, diglycidyl ethers of bisphenol-A, diglycidyl ether of bisphenol-F, novolac type epoxides such as DEN^{™} 438 (phenol novolac polyepoxide comprising the reaction product of epichlorohydrin and phenol-formaldehyde novolac) and DEN^{™} 431 (phenol novolac polyepoxide comprising the reaction product of epichlorohydrin and phenol-formaldehyde novolac), available from Dow Chemical Co., certain epoxidized unsaturated, and combinations of any of the foregoing.

A polyepoxide can comprise a phenol novolac polyepoxide such as DEN^{®} 431, a bisphenol A/epichlorohydrin derived polyepoxide such as Epon^{®} 828, or a combination thereof. A polyepoxide can comprise a combination of a phenol novolac polyepoxide and a bisphenol A/epichlorohydrin derived polyepoxide (a bisphenol A type polyepoxide).

Other examples of suitable polyepoxides include bisphenol A type polyepoxides, brominated bisphenol A type polyepoxides, bisphenol F type polyepoxides, biphenyl type polyepoxides, novolac type polyepoxides, an alicyclic polyepoxides, naphthalene type polyepoxides, ether series or polyether series polyepoxides, oxirane ring-containing polybutadienes, silicone polyepoxide copolymers, and a combination of any of the foregoing.

Additional examples of suitable bisphenol A/epichlorohydrin derived polyepoxides include a bisphenol A type polyepoxide having a weight average molecular weight of 400 or less; a branched polyfunctional bisphenol A type polyepoxide such as p-glycidyloxyphenyl dimethyltolyl bisphenol A diglycidyl ether, a bisphenol F type polyepoxide; a phenol novolac type polyepoxide having a weight average molecular weight of 570 or less, an alicyclic polyepoxide such as vinyl(3,4-cyclohexene)dioxide, methyl 3,4-epoxycyclohexylcarboxylate (3,4-epoxycyclohexyl), bis(3,4-epoxy-6-methylcyclohexylmethyl) adipate and 2-(3,4-epoxycyclohexyl)-5,1-spiro(3,4-epoxycyclohexyl)-m-dioxane, a biphenyl type epoxy such as 3,3',5,5'-tetramethyl-4,4'-diglycidyloxybiphenyl; a glycidyl ester type epoxy such as diglycidyl hexahydrophthalate, diglycidyl 3-methylhexahydrophthalate and diglycidyl hexahydroterephthalate; a glycidylamine type polyepoxide such as diglycidylaniline, diglycidyltoluidine, triglycidyl-p-aminophenol, tetraglycidyl-m-xylene diamine, tetraglycidylbis(aminomethyl)cyclohexane; a hydantoin type polyepoxide such as 1,3-diglycidyl-5-methyl-5-ethylhydantoin; and a naphthalene ring-containing polyepoxide. Also, a polyepoxide having silicone such as 1,3-bis(3-glycidoxy-propyl)-1,1,3,3-tetramethyldisiloxane may be used. Other examples of suitable polyepoxides include (poly)ethylene glycol diglycidyl ether, (poly)propylene glycol diglycidyl ether, butanediol diglycidyl ether and neopentyl glycol diglycidyl ether; and tri-epoxides such as trimethylolpropane triglycidyl ether and glycerin triglycidyl ether.

Examples of commercially available polyepoxides suitable for use in compositions provided by the present disclosure include polyglycidyl derivatives of phenolic compounds, such as those available under the trade names Epon^{®} 828, Epon^{®} 1001, Epon^{®} 1009, and Epon^{®} 1031, from Resolution Performance Products LLC; and DER^{®} 331, DER 332, DER^{®} 334, and DER^{®} 542 from Dow Chemical Co. Other suitable polyepoxides include polyepoxides prepared from polyols and polyglycidyl derivatives of phenol-formaldehyde novolacs, the latter of which are commercially available under the tradenames DEN^{®} 431, DEN^{®} 438, and DEN^{®} 439 from Dow Chemical Company. Cresol analogs are also available commercially ECN^{®} 1235, ECN^{®} 1273, and ECN^{®} 1299 from Ciba Specialty Chemicals, Inc. SU-8 is a bisphenol A-type polyepoxide novolac available from Resolution Performance Products LLC. Polyglycidyl adducts of amines, aminoalcohols and polycarboxylic acids are also useful polyepoxides, including Glyamine^{®} 135, Glyamine^{®} 125, and Glyamine^{®} 115 from F.I.C. Corporation; Araldite^{®} MY-720, Araldite^{®} MY-721, Araldite^{®} 0500, and Araldite^{®} 0510 from Ciba Specialty Chemicals.

A polyepoxide can comprise a urethane-modified diepoxide. A urethane diepoxide can be derived from the reaction of an aromatic diisocyanate and a diepoxide. A urethane-modified diepoxide can comprise a diepoxide having the structure of Formula (20): 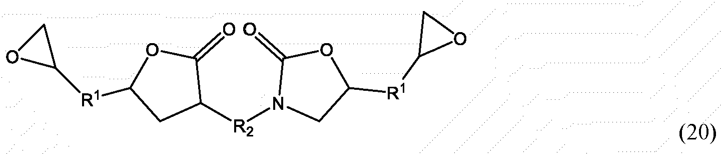 where each R¹ is derived from a diglycidyl ether and R² is derived from an aromatic diisocyanate.

A polyepoxide can be derived from an aromatic diisocyanate in which the isocyanate groups are not bonded directly to the aromatic ring include, for example, bis(isocyanatoethyl)benzene, α,α,α',α'-tetramethylxylene diisocyanate, 1,3-bis(1-isocyanato-1-methylethyl)benzene, bis(isocyanatobutyl)benzene, bis(isocyanatomethyl)naphthalene, bis(isocyanatomethyl)diphenyl ether, bis(isocyanatoethyl)phthalate, and 2,5-di(isocyanatomethyl)furan. Suitable aromatic diisocyanates having isocyanate groups bonded directly to the aromatic ring include phenylene diisocyanate, ethylphenylene diisocyanate, isopropylphenylene diisocyanate, dimethylphenylene diisocyanate, diethylphenylene diisocyanate, diisopropylphenylene diisocyanate, naphthalene diisocyanate, methylnaphthalene diisocyanate, biphenyl diisocyanate, 4,4'-diphenylmethane diisocyanate, bis(3-methyl-4-isocyanatophenyl)methane, bis(isocyanatophenyl)ethylene, 3,3'-dimethoxy-biphenyl-4,4'-diisocyanate, diphenylether diisocyanate, bis(isocyanatophenylether)ethyleneglycol, bis(isocyanatophenylether)-1,3-propyleneglycol, benzophenone diisocyanate, carbazole diisocyanate, ethylcarbazole diisocyanate, dichlorocarbazole diisocyanate, 4,4'-diphenylmethane diisocyanate, p-phenylene diisocyanate, 2,4-toluene diisocyanate, and 2,6-toluene diisocyanate.

Examples of suitable diepoxides include diglycidyl ether, 1,4-butanediol diglycidyl ether, neopentyl glycol diglycidyl ether, 1,3-butanediol diglycidyl ether, neopentyl glycol diglycidyl ether, dipropylene glycol diglycidyl ether, 1,6-hexanediol diglycidyl ether, ethylene glycol diglycidyl ether, diethylene glycol diglycidyl ether, glycerol 1,3-diglycidyl ether, 1,5-hexadiene diepoxide, diepoxy propyl ether, 1,5-hexadiene diepoxide, 1,2:9,10-diepoxydecane, 1,2:8,9-diepoxynonanne, and 1,2:6,7-diepoxyheptane; aromatic diepoxides such as resorcinol diglycidyl ether, bisphenol A diglycidyl ether, bisphenol F diglycidyl ether, bis[4-(glycidyloxy)phenyl]methane, 1,4-bis(glycidyloxy)benzene, tetramethylbiphenyl diglycidyl ether, and 4,4-diglyciyloxybiphenyl; and cyclic diepoxides such as 1,4-cyclohexanedimethanol diglycidyl ether, hydrogenated bisphenol A diglycidyl ether, and 1,4-bis(glycidyloxy)cyclohexane.

Diepoxides of Formula (20) are available, for example, from Kukdo Chemical Co., Ltd. (Korea).

A polyepoxide can comprise a hydroxyl-functional polyepoxide or combination of hydroxyl-functional polyepoxides. For example, a polyepoxide can comprise a hydroxyl-functional bisphenol A/epichlorohydrin derived polyepoxide.

A bisphenol A/epichlorohydrin derived polyepoxide can comprise pendent hydroxyl groups such as, for example, from 1 to 10 pendent hydroxyl groups, from 1 to 8 hydroxyl groups, from 1 to 6 hydroxyl groups, from 1 to 4 pendent hydroxyl groups, or from 1 to 2 pendent hydroxyl groups, such as 1, 2, 3, 4 5, or 6 pendent hydroxyl groups. A bisphenol A/epichlorohydrin derived polyepoxide having pendent hydroxyl groups can be referred to as hydroxyl-functional bisphenol A/epichlorohydrin derived polyepoxide.

Hydroxyl-functional bisphenol A/epichlorohydrin derived polyepoxide can have an epoxy equivalent weight from 400 Daltons to 1,500 Daltons, from 400 Daltons to 1,000 Daltons or from 400 Daltons to 600 Daltons.

A bisphenol A/epichlorohydrin derived polyepoxide can comprise a bisphenol A/epichlorohydrin derived polyepoxide without a hydroxyl-functional component, a bisphenol A/epichlorohydrin derived polyepoxide which is partly hydroxyl-functional, or all of the bisphenol A/epichlorohydrin derived polyepoxide can be hydroxyl-functional.

A bisphenol A/epichlorohydrin derived polyepoxide having hydroxyl pendent groups can have the structure of Formula (21): 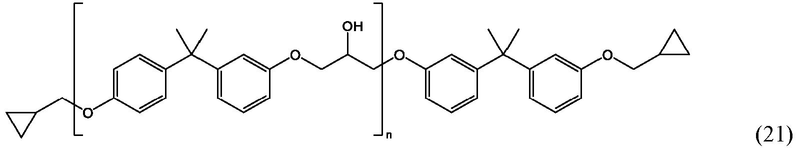 where n is an integer from 1 to 6, or n is within a range from 1 to 6. In a polyepoxide of Formula (21), n can be 2.

Examples of suitable bisphenol A/epichlorohydrin derived polyepoxides include bisphenol A/epichlorohydrin derived polyepoxide in which n is an integer from 1 to 6, or a combination of bisphenol A/epichlorohydrin derived polyepoxide in which n can be a non-integer value, for example, from 0.1 to 2.9, from 0.1 to 2.5, from 0.1 to 2.1, from 0.1 to 1.7, from 0.1 to 1.5, from 0.1 to 1.3, from 0.1 to 1.1, from 0.1 to 0.9, from 0.3 to 0.8, or from 0.5 to 0.8.

A bisphenol A/epichlorohydrin derived polyepoxide comprising hydroxyl pendent groups can comprise, for example, a 2,2-bis(p-glycidyloxyphenyl)propane condensation product with 2,2-bis(p-hydroxyphenyl)propane and similar isomers. Suitable bisphenol A/epichlorohydrin derived polyepoxide comprising hydroxyl pendent groups are available, for example, from Momentive and Hexion and include Epon^{™} solid epoxy such as Epon^{™} 1001F, Epon^{™} 1002F, Epon^{™} 1004F, Epon^{™} 1007F, Epon^{™} 1009F, and combinations of any of the foregoing. Such bisphenol A/epichlorohydrin derived polyepoxide may be provided, for example, as a 70 wt% to 95 wt% solids solution in a suitable solvent such as methyl ethyl ketone. Such high solids content include, for example, Epon^{™} 1001-A-80, Epon^{™} 1001-B-80, Epon^{™} 1001-CX-75, Epon^{™} 1001-DNT-75, Epon^{™} 1001-FT-75, Epon^{™} 1001-G-70, Epon^{™} 1001-H-75, Epon^{™} 1001-K-65, Epon^{™} 1001-O-75, Epon^{™} 1001-T-75, Epon^{™} 1001-UY-70, Epon^{™} 1001-X-75, Epon^{™} 1004-0-65, Epon^{™} 1007-CT-55, Epon^{™} 1007-FMU-50, Epon^{™} 1007-HT-55, Epon^{™} 1001-DU-40, Epon^{™} 1009-MX-840, or a combination of any of the foregoing. Further examples of suitable bisphenol A-derived polyepoxide resins include Epon^{™} 824, Epon^{™} 825, Epon^{™} 826, and Epon^{™} 828.

A bisphenol A/epichlorohydrin derived polyepoxide can have an epoxy equivalent weight (EEW, g/eq), for example, from 150 to 450.

Phenol novolac polyepoxides are multifunctional polyepoxides obtained by reacting a phenolic novolac with epichlorohydrin and contain more than two epoxy groups per molecule.

Phenol novolac polyepoxides can have an EEW, for example, from 150 to 200. Phenol novolac polyepoxides can have the structure of Formula (22): 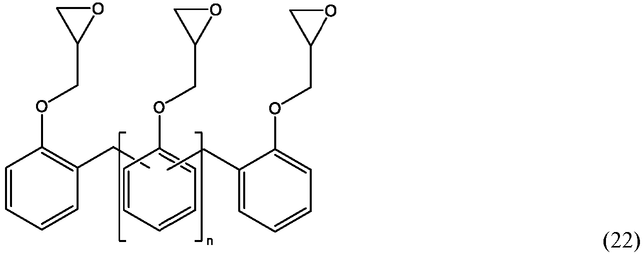 where n can have an average value, for example, from 0.2 to 1.8 (DER^{™} 354, DEN^{™} 431, DEN^{™} 438, and DEN^{™} 439, available from Dow Chemical Company).

Examples of suitable epoxy novolacs include novolac polyepoxides in which n is an integer from 1 to 6, from 1 to 4, or from 1 to 2; or in which n can be a non-integer value, for example, from 0.1 to 2.9, from 0.1 to 2.5, from 0.1 to 2.1, from 0.1 to 1.7, from 0.1 to 1.5, from 0.1 to 1.3, from 0.1 to 1.1, from 0.1 to 0.9, from 0.3 to 0.8, or from 0.5 to 0.8.

A hybrid dual cure composition provided by the present disclosure can comprise a molar ratio of amine groups to epoxy groups, for example, from 0:100, from 10:90 to 90:10, such as from 20:80 to 80:20, from 30:70 to 70:30, or from 60:40 to 40:60.

A hybrid dual cure composition provided by the present disclosure can comprise a molar ratio of amine groups to epoxy groups greater than 0:100, greater than 1:99, greater than 10:90, greater than 20:80, greater than 40:60, greater than 60:40, greater than 80:20, greater than 90:10, or greater than 99:1.

A hybrid dual cure composition provided by the present disclosure can comprise a molar ratio of epoxy groups to amine groups greater than 1:99, greater than 10:90, greater than 20:80, greater than 40:60, greater than 60:40, greater than 80:20, greater than 90:10, or greater than 99:1.

A hybrid dual cure composition provided by the present disclosure can comprise a free-radical polymerization initiator or combination of free-radical polymerization initiators. A free-radical polymerization initiator can comprise a dark cure free-radical polymerization initiator and radiation-activated polymerization initiator.

A dark cure free-radical polymerization initiator can generate free radicals under dark conditions.

A composition provided by the present disclosure can comprise a dark cure free radical polymerization initiator or a combination of dark cure free radical polymerization initiators. A dark cure free radical polymerization initiator refers to a free radical polymerization initiator capable of generating free radicals without being exposed to electromagnetic radiation.

A dark cure free radical polymerization initiator can comprise a transition metal complex, an organic peroxide, or a combination thereof.

A hybrid dual cure composition provided by the present disclosure can comprise an organic peroxide or a combination of organic peroxides.

Examples of suitable organic peroxides include ketone peroxides, diacyl peroxides, hydroperoxides, dialkyl peroxides, peroxyketals, alkyl peresters, and percarbonates.

Suitable organic peroxides include *tert-butyl* peroxide, cumene hydroperoxide, p-menthane hydroperoxide, di-*tert*-butyl peroxide, *tert-*butylcumyl peroxide, acetyl peroxide, isobutyryl peroxide, octanoyl peroxide, dibenzoyl peroxide, 3,5,5-trimethylhexanoyl peroxide, and *tert-butyl* peroxyisobutyrate. Additional examples of suitable organic peroxides include benzoyl peroxide, *tert-*butyl perbenzoate, *o*-methylbenzoyl peroxide, *p*-methylbenzoyl peroxide, di-*tert*-butyl peroxide, dicumyl peroxide, 1,1-bis(*tert*-butylperoxy)-3,3,5-trimethyl cyclohexane, 1,1-di(*tert-*butylperoxy)cyclohexane, 2,5-dimethyl-2,5-di(*tert*-butylperoxy)hexane, 2,5-dimethyl-2,5-di(*tert-*butylperoxy)hexane, 1,6-bis(*p*-toluoylperoxy carbonyloxy)hexane, di(4-methylbenzoyl peroxy)hexamethylene bis-carbonate, *tert*-butylcumyl peroxide, methyl ethyl ketone peroxide, cumene hydroperoxide, 2,5-dimethyl-2,5-di(*tert*-butylperoxy)hexane, 2,5-dimethyl-2,5-di(benzoylperoxy)hexane, 2,5-dimethyl-2,5-di(*tert*-butylperoxy)hexane, 1,3-bis(t-butylperoxypropyl)benzene, di-*tert-*butylperoxy-diisopropylbenzene, *tert*-butylperoxybenzene, 2,4-dichlorobenzoyl peroxide, 1,1-dibutylperoxy-3,3,5-trimethylsiloxane, n-butyl-4,4-di- *tert-butyl* peroxyvalerate, and combinations of any of the foregoing.

Examples of suitable organic peroxides include 3,3,5,7,7-pentamethyl-1,2,4-trioxepane, 2,5-dimethyl-2,5-di(*tert*-butylperoxy)hexyne-3, di-*tert*-butyl peroxide, 2,5-dimethyl-2,5-di(*tert-*butylperoxy)hexane, *tert-butyl* cumyl peroxide, di(*tert*-butylperoxyisopropyl)benzene, dicumyl peroxide, butyl 4,4-di(*tert*-butylperoxy)valerate, *tert*-butylperoxy 2-ethylhexyl carbonate, 1,1-di(*tert-*butylperoxy-3,3,5-trimethylcyclohexane, *tert-butyl* peroxybenzoate, di(4-methylbenzoyl) peroxide, dibenzoyl peroxide, and di(2,4-dichlorobenzoyl) peroxide, which are commercially available, for example, from AkzoNobel.

Other examples of suitable organic peroxides include dilauroyl peroxide, Dibenzoyl peroxide, 1-butyl perbenzoate, 2,4 pentanedione peroxide, methyl ethyl ketone peroxide, *tert-*butyl peroxide, *tert*-amyl peroxyacetate, *tert-*amyl peroxybenzoate, di-*tert*-amyl peroxide, 2,5-dimethyl 2,5-di(*tert-*butylperoxy)hexyne-3, 2,5-dimethyl 2,5-di(*tert*-butylperoxy) hexane, di-2-*tert*-butylperoxy isopropyl benzene, dicumyl peroxide, 1,1 di(*tert*-amylperoxy)cyclohexane, ethyl 3,3 di-*tert*-amyl peroxy butyrate, 1,1-di-*tert*-(butylperoxy3,3,5 trimethyl cyclohexane), n-butyl 4,4, bis(*tert*-butylperoxy valerate, ethyl 3,3, di-*tert-*butylperoxy butyrate, 1,1 di(*tert*-butylperoxycyclohexane, succinic acid peroxide, 2-hydroxy-1,1-dimethyl butyl peroxyneodecanoate, *tert-amyl* peroxy-2-ethyl hexanoate, *tert-butyl* peroxypivalate, 1-butylperoxy neodecanoate, di-n-propyl peroxydicarbonate, di-2-ethylhexyl perxoydicarbonate, di-*sec-*butyl peroxydicarbonate, α-cumyl peroxy neoheptanoate, *tert-*amyl peroxyneodecanoate, *tert*-amyl peroxypivalate, 2,5 dimethyl 2,5 bis-2-ethyl hexanoylperoxy hexane, didecanoyl peroxide, and 1-butyl peroxy 2-ethyl hexanoate, which are available, for example, from Arkema under the Luperox^{®} tradename.

Suitable organic peroxides include those commercially available under the tradename Trigonox^{®}, Butanox^{®}, and Perkodox^{®} from AkzoNobel, and, under the tradename Cadox^{®} from Summit Composites Pty, Ltd.

An organic peroxide can comprise *tert*-butyl peroxybenzoate.

An organic peroxide can comprise a peroxyester, a peroxydicarbonate, a dialkyl peroxide, a diacyl peroxide, a hydroperoxide, a peroxyketal, or a ketone peroxide.

An organic peroxide can comprise a peroxy ester.

An organic peroxide can comprise a peroxydicarbonate such as, for example, *tert*-butylperoxy 2-ethylhexyl carbonate, *tert-*amyl peroxy-2-ethylhexyl carbonate, *tert*-butylperoxy isopropyl carbonate, *tert*-butyl isopropyl monoperoxycarbonate or *tert*-amyl iisopropyl monoperoxycarbonate, *tert*-butyl-2 ethyl hexyl monoperoxycarbonate, *tert*-amyl-2-ethyl hexyl monoperoxycarbonate, or a combination of any of the foregoing.

A hybrid dual cure composition provided by the present disclosure can comprise, for example, from 0.01 wt% to 3 wt%, of an organic peroxide, from 0.05 wt% to 2.5 wt%, from 0.1 wt% to 2.0 wt%, or from 0. 5 wt% to 1.5 wt%, of an organic peroxide, where wt% is based on the total weight of the hybrid dual cure composition.

A hybrid dual cure composition provided by the present disclosure can comprise, for example, less than 3 wt% of an organic peroxide, less than 2 wt%, less than 1 wt%, less than 0.5 wt%, or less than 0.1 wt% of an organic peroxide, wherein wt% is based on the total weight of the hybrid dual cure composition.

A hybrid dual cure composition provided by the present disclosure can comprise, for example, greater than 0.01 wt% of an organic peroxide, greater than 0.05 wt%, greater than 0.1 wt%, greater than 0.5 wt%, greater than 1 wt%, or greater than 2 wt% of an organic peroxide, wherein wt% is based on the total weight of the hybrid dual cure composition.

A hybrid dual cure composition provided by the present disclosure can comprise a transition metal complex or combination of transition metal complexes capable of generating free radicals.

Suitable transition metal complexes are capable of reacting with an organic peroxide at temperatures from 20 °C to 25 °C to generate free radicals.

A transition metal complex can include a transition metal and one or more organic ligands.

Suitable transition metal complexes include metal(II) (M²⁺) and metal(III) (M³⁺) complexes. The anions can be compatible with the other components of a hybrid dual cure composition. For example, suitable anions include organic anions.

Suitable transition metal complexes include, for example, transition metal complexes of cobalt, copper, manganese, iron, vanadium, potassium, cerium, and aluminum.

A transition metal complex can comprise a metal complex of Co(II), Co(III), Mn(II), Mn(III), Fe(II), Fe(III), Cu(II), V(III), or a combination of any of the foregoing.

A transition metal complex can comprise one or more organic ligands such as acetylacetonate ligands.

Suitable transition metal complexes can be trivalent or tetravalent.

The ligand of the transition metal complex can be selected to improve the storage stability of a formulation containing the transition metal complex. Transition metal complexes with an acetylacetonate ligand are observed to be storage stable.

Examples of suitable metal(II) complexes include manganese(II) bis(tetramethylcyclopentadienyl), manganese(II) 2,4-pentanedioante, manganese(II) acetylacetonate, iron(II) acetylacetonate, iron(II) trifluoromethanesulfonate, iron(II) fumarate, cobalt(II) acetylacetonate, copper(II) acetylacetonate, and combinations of any of the foregoing.

Examples of suitable metal(III) complexes include manganese(III) 2,4-pentanedionate, manganese(III) acetylacetonate, manganese(III) methane sulfonate, iron(III)acetylacetonate (Fe(III)(acac)₃), and combinations of any of the foregoing.

Examples of suitable metal complexes include Mn(III)(acac)₃, Mn(III)(2,2'-bipyridyl)2(acac)₃, Mn(II)(acac)₂, V(acac)₃(2,2'-bipyridyl), Fe(III)(acac)₃, and combinations of any of the foregoing.

Suitable Mn complexes can be formed with ligands including, for example, 2,2'-bipyridine, 1,10-phenanthroline, 1,4,7-trimethyl-4,7-triazacyclononane, 1,2-bis(4,7-dimethyl-1,4,7-triazacyclononan-1-yl)-ethane, *N*,*N*,*N*',*N*",*N*‴,*N*‴-hexamethyltriethylenetetraamine, aceytlacetonate (acac), *N*,*N'*-bis(alicylidene)cyclohexylenediamine, 5,10,15,20-tetrakisphenylporphyrin, 5,10,15,20-tetrakis(4'-methoxyphenyl)porphyrin, porphyrin, 6-amino-1,4,6-trimethyl-1, 4-diazacycloheptane, 6-dimethylamino-1,4-bis(pyridine-2-ylmethyl)-6-methyl-1, 4-diazacycloheptane, 1,4,6-trimethyl-6[*N-*pyridin-2-ylmethyl)-*N*-methylamino]-1,4-dizazcycloheptane, 4,11-dimethyl-1,4,8,11-tetraazabicyclo[6.6.2]hexadecane, and combinations of any of the foregoing.

Suitable Fe complexes can be formed with ligands including, for example, 1,4-deazacycloheptane-based ligands such as 6-amino-1,4,6-trimethyl-1,4-diazacycloheptane, 6-dimethylamino-1,4-bis(pyridine-2-ylmethyl)-6-methyl-1,4-diazacycloheptane, 1,4,6-trimethyl-6[*N-*(pyrinin-2-ylmethyl)-*N*-methylamino]-1,4-diazacycloheptane, bisphendimethyl 3-methyl-9-oxo-2, and 4-dipyridin-2-yl-7-(pyridin-2-ylmethyl)-3,7-diazbicyclo[3.3.1]nonane-1,3-dicarboxylate; and ferrocene based ligands such as ferrocene, acylferrocene, benzeneacycloferrocene, and *N,N-*bis(pyridin-2-ylmethyl)-1,1-bis(pyridine-2-yl)-1-amino-ethane; and combinations of any of the foregoing.

A transition metal complex can comprise cobalt(II)bis(2-ethyl hexanoate), manganese(III)(acetylacetonate)₃, iron(III)(acetylacetonate)₃, or a combination of any of the foregoing.

A hybrid dual cure composition provided by the present disclosure can comprise, for example, from 0.01 wt% to 3 wt%, of a transition metal complex, from 0.05 wt% to 2.5 wt%, from 0.1 wt% to 2.0 wt%, or from 0. 5 wt% to 1.5 wt%, of a transition metal complex where wt% is based on the total weight of the hybrid dual cure composition.

A hybrid dual cure composition provided by the present disclosure can comprise, for example, less than 3 wt% of a transition metal complex, less than 2 wt%, less than 1 wt%, less than 0.5 wt%, or less than 0.1 wt% of a transition metal complex, wherein wt% is based on the total weight of the hybrid dual cure composition.

A hybrid dual cure composition provided by the present disclosure can comprise, for example, greater than 0.01 wt% of a transition metal complex, greater than 0.05 wt%, greater than 0.1 wt%, greater than 0.5 wt%, greater than 1 wt%, or greater than 2 wt% of a transition metal complex, wherein wt% is based on the total weight of the hybrid dual cure composition.

Transition metal complexes and/or organic peroxides can be provided in dilute solutions of a solvent. For example, the dilute solutions can comprise from 1 wt% to 15 wt%, or from 5 wt% to 15 wt% of the transition metal complex and/or organic peroxide. Examples of suitable solvents include acetylacetone, HB-40^{®} (combination of terphenyls), toluene, water, isopropanol, methyl propyl ketone, methyl ethyl ketone (MEK), 1,5-propane diol, hexanes, methanol, o-xylene, diethyl ether, methyl-tert-butyl ether, ethyl acetate, and cyclohexane. A suitable solvent can have, for example, a polarity similar to that of toluene.

The solvent can influence the application time, the tack free time, and/or the curing time of a hybrid dual cure composition. For example in Fe(III)(acetylacetonate)₃ and Mn(III)(acetylacetonate)₃ systems, increasing the ratio of toluene to acetylacetonate in the solution can make the transition metal center more available for reaction by shifting the equilibrium in a direction where the ligand(s) can leave more easily. This mechanism can also be applicable with other ligand and metal-ligand complexes such as 2-ethylhexanoic acid and cobalt(II)bis(2-ethylhexanoate). Thus, by using different metals, organic anions, and solvent compositions, the cure time, tack free time, and/or the application time can be selected for a duel cure composition.

A hybrid dual cure composition provided by the present disclosure can comprise a radiation-activated polymerization initiator or combination of radiation-activated polymerization initiators. A radiation-activated polymerization initiator can generate free radicals upon exposure to actinic radiation such as ultraviolet radiation and/or visible radiation.

Actinic radiation includes α.-rays, γ-rays, X-rays, ultraviolet (UV) radiation (200 nm to 400 nm) such as UV-A radiation (320 nm to 400 nm), UV-B radiation (280 nm to 320 nm), and UV-C radiation (200 nm to 280 nm); visible radiation (400 nm to 770 nm), radiation in the blue wavelength range (450 nm to 490 nm), infrared radiation (>700 nm), near-infrared radiation (0.75 µm to 1.4 µm), and electron beams.

A radiation-activated polymerization initiator can comprise any suitable radiation-activated polymerization initiator including photoinitiators such as a visible photoinitiator or a UV photoinitiator.

A photoinitiated free radical reaction can be initiated by exposing a hybrid dual cure composition to actinic radiation such as UV radiation, for example, for less than 180 seconds, less than 120 seconds, less than 90 seconds, less than 60 seconds, less than 30 seconds, less than 15 seconds, or less than 5 seconds. The intensity of the UV radiation can be, for example, from 50 mW/cm² to 500 mW/cm², from 50 mW/cm² to 400 mW/cm², from 50 mW/cm² to 300 mW/cm², from 100 mW/cm² to 300 mW/cm², or from 150 mW/cm² to 250 mW/cm².

A hybrid dual cure composition provided by the present disclosure can be exposed, for example, to a UV dose of 1 J/cm² to 4 J/cm² to cure the composition. The UV source is an 8 W lamp with a UVA spectrum. Other doses and/or other UV sources can be used. A UV dose for curing a of radiation-activated polymerization initiator composition can be, for example, from 0.5 J/cm² to 4 J/cm², from 0.5 J/cm² to 3 J/cm², from 1 J/cm² to 2 J/cm², or from 1 J/cm² to 1.5 J/cm².

A radiation-activated polymerization initiator provided by the present disclosure can be at least partially cured by exposing the hybrid dual composition with radiation within the ultraviolet and/or blue wavelength ranges such as using a light-emitting diode.

A hybrid dual cure composition provided by the present disclosure can be transmissive to actinic radiation to an extent that the incident actinic radiation can generate sufficient free radicals to allow the free radical polymerizable hybrid dual cure composition to at least partially cure. A hybrid dual cure composition provided by the present disclosure can be at least partially transmissive to actinic radiation. For example, a hybrid dual cure composition provided by the present disclosure can be greater than 10% transmissive to a depth of 1 cm for a certain wavelength of radiation, greater than 20%, greater than 40%, greater than 60%, greater than 80%, or greater than 90% transmissive. For example, a hybrid dual cure composition provided by the present disclosure can be greater than 10% transmissive to a depth of 2 cm for a certain wavelength of radiation, greater than 20%, greater than 40%, greater than 60%, greater than 80%, or greater than 90% transmissive.

A hybrid dual cure composition can be partially transmissive to actinic radiation to an extent that the incident actinic radiation can generate sufficient free radicals to initiate free radical polymerization of the hybrid dual cure composition in at least a portion of the exposed composition. The unexposed portion of the composition can cure by another free radical mechanism such as a dark cure mechanism such as an azo-based free radical mechanism or can cure by a non-free radical mechanism.

A suitable free radical-initiating wavelength range can depend on the type of free radical photoinitiators in the hybrid dual cure composition.

A hybrid dual cure composition provided by the present disclosure can comprise a photoinitiator or combination of photoinitiators.

A photoinitiator can be activated by actinic radiation that can apply energy effective in generating an initiating species from the photoinitiator upon irradiation such as α.-rays, γ-rays, X-rays, ultraviolet (UV) light including UVA, UVA, and UVC spectra), visible light, blue light, infrared, near-infrared, or an electron beam. For example, a photoinitiator can be a UV photoinitiator.

A photoinitiator can comprise a cationic photoinitiator, a photolatent base generator, a photolatent metal catalyst, or a combination of any of the foregoing. Exposure of the photoinitiator to suitable actinic radiation can activate the photoinitiator, for example, by generating free radicals, producing cations, producing Lewis acids, or releasing activated catalysts.

Suitable photoinitiators include, for example, aromatic ketones and synergistic amines, alkyl benzoin ethers, thioxanthones and derivatives, benzyl ketals, acylphosphine oxide, ketoxime ester or α-acyloxime esters, cationic quaternary ammonium salts, acetophenone derivatives, and combinations of any of the foregoing.

Examples of suitable UV photoinitiators include α-hydroxyketones, benzophenone, α,α.-diethoxyacetophenone, 4,4-diethylaminobenzophenone, 2,2-dimethoxy-2-phenylacetophenone, 4-isopropylphenyl 2-hydroxy-2-propyl ketone, 1-hydroxycyclohexyl phenyl ketone, isoamyl p-dimethylaminobenzoate, methyl 4-dimethylaminobenzoate, methyl O-benzoylbenzoate, benzoin, benzoin ethyl ether, benzoin isopropyl ether, benzoin isobutyl ether, 2-hydroxy-2-methyl-1-phenylpropan-1-one, 2-isopropylthioxanthone, dibenzosuberone, 2,4,6-trimethylbenzoyldiphenylphosphine oxide, and bisacyclophosphine oxide.

Examples of suitable benzophenone photoinitiators include 2-hydroxy-2-methyl-1-phenyl-1-propanone, 2-hydroxy-1,4,4-(2-hydroxyethoxy)phenyl]-2-methyl-1-propanone, α-dimethoxy-α-phenylacetophenone, 2-benzyl-2-(dimethylamino)-1-[4-(4-morpholinyl) phenyl]-1-butanone, and 2-methyl-1-[4-(methylthio)phenyl]-2-(4-morpholinyl)-1-propanone.

Examples of suitable oxime photoinitiators include (hydroxyimino)cyclohexane, 1-[4-(phenylthio)phenyl]-octane-1,2-dione-2-(*O*-benzoyloxime), 1-[9-ethyl-6-(2-methylbenzoyl)-9*H-*carbazol-3-yl]-ethanone-1-(*O*-acetyloxime), trichloromethyl-triazine derivatives), 4-(4-methoxystyryl)-2,6-trichloromethyl-1,3,5-triazine), 4-(4-methoxyphenyl)-2,6-trichloromethyl-1,3,5-triazine, and α-aminoketone (1-(4-morpholinophenyl)-2-dimethylamino-2-benzyl-butan-1-one).

Examples of suitable phosphine oxide photoinitiators include diphenyl (2,4,6-trimethylbenzoyl)-phosphine oxide (TPO) and phenylbis(2,4,6-trimethyl benzoyl) phosphine oxide (BAPO).

Other examples of suitable UV photoinitiators include the Irgacure^{®} products from BASF or Ciba, such as Irgacure^{®} 184, Irgacure^{®} 500, Irgacure^{®} 1173, Irgacure^{®} 2959, Irgacure^{®} 745, Irgacure^{®} 651 (2,2-dimethoxy-2-phenylacetophenone), Irgacure^{®} 369, Irgacure^{®} 907, Irgacure^{®} 1000, Irgacure^{®} 1300, Irgacure^{®} 819, Irgacure^{®} 819DW, Irgacure^{®} 2022, Irgacure^{®} 2100, Irgacure^{®} 784, Irgacure^{®} 250; Irgacure^{®} MBF, Darocur^{®} 1173, Darocur^{®} TPO, Darocur^{®} 4265, and combinations of any of the foregoing.

A UV photoinitiator can comprise, for example, 2,2-dimethoxy-1,2-diphenylethan-1-one (Irgacure^{®} 651, Ciba Specialty Chemicals), 2,4,6-trimethylbenzoyl-diphenyl-phosphineoxide (Darocur^{®} TPO, Ciba Specialty Chemicals), or a combination thereof.

Other examples of suitable photoinitiators include Darocur^{®} TPO (available from Ciba Specialty Chemicals), Lucirin^{®} TPO (2,4,6-trimethylbenzoyldiphenylphosphine oxide, available from BASF), Speedcure^{®} TPO (available from Lambson), Irgacure^{®} TPO (available from Ciba Specialty Chemicals, and Omnirad^{®} (available from IGM Resins), and combinations of any of the foregoing.

A hybrid dual cure composition provided by the present disclosure can comprise, for example, from 0.01 wt% to 10 wt% of an actinic radiation-activated polymerization initiator, from 0.01 wt% to 5 wt%, from 0.01 wt% to 2 wt%, from 0.05 wt% to 1.5 wt%, from 0.1 wt% to 1 wt%, or from 0.1 wt% to 0.5 wt% of a radiation-activated polymerization initiator such as a photoinitiator such as a UV photoinitiator, where wt% is based on the total weight of the hybrid dual cure composition.

A hybrid dual cure composition provided by the present disclosure can comprise, for example, greater than 0.01 wt% of an actinic radiation-activated polymerization initiator, greater than 0.05 wt%, greater than 0.1 wt%, or greater than 0. 5 wt%, greater than 1 wt%, greater than 2 wt%, or greater than 5 wt% of a radiation-activated polymerization initiator such as a photoinitiator such as a UV photoinitiator, where wt% is based on the total weight of the hybrid dual cure composition.

A hybrid dual cure composition provided by the present disclosure can comprise, for example, less than 10 wt% of an actinic radiation-activated polymerization initiator, less than 5 wt% less than 2 wt%, less than 1 wt%, less than 0.5 wt%, less than 0.1 wt%, less than 0.05 wt%, or less than 001 wt% of a radiation-activated polymerization initiator such as a photoinitiator such as a UV photoinitiator, where wt% is based on the total weight of the hybrid dual cure composition.

A hybrid dual cure composition provided by the present disclosure can comprise one or more photosensitizers to increase the effectiveness of one or more photoinitiators. A photosensitizer can comprise, for example, isopropylthioxanthone (ITX) or 2-chlorothioxanthone (CTX). A hybrid dual cure composition can comprise, for example, less than 0.01 wt%, less than 0.1 wt%, or less than 1 wt% of a photosensitizer, where wt% is based on the total weight of the hybrid dual cure composition.

A hybrid dual cure composition provided by the present disclosure can comprise a base or combination of bases.

A base can comprise a tertiary amine. Examples of suitable tertiary amines include: trimethylamine, triethylamine, *N*-methylmorpholine, *N*-ethylmorpholine, *N*,*N*-dimethylbenzylamine, *N*,*N*-dimethylethanolamine, *N*,*N*,*N',N*'-tetramethyl-1,4-butanediamine, *N,N*-dimethylpiperazine, 1,4-diazobicyclo[2,2,2]octane, bis(dimethylaminoethyl)ether, triethylenediamine, 1,8-diazabicyclo[4.4.0]undec-7-ene, tris[3-(dimethylamino)propyl]-hexahydro-s-triazine, ptentamethyldiehtylenetriamine, and dimethylalkylamines where the alkyl group contains from 4 to 18 carbon atoms.

A hybrid dual cure composition provided by the present disclosure can comprise, for example, from 0.01 wt% to 5 wt% of a base such as a tertiary amine, from 0.05 wt% to 3 wt%, or from 0.1 wt% to 2 wt% of a base such as a tertiary amine, where wt% is based on the total weight of the hybrid dual cure composition.

A hybrid dual cure composition can comprise greater than 0.01 wt% of a base such as a tertiary amine, greater than 0.05 wt%, greater than 0.1 wt%, greater than 0.5 wt%, greater than 1 wt%, or greater than 3 wt%, of a base such as a tertiary amine, where wt% is based on the total weight of the hybrid dual cure composition.

A hybrid dual cure composition can comprise, for example, less than 5 wt% of a base such as a tertiary amine, less than 3 wt%, less than 1 wt%, less than 0.1 wt%, or less than 0.05 wt% of a base such as a tertiary amine, where wt% is based on the total weight of the hybrid dual cure composition.

A hybrid dual cure composition provided by the present disclosure can comprise a filler or combination of filler. A filler can comprise, for example, inorganic filler, organic filler, low-density filler, conductive filler, or a combination of any of the foregoing.

A hybrid dual cure composition provided by the present disclosure can comprise an inorganic filler or combination of inorganic filler.

An inorganic filler can be included to provide mechanical reinforcement and to control the rheological properties of the composition. Inorganic filler may be added to compositions to impart desirable physical properties such as, for example, to increase the impact strength, to control the viscosity, or to modify the electrical properties of a cured composition.

Inorganic filler useful in hybrid dual cure compositions can include carbon black, calcium carbonate, precipitated calcium carbonate, calcium hydroxide, hydrated alumina (aluminum hydroxide), talc, mica, titanium dioxide, alumina silicate, carbonates, chalk, silicates, glass, metal oxides, graphite, silica and combinations of any of the foregoing.

Examples of suitable silica include silica gel/amorphous silica, precipitated silica, fumed silica, and treated silica such as polydimethylsiloxane-treated silica such as Cabosil^{®} TS-720 (Cabot Corporation). A silica filler can comprise a hydrophobic fumed silica such as Aerosil R202 (Evonk Industries). A hybrid dual cure composition provided by the present disclosure can comprise silica gel or combination of silica gel. Suitable silica gel includes Gasil^{®} silica gel available from PQ Corporation, and Sylysia^{®}, CariAct^{®} and Sylomask^{®} silica gel available from Fuji Silysia Chemical Ltd.

Suitable calcium carbonate filler includes products such as Socal^{®} 31, Socal^{®} 312, Socal^{®} U1S1, Socal^{®} UaS2, Socal^{®} N2R, Winnofil^{®} SPM, and Winnofil^{®} SPT available from Solvay Special Chemicals. A calcium carbonate filler can include a combination of precipitated calcium carbonates.

A hybrid dual cure composition provided by the present disclosure can comprise a filler comprising combination of silica and calcium carbonate.

Inorganic filler can be surface treated to provide hydrophobic or hydrophilic surfaces that can facilitate dispersion and compatibility of the inorganic filler with other components of a composition. An inorganic filler can include surface-modified particles such as, for example, surface modified silica. The surface of silica particles can be modified, for example, to be tailor the hydrophobicity or hydrophilicity of the surface of the silica particle. The surface modification can affect the dispensability of the particles, the viscosity, the curing rate, and/or the adhesion.

A hybrid dual cure composition provided by the present disclosure can comprise an organic filler or a combination of organic filler.

Organic filler can be selected to have a low specific gravity and to be resistant to solvents such as JRF Type I and/or to reduce the density of a coating layer. Suitable organic filler can also have acceptable adhesion to the sulfur-containing polymer matrix. An organic filler can include solid powders or particles, hollow powders or particles, or a combination thereof.

An organic filler can have a specific gravity, for example, less than 1.15, less than 1.1, less than 1.05, less than 1, less than 0.95, less than 0.9, less than 0.8, or less than 0.7. Organic filler can have a specific gravity, for example, within a range from 0.85 to 1.15, within a range from 0.9 to 1.1, within a range from 0.9 to 1.05, or from 0.85 to 1.05.

Organic filler can comprise thermoplastics, thermosets, or a combination thereof. Examples of suitable thermoplastics and thermosets include epoxies, epoxy-amides, ETFE copolymers, nylons, polyethylenes, polypropylenes, polyethylene oxides, polypropylene oxides, polyvinylidene chlorides, polyvinylfluorides, TFE, polyamides, polyimides, ethylene propylenes, perfluorohydrocarbons, fluoroethylenes, polycarbonates, polyetheretherketones, polyetherketones, polyphenylene oxides, polyphenylene sulfides, polystyrenes, polyvinyl chlorides, melamines, polyesters, phenolics, epichlorohydrins, fluorinated hydrocarbons, polycyclics, polybutadienes, polychloroprenes, polyisoprenes, polysulfides, polyurethanes, isobutylene isoprenes, silicones, styrene butadienes, liquid crystal polymers, and combinations of any of the foregoing.

Examples of suitable polyamide 6 and polyamide 12 particles are available from Toray Plastics as grades SP-500, SP-10, TR-1, and TR-2. Suitable polyamide powders are also available from the Arkema Group under the tradename Orgasol^{®}, and from Evonik Industries under the tradename Vestosin^{®}.

An organic filler can include a polyethylene powder, such as an oxidized polyethylene powder. Suitable polyethylene powders are available from Honeywell International, Inc. under the tradename A Cumist^{®}, from INEOS under the tradename Eltrex^{®}, and Mitsui Chemicals America, Inc. under the tradename Mipelon^{®}.

The use of organic filler such as polyphenylene sulfide in aerospace sealants is disclosed in U.S. Patent No. 9,422,451. Polyphenylene sulfide is a thermoplastic engineering resin that exhibits dimensional stability, chemical resistance, and resistance to corrosive and high temperature environments. Polyphenylene sulfide engineering resins are commercially available, for example, under the tradenames Ryton^{®} (Chevron), Techtron^{®} (Quadrant), Fortron^{®} (Celanese), and Torelina^{®} (Toray). Polyphenylene sulfide resins are generally characterized by a specific gravity from about 1.3 to about 1.4.

An organic filler can include a low density such as a modified, expanded thermoplastic microcapsules. Suitable modified expanded thermoplastic microcapsules can include an exterior coating of a melamine or urea/formaldehyde resin.

A hybrid dual cure composition can comprise low density microcapsules. A low-density microcapsule can comprise a thermally expandable microcapsule.

Examples of suitable thermoplastic microcapsules include Expancel^{®} microcapsules such as Expancel^{®} DE microspheres available from AkzoNobel. Examples of suitable Expancel^{™} DE microspheres include Expancel^{®} 920 DE 40 and Expancel^{®} 920 DE 80. Suitable low-density microcapsules are also available from Kureha Corporation.

Low density filler such as low density thermally expanded microcapsules can be characterized by a specific gravity within a range from 0.01 to 0.09, from 0.04 to 0.09, within a range from 0.04 to 0.08, within a range from 0.01 to 0.07, within a range from 0.02 to 0.06, within a range from 0.03 to 0.05, within a range from 0.05 to 0.09, from 0.06 to 0.09, or within a range from 0.07 to 0.09, wherein the specific gravity is determined according to ASTM D1475. Low density filler such as low-density microcapsules can be characterized by a specific gravity less than 0.1, less than 0.09, less than 0.08, less than 0.07, less than 0.06, less than 0.05, less than 0.04, less than 0.03, or less than 0.02, wherein the specific gravity is determined according to ASTM D1475.

Low density filler such as low microcapsules can be characterized by a mean particle diameter from 1 µm to 100 µm and can have a substantially spherical shape. Low density filler such as low-density microcapsules can be characterized, for example, by a mean particle diameter from 10 µm to 100 µm, from 10 µm to 60 µm, from 10 µm to 40 µm, or from 10 µm to 30 µm, as determined according to ASTM D1475.

Low density filler such as low-density microcapsules can comprise expanded microcapsules or microballoons having a coating of an aminoplast resin such as a melamine resin. Aminoplast resin-coated particles are described, for example, in U.S. Patent No. 8,993,691. Such microcapsules can be formed by heating a microcapsule comprising a blowing agent surrounded by a thermoplastic shell. Uncoated low-density microcapsules can be reacted with an aminoplast resin such as a urea/formaldehyde resin to provide a coating of a thermoset resin on the outer surface of the particle.

A hybrid dual cure composition can comprise, for example, from 1 wt% to 90 wt% of low-density filler, from 1 wt% to 60 wt%, from 1 wt% to 40 wt%, from 1 wt% to 20 wt%, from 1 wt% to 10 wt%, or from 1 wt% to 5 wt% of low-density filler, where wt% is based on the total weight of the hybrid dual cure composition.

A hybrid dual cure composition can comprise, for example, greater than 1 wt% low density filler, greater than 2 wt%, greater than 3 wt%, greater than 4 wt%, greater than 5 wt%, greater than 7 wt%, or greater than 10 wt% low-density filler, where wt% is based on the total weight of the hybrid dual cure composition.

A hybrid dual cure composition can comprise, for example, from 1 vol% to 90 vol% low-density filler, from 5 vol% to 70 vol%, from 10 vol% to 60 vol%, from 20 vol% to 50 vol%, or from 30 vol% to 40 vol% low density filler, where vol% is based on the total volume of the hybrid dual cure composition.

A hybrid dual cure composition can comprise, for example, greater than 1 vol% low-density filler, greater than 5 vol%, greater than 10 vol%, greater than 20 vol%, greater than 30 vol%, greater than 40 vol%, greater than 50 vol%, greater than 60 vol%, greater than 70 vol%, or greater than 80 vol% low-density filler, where vol% is based on the total volume of the hybrid dual cure composition.

A hybrid dual cure composition can include a conductive filler or a combination of conductive filler. A conductive filler can include electrically conductive filler, semiconductive filler, thermally conductive filler, magnetic filler, EMI/RFI shielding filler, static dissipative filler, electroactive filler, or a combination of any of the foregoing.

A hybrid dual cure composition can comprise an electrically conductive filler or combination of electrically conductive filler.

Examples of suitable conductive filler such as electrically conductive filler include metals, metal alloys, conductive oxides, semiconductors, carbon, carbon fiber, and combinations of any of the foregoing.

Other examples of suitable electrically conductive filler include electrically conductive noble metal-based filler such as pure silver; noble metal-plated noble metals such as silver-plated gold; noble metal-plated non-noble metals such as silver plated cooper, nickel or aluminum, for example, silver-plated aluminum core particles or platinum-plated copper particles; noble-metal plated glass, plastic or ceramics such as silver-plated glass microspheres, noble-metal plated aluminum or noble-metal plated plastic microspheres; noble-metal plated mica; and other such noble-metal conductive filler. Non-noble metal-based materials can also be used and include, for example, non-noble metal-plated non-noble metals such as copper-coated iron particles or nickel-plated copper; non-noble metals, *e.g.,* copper, aluminum, nickel, cobalt; non-noble-metal-plated-non-metals, *e.g.,* nickel-plated graphite and non-metal materials such as carbon black and graphite. Combinations of electrically conductive filler and shapes of electrically conductive filler can be used to achieve a desired conductivity, EMI/RFI shielding effectiveness, hardness, and other properties suitable for a particular application.

Organic filler, inorganic filler, and low-density filler can be coated with a metal to provide conductive filler.

An electrically conductive filler can include graphene. Graphene comprises a densely packed honeycomb crystal lattice made of carbon atoms having a thickness equal to the atomic size of one carbon atom, *i.e.*, a monolayer of sp² hybridized carbon atoms arranged in a two-dimensional lattice.

Graphene can comprise graphenic carbon particles. Graphenic carbon particles refer to carbon particles having structures comprising one or more layers of one-atom-thick planar sheets of sp²-bonded carbon atoms that are densely packed in a honeycomb crystal lattice. An average number of stacked layers can be less than 100, for example, less than 50. An average number of stacked layers can be 30 or less, such as 20 or less, 10 or less, or, in some cases, 5 or less. Graphenic carbon particles can be substantially flat, however, at least a portion of the planar sheets may be substantially curved, curled, creased or buckled. Graphenic carbon particles typically do not have a spheroidal or equiaxed morphology.

Filler used to impart electrical conductivity and EMI/RFI shielding effectiveness can be used in combination with graphene.

Electrically conductive non-metal filler, such as carbon nanotubes, carbon fibers such as graphitized carbon fibers, and electrically conductive carbon black, can also be used in compositions in combination with graphene.

Examples of suitable carbonaceous materials for use as conductive filler other than graphene and graphite include, for example, graphitized carbon black, carbon fibers and fibrils, vapor-grown carbon nanofibers, metal coated carbon fibers, carbon nanotubes including single- and multi-walled nanotubes, fullerenes, activated carbon, carbon fibers, expanded graphite, expandable graphite, graphite oxide, hollow carbon spheres, and carbon foams.

A filler can include carbon nanotubes. Suitable carbon nanotubes can be characterized by a thickness or length, for example, from 1 nm to 5,000 nm. Suitable carbon nanotubes can be cylindrical in shape and structurally related to fullerenes. Suitable carbon nanotubes can be open or capped at their ends. Suitable carbon nanotubes can comprise, for example, more than 90 wt%, more than 95 wt%, more than 99 wt%, or more than 99.9 wt% carbon, where wt% is based on the total weight of the carbon nanotubes.

A hybrid dual cure composition provided by the present disclosure can comprise, for example, one or more additives. Examples of suitable additives include catalysts, adhesion promoters, UV stabilizers, antioxidants, reactive diluents, solvents, plasticizers, corrosion inhibitors, fire retardants, colorants, cure indicators, rheology modifiers, and combinations of any of the foregoing.

A hybrid dual cure composition provided by the present disclosure can independently comprise, for example, from 0.01 wt% to 5 wt%, from 0.1 wt% to 4 wt%, or from 0.5 wt% to 3 wt% of each of the one or more additives, where wt% is based on the total weight of the hybrid dual cure composition.

A hybrid dual cure composition provided by the present disclosure can independently comprise, for example, greater than 0.01 wt%, greater than 0.1 wt%, greater than 1 wt%, or greater than 3 wt% of each of the one or more additives, where wt% is based on the total weight of the hybrid dual cure composition.

A hybrid dual cure composition provided by the present disclosure can independently comprise, for example, less than 5 wt%, less than 3 wt%, less than 1 wt%, or less than 0.1 wt% of each of the one or more additives, where wt% is based on the total weight of the hybrid dual cure composition.

A hybrid dual cure composition can comprise a reactive diluent or combination of reactive diluents. A reactive diluent can be used to reduce the viscosity of the hybrid dual cure composition. A reactive diluent can be a low molecular weight compound having at least one functional group capable of reacting with at least one of the major reactants of the composition and become part of the cross-linked polymeric network of the cured composition. A reactive diluent can have, for example, one functional group, or two functional group. A reactive dilute can be used to control the viscosity of a composition or improve the wetting of filler in a hybrid dual cure composition.

A reactive diluent can comprise an organo-functional vinyl ethers or combinations of organo-functional vinyl ethers. Examples of suitable organo-functional vinyl ethers include hydroxyl-, amine-, and epoxy-functional vinyl ethers.

An organo-functional vinyl ether can have the structure of Formula (23):

CH₂=CH-O-(CH₂)ₜ-R (23)

where t is an integer from 2 to 10, and R can be a hydroxyl, amine, or epoxy. In organo-functional vinyl ethers of Formula (23), t can be 1, 2, 3, 4, 5, or t can be 6.

A hybrid dual cure composition provided by the present disclosure can comprise a hydroxyl-functional vinyl ether or combination of hydroxyl-functional vinyl ethers. Examples of suitable hydroxyl-functional vinyl ethers include 1-methyl-3-hydroxypropyl vinyl ether, 4-hydroxybutyl vinyl ether, and a combination thereof. A hydroxyl-functional vinyl ether can be 4-hydroxybutyl vinyl ether.

A hybrid dual cure composition provided by the present disclosure can comprise a amino-functional vinyl ether or combination of amino-functional vinyl ethers. Examples of suitable amino-functional vinyl ethers include 1-methyl-3-aminopropyl vinyl ether, 4-aminobutyl vinyl ether, and a combination of any of the foregoing. An amino-functional vinyl ether can be 4-aminobutyl vinyl ether.

A hybrid dual cure composition provided by the present disclosure can comprise, for example, from 0.01 wt% to 4 wt% of an organo-functional vinyl ether, from 0.1 wt% to 3 wt%, from 0.5 wt% to 2 wt%, or from 0.5 wt% to 1 wt% of an organo-functional vinyl ether, where wt% is based on the total weight of the hybrid dual cure composition.

A hybrid dual cure composition provided by the present disclosure can comprise, for example, greater than 0.01 wt% of an organo-functional vinyl ether, greater than 0.05 wt%, greater than 0.1 wt%, greater than 0.5 wt%, greater than 1 wt%, or greater than 2 wt% of an organo-functional vinyl ether, where wt% is based on the total weight of the hybrid dual cure composition.

A hybrid dual cure composition provided by the present disclosure can comprise, for example, less than 4 wt% of an organo-functional vinyl ether, less than 2 wt%, less than 1 wt%, less than 0.5 wt%, less than 0.1 wt%, or less than 0.05 wt% of an organo-functional vinyl ether, where wt% is based on the total weight of the hybrid dual cure composition.

A hybrid dual cure composition can comprise a plasticizer or combination of plasticizers.

A hybrid dual cure composition can comprise a polybutadiene plasticizer. Other examples of suitable plasticizers include Jayflex^{™} DINP, Jayflex^{™} DIDP, Jayflex^{™} DIUP, and Jayflex^{™} DTDP available from Exxon Mobil.

Examples of suitable plasticizers include a combination of phthalates, terephathlic, isophathalic, hydrogenated terphenyls, quaterphenyls and higher or polyphenyls, phthalate esters, chlorinated paraffins, modified polyphenyl, tung oil, benzoates, dibenzoates, thermoplastic polyurethane plasticizers, phthalate esters, naphthalene sulfonate, trimellitates, adipates, sebacates, maleates, sulfonamides, organophosphates, polybutene, butyl acetate, butyl cellosolve, butyl carbitol acetate, dipentene, tributyl phosphate, hexadecanol, diallyl phthalate, sucrose acetate isobutyrate, epoxy ester of iso-octyl tallate, benzophenone and combinations of any of the foregoing. Plasticizing agents such as butyl acetate, butyl cellosolve, butyl carbitol acetate, dipentene, tributyl phosphate, hexadecanol, diallyl phthalate, sucrose acetate isobutyrate, epoxy ester of iso-octyl tallate, benzophenone can also be used.

A hybrid dual cure composition provided by the present disclosure can comprise a polymeric polyol or a combination of polymeric polyols as a plasticizing agent.

A polymeric polyol can have a number average molecular weight, for example, from 1,000 Da to 5,000 Da or from 2,000 Da to 4,000 Da.

A polymeric polyol can have an average hydroxyl functionality, for example, from 2 to 6, from 2 to 5, from 2 to 4, or from 2 to 3.

A polymeric polyol can have a hydroxyl functionality, for example, of 2, 3, 4, 5, or 6.

A polymeric polyol can have a viscosity at 25 °C, for example, from 1 Pa-sec to 40 Pa-sec, or from 5 Pa-sect to 20 Pa-sec.

A polymeric polyol can comprise a polybutadiene. A polybutadiene can have a backbone having the structure of Formula (24):

-CH(-CH₃)-CH₂-(CH₂-CH=CH-CH₂-)ₙ₃-CH₂-CH(-CH₃)- (24)

where n3 can be an integer from 30 to 220.

Examples of suitable hydroxyl-functional polybutadienes include Krasol^{®} LBH 2000, Krasol^{®} LBH 3000, Krasol^{®} LBH 5000, and Krasol^{®} LBH 10000, which are available from Total.

A hybrid dual cure composition provided by the present disclosure can comprise, for example, from 0.01 wt% to 4 wt% of a plasticizing agent, from 0.1 wt% to 3 wt%, from 0.5 wt% to 2 wt%, or from 0.5 wt% to 1 wt% of a plasticizing agent, where wt% is based on the total weight of the hybrid dual cure composition.

A hybrid dual cure composition provided by the present disclosure can comprise, for example, greater than 0.01 wt% of a plasticizing agent, greater than 0.05 wt%, greater than 0.1 wt%, greater than 0.5 wt%, greater than 1 wt%, or greater than 2 wt% of a plasticizing agent, where wt% is based on the total weight of the hybrid dual cure composition.

A hybrid dual cure composition provided by the present disclosure can comprise, for example, less than 4 wt% of a plasticizing agent, less than 2 wt%, less than 1 wt%, less than 0.5 wt%, less than 0.1 wt%, or less than 0.05 wt% of a plasticizing agent, where wt% is based on the total weight of the hybrid dual cure composition.

A hybrid dual cure composition provided by the present disclosure can include an adhesion promoter or combination of adhesion promoters.

A hybrid dual cure composition provided by the present disclosure can comprise an adhesion promoter or combination of adhesion promoters. An adhesion promoter can include a phenolic adhesion promoter, a combination of phenolic adhesion promoters, an organo-functional silane, a combination of organo-functional silanes, or a combination of any of the foregoing. An organosilane can be an amine-functional silane.

A hybrid dual cure composition provided by the present disclosure can comprise a phenolic adhesion promoter, an organosilane, or a combination thereof. A phenolic adhesion promoter can comprise a cooked phenolic resin, an un-cooked phenolic resin, or a combination thereof. Examples of suitable phenolic adhesion promoters include phenolic resins such as Methylon^{®} phenolic resin, and organosilanes, such as epoxy-, mercapto- or amine-functional silanes, such as Silquest^{®} organosilanes.

Phenolic adhesion promoters can comprise the reaction product of a condensation reaction of a phenolic resin with one or more thiol-functional polysulfides. Phenolic adhesion promoters can be thiol functional.

Examples of suitable phenolic resins include 2-(hydroxymethyl)phenol, (4-hydroxy-1,3-phenylene)dimethanol, (2-hydroxybenzene-1,3,4-triyl) trimethanol, 2-benzyl-6-(hydroxymethyl)phenol, (4-hydroxy-5-((2-hydroxy-5-(hydroxymethyl)cyclohexa-2,4-dien-1-yl)methyl)-1,3-phenylene)dimethanol, (4-hydroxy-5-((2-hydroxy-3,5-bis(hydroxymethyl)cyclohexa-2,4-dien-1-yl)methyl)-1,3-phenylene)dimethanol, and a combination of any of the foregoing.

Suitable phenolic resins can be synthesized by the base-catalyzed reaction of phenol with formaldehyde.

Phenolic adhesion promoters can comprise the reaction product of a condensation reaction of a Methylon^{®} resin, a Varcum^{®} resin, or a Durez^{®} resin available from Durez Corporation with a thiol-functional polysulfide such as a Thioplast^{®} resin.

Examples of Methylon^{®} resins include Methylon^{®} 75108 (allyl ether of methylol phenol, see U.S. Patent No. 3,517,082) and Methylon^{®} 75202.

Examples of Varcum^{®} resins include Varcum^{®} 29101, Varcum^{®} 29108, Varcum^{®} 29112, Varcum^{®} 29116, Varcum^{®} 29008, Varcum^{®} 29202, Varcum^{®} 29401, Varcum^{®} 29159, Varcum^{®} 29181, Varcum^{®} 92600, Varcum^{®} 94635, Varcum^{®} 94879, and Varcum^{®} 94917.

An example of a Durez^{®} resin is Durez^{®} 34071.

A hybrid dual cure composition provided by the present disclosure can comprise an organo-functional adhesion promoter such as an organo-functional silane. An organo-functional silane can comprise hydrolysable groups bonded to a silicon atom and at least one organofunctional group. An organo-functional silane can have the structure R^{a}-(CH₂)ₙ-Si(-OR)₃₋ₙR^{b}ₙ , where R^{a} is an organofunctional group, n is 0, 1, or 2, and R and R^{b} is alkyl such as methyl or ethyl. Examples of organofunctional groups include epoxy, amino, methacryloxy, or sulfide groups. An organofunctional silane can be a dipodal silane having two or more silane groups, a functional dipodal silane, a non-functional dipodal silane or a combination of any of the foregoing. An organofunctional silane can be a combination of a monosilane and a dipodal silane.

An amine-functional silane can comprise a primary amine-functional silane, a secondary amine-functional silane, or a combination thereof. A primary amine-functional silane refers to a silane having primary amino group. A secondary amine-functional silane refers to a silane having a secondary amine group. An amine-functional silane can comprise, for example, from 40 wt% to 60 wt% of a primary amine-functional silane; and from 40 wt% to 60 wt% of a secondary amine-functional silane; from 45 wt% to 55 wt% of a primary amine-functional silane and from 45 wt% to 55 wt% of a secondary amine-functional silane; or from 47 wt% to 53 wt% of a primary amine-functional silane and from 47 wt% to 53 wt% of a secondary amine-functional silane; where wt% is based on the total weight of the amine-functional silane in a composition.

A secondary amine-functional silane can be a sterically hindered amine-functional silane. In a sterically hindered amine-functional silane the secondary amine can be proximate a large group or moiety that limits or restricts the degrees of freedom of the secondary amine compared to the degrees of freedom for a non-sterically hindered secondary amine. For example, in a sterically hindered secondary amine, the secondary amine can be proximate a phenyl group, a cyclohexyl group, or a branched alkyl group.

Amine-functional silanes can be monomeric amine-functional silanes having a molecular weight, for example, from 100 Daltons to 1000 Daltons, from 100 Daltons to 800 Daltons, from 100 Daltons to 600 Daltons, or from 200 Daltons to 500 Daltons.

Examples of suitable primary amine-functional silanes include 4-aminobutyltriethoxysilane, 4-amino-3,3-dimethylbutyltrimethoxysilane, *N*-(2-aminoethyl)-3-aminopropyltriethoxysilane, 3-(*m-*aminophenoxy)propyltrimethoxysilane, *m*-aminophenyltrimethoxysilane, *p-*aminophenyltrimethoxysilane, 3-aminopropyltriethoxysilane, 3-aminopropyltrimethoxysilane, 3-aminopropyltris(methoxyethoxyethoxy)silane, 11-aminoundecyltriethoxysilane, 2-(4-pyridylethyl)triethoxysilane, 2-(2-pyridylethyltrimethoxysilane, *N*-(3-trimethoxysilylpropyl)pyrrole, 3-aminopropylsilanetriol, 4-amino-3,3-dimethylbutylmethyldimethoxysilane, 3-aminopropylmethyldiethoxysilane, 1-amino-2-(dimethylethoxysilyl)propane, 3-aminopropyldiisopropylene ethoxysilane, and 3-aminopropyldimethylethoxysilane.

Examples of suitable diamine-functional silanes include aminoethylaminomethyl)phenethyltrimethoxysilane and *N*-(2-aminoethyl)-3-aminopropyltrimethoxysilane.

Examples of suitable secondary amine-functional silanes include 3-(*N-*allylamino)propyltrimethoxysilane, *n*-butylaminopropyltrimethoxysilane, *tert-*butylaminopropyltrimethoxysilane, (*N*,*N*-cylohexylaminomethyl)methyldiethoxysilane, (*N-*cyclohexylaminomethyl)triethoxysilane, (*N*-cyclohexylaminopropyl)trimethoxysilane, (3-(n-ethylamino)isobutyl)methyldiethoxysilane, (3-(*N*-ethylamino)isobutyl)trimethoxysilane, *N-*methylaminopropylmethyldimethoxysilane, *N*-methylaminopropyltrimethoxysilane, (phenylaminomethyl)methyldimethoxysilane, *N*-phenylaminomethyltriethoxysilane, and *N-*phenylaminopropyltrimethoxysilane.

Suitable amine-functional silanes are commercially available, for example, from Gelest Inc. and from Dow Corning Corporation.

An organo-functional adhesion promoter can comprise, for example, a mercapto-functional polyalkoxysilane, an epoxy-functional polyalkoxysilane, a hydroxy-functional alkoxysilane, an alkenyl-functional polyalkoxysilane, or an isocyanate-functional polyalkoxysilane.

An adhesion promoter can be a copolymerizable adhesion promoter. Copolymerizable adhesion promoters include adhesion promoters that have one or more functional groups reactive with one or more of the coreactants.

A hybrid dual cure composition can comprise, for example, from 1 wt% to 16 wt% of an adhesion promoter or combination of adhesion promoters, from 3 wt% to 14 wt%, from 5 wt% to 12 wt%, or from 7 wt% to 10 wt% of an adhesion promoter or combination of adhesion promoters, where wt% is based on the total weight of the hybrid dual cure composition.

A hybrid dual cure composition can comprise less than 16 wt% of an adhesion promoter, less than 14 wt%, less than 12 wt%, less than 10 wt%, less than 8 wt%, less than 6 wt%, less than 4 wt% or less than 2 wt% of an adhesion promoter or combination of adhesion promoters, where wt% is based on the total weight of the hybrid dual cure composition.

A hybrid dual cure composition provided by the present disclosure can comprise, for example, less than 0.1 wt% of an adhesion promoter, less than 0.2 wt%, less than 0.3 wt% or less than 0.4 wt% of an adhesion promoter, where wt% is based on the total weight of the hybrid dual cure composition. A curable composition provided by the present disclosure can comprise, for example from 0.05 wt% to 0.4 wt%, from 0.05 wt% to 0.3 wt%, from 0.05 wt% to 0.2 wt% of an adhesion promoter.

A hybrid dual cure composition provided by the present disclosure can comprise a solvent. The selection and amount of solvent in a hybrid dual cure composition provided by the present disclosure can influence the tack free time. As solvent evaporates for the surface of a layer of sealant, the evaporating solvent can deplete the oxygen at the surface and therefore decrease the tack free time. In general, the use of volatile solvents can reduce the tack free time.

A hybrid dual cure composition provided by the present disclosure can comprise one or more colorants.

A hybrid dual cure composition provided by the present disclosure can comprise a pigment, a dye, a photochromic agent, or a combination of any of the foregoing. Because a curable composition can fully cure under dark conditions, a dye, pigment, and/or photochromic agent can be used. For curing with actinic radiation, the surface of an applied sealant can cure, and the non-exposed regions of the applied sealant can cure.

Any suitable dye, pigment, and/or photochromic agent can be used.

Examples of suitable inorganic pigments include metal-containing inorganic pigments such as those containing cadmium, carbon, chromium, cobalt, copper, iron oxide, lead, mercury, titanium, tungsten, and zinc. Examples include ultramarine blue, ultramarine violet, reduced tungsten oxide, cobalt aluminate, cobalt phosphate, manganese ammonium pyrophosphate and/or metal-free inorganic pigments. In particular embodiments the inorganic pigment nanoparticles comprise ultramarine blue, ultramarine violet, Prussian blue, cobalt blue and/or reduced tungsten oxide. Examples of specific organic pigments include indanthrone, quinacridone, phthalocyanine blue, copper phthalocyanine blue, and perylene anthraquinone.

Additional examples of suitable pigments include iron oxide pigments, in all shades of yellow, brown, red and black; in all their physical forms and grain categories; titanium oxide pigments in all the different inorganic surface treatments; chromium oxide pigments also co-precipitated with nickel and nickel titanates; black pigments from organic combustion (*e.g.*, carbon black); blue and green pigments derived from copper phthalocyanine, also chlorinated and brominated, in the various alpha, beta and epsilon crystalline forms; yellow pigments derived from lead sulphochromate; yellow pigments derived from lead bismuth vanadate; orange pigments derived from lead sulphochromate molybdate; yellow pigments of an organic nature based on arylamides; orange pigments of an organic nature based on naphthol; orange pigments of an organic nature based on diketo-pyrrolo-pyrrole; red pigments based on manganese salts of azo dyes; red pigments based on manganese salts of beta-oxynaphthoic acid; red organic quinacridone pigments; and red organic anthraquinone pigments.

A hybrid dual cure composition can comprise, for example, from 1 wt% to 30 wt% of a colorant, from 5 wt% to 25 wt%, or from 10 wt% to 20 wt% of a colorant, where wt% is based on the total weight of the hybrid dual cure composition. A hybrid dual cure composition can comprise, for example, greater than 1 wt% of a colorant, greater than 5 wt%, greater than 10 wt%, greater than 15 wt%, greater than 20 wt%, or greater than 25 wt% of a colorant, where wt% is based on the total weight of the hybrid dual cure composition. A hybrid dual cure composition can comprise, for example, less than 30 wt% of a colorant, less than 25 wt%, less than 20 wt%, less than 15 wt%, or less than 10 of a colorant, where wt% is based on the total weight of the hybrid dual cure composition. A colorant can have a mean particle size, for example, from 200 mm to 600 mm, such as from 200 mm to 500 mm.

In certain applications it can be desirable that a photochromic agent that is sensitive to the degree of cure be used. Such agents can provide a visual indication that the sealant has been exposed to a desired amount of actinic radiation, for example, to cure the sealant. Certain photochromic agents can be used as cure indicators. A cure indicator can facilitate the ability to assess the extent of cure of a sealant by visual inspection.

A photochromic material can be a compound that is activated by absorbing radiation energy having a particular wavelength, such as UV radiation, which causes a feature change such as a color change. A feature change can be an identifiable change in a feature of the photochromic material which can be detected using an instrument or visually. Examples of feature changes include a change of color or color intensity and a change in structure or other interactions with energy in the visible UV, infrared (IR), near IR or far IR portions of the electromagnetic spectrum such as absorption and/or reflectance. A color change at visible wavelengths refers to a color change at wavelengths within a range from 400 nm to 800 nm.

A hybrid dual cure composition provided by the present disclosure can include at least one photochromic material. A photochromic material can be activated by absorbing radiation energy (visible and non-visible light) having a particular wavelength, such as UV light, to undergo a feature change such as a color change. The feature change can be a change of feature of the photochromic material alone or it can be a change of feature of the sealant composition. Examples of suitable photochromic materials include spiropyrans, spiropyrimidines, spirooxazines, diarylethenes, photochromic quinones, azobenzenes, other photochromic dyes and combinations thereof. These photochromic materials undergo a reversible color change when exposed to radiation where the first and second color red states are different colors or different intensities of the same color.

Spiropyrans are photochromic molecules that change color and/or fluoresce under different wavelength light sources. Spiropyrans typically have a 2*H*-pyran isomer in which the hydrogen atom at position two is replaced by a second ring system linked to the carbon atom at position two of the pyran molecule in a spiro way resulting in a carbon atom that is common on both rings. The second ring is often but not exclusively heterocyclic. Examples of suitable spiropyrans include 1',3'-dihydro-8-methoxy-1',3',3'-trimethyl-6-nitrospiro[2*H*-1-benzopyran-2,2'-(2*H*)-indole]; 1',3'-dihydro-1',3',3'-trimethyl-6-nitrospiro[2H-1-benzopyran-2,2'-(2*H*)-indole]; 1,3-dihydro-1,3,3-trimethylspiro[2*H-*indole-2,3'-[3*H*]naphth[2,1-b][1,4]oxazine]; 6,8-dibromo-1',3'-dihydro-1',3',3'-trimethylspiro[2*H*-1-benzopyran-2,2'-(2*H*)-indole]; 5-chloro-1,3-dihydro-1,3,3-trimethylspiro[2*H*-indole-2,3'-[3*H*]phenanthr[9,10-b][1,4]oxazine]; 6-bromo-1',3'-dihydro-1',3',3'-trimethyl-8-nitrospiro[2*H*-1-benzopyran-2,2 '-(2*H*)-indole]; 5-chloro-1,3-dihydro-1,3,3-trimethylspiro[2*H*-indole-2,3'-[3*H*]naphth[2,1-b-][1,4]oxazine]; 1',3'-dihydro-5'-methoxy-1',3,3-trimethyl-6-nitrospiro[2*H*-1-benzopyran-2,2'(2*H*)-indole]; 1,3-dihydro-1,3,3-trimethylspiro[2*H*-indole-2,3'-[3*H*]phenanthr[9,10-b][1,4]oxazine]; 5-methoxy-1,3,3-trimethylspiro[indoline-2,3'-[3*H*]naphtha[2,1-b]pyran]; 8'-methacryloxymethyl-3-methyl-6'-nitro-1-selenaspiro-[2*H*-1'-benzopyran-2,2'-benzoselenenazoline]; 3-isopropyl-8'-methacryloxymethyl-5-methoxy-6'-nitro-1-selenaspiro[2*H*-1'-- benzopyran-2,2'-benzoselenazoline]; 3-isopropyl-8'-methacryloxymethyl-5-methoxy-6'-nitro-1-selenaspiro[2*H*-1'-benzopyran-2,2'-benzoselenazoline]; 8'-methacryloxymethyl-5-methoxy-2-methyl-6'-nitro-1-selenaspiro[2*H*-1'-benzopyran-2,2'-benzoselenazoline]; 2,5-dimethyl-8'-methacryloxymethyl-6'-nitro-1-selenaspiro[2*H*-1'-benzopyran-2,2'-benzoselenazoline]; 8'-methacryloxymethyl-5-methoxy-3-methyl-6'-nitrospiro[benzoselenazoline-- 2,2'(2'*H*)-1'-benzothiopyran]; 8-methacryloxymethyl-6-nitro-1',3',3'-trimethylspiro[2*H*-1-benzothiopyran--2,2'-indoline]; 3,3-dimethyl-1-isopropyl-8'-methacryloxymethyl-6'-nitrospiro-[indoline-2,2'(2'*H*)-1'-benzothiopyran]; 3,3-dimethyl-8'-methacryloxymethyl-6'-nitro-1-octadecylspiro[indoline-2,2'(2'*H*)-1'-benzothiopyran] and combinations thereof.

Azobenzenes are capable of photoisomerization between trans- and cis isomers. Examples of suitable azobenzenes include azobenzene; 4-[bis(9,9-dimethylfluoren-2-yl)amino]azobenzene; 4-(*N*,*N*-dimethylamino)azobenzene-4'-isothiocyanate; 2,2'-dihydroxyazobenzene; 1,1'-dibenzyl-4,4'-bipyridinium dichloride; 1,1'-diheptyl-4,4'-bipyridinium dibromide; 2,2',4'-trihydroxy-5-chloroazobenzene-3-sulfonic acid, and combinations thereof.

Examples of suitable photochromicspirooxazines include 1,3-dihydro-1,3,3-trimethylspiro[2*H*-indole-2,3'-[3*H*]phenanthr[9,10-b](1,4-)oxazine]; 1,3,3-trimethyl spiro(indoline-2,3'-(3*H*)naphth(2,1-b)(1,4)oxazine); 3-ethyl-9'-methoxy-1,3-dimethylspiro(indoline-2,3'-(3*H*)naphth(2,1-b)(1,4)oxazine); 1,3,3-trimethylspiro(indoline-2,3'-(3*H*)pyrido(3,2-f)-(1,4)benzoxazine); 1,3-dihydrospiro(indoline-2,3'-(3*H*)pyrido(3,2-f)-(1,4)benzoxazine), and combinations thereof.

Examples of suitable photochromic spiropyrimidines include 2,3-dihydro-2-spiro-4'-[8'-aminonaphthalen-1'(4'*H*)-one]pyrimidine; 2,3-dihydro-2-spiro-7'-[8'-imino-7',8'-dihydronaphthalen-1'-amine]pyrimidine, and combinations thereof.

Examples of suitable photochromic diarylethenes include 2,3-bis(2,4,5-trimethyl-3-thienyl)maleic anhydride; 2,3-bis(2,4,5-trimethyl-3-thienyl)maleimide; cis-1,2-dicyano-1,2-bis(2,4,5-trimethyl-3-thienyl)ethane; 1,2-bis[2-methylbenzo[b]thiophen-3-yl]-3,3,4,4,5,5-hexafluoro-1-cyclopentene; 1,2-bis(2,4-dimethyl-5-phenyl-3-thienyl)-3,3,4,4,5,5-hexafluoro-1-cyclopentene; stilbene; dithienylethenes and combinations thereof.

Examples of suitable photochromic quinones include 1-phenoxy-2,4-dioxyanthraquinone; 6-phenoxy-5,12-naphthacenequinone; 6-phenoxy-5,12-pentacenequinone; 1,3-dichloro-6-phenoxy-7,12-phthaloylpyrene, and combinations thereof.

Examples of suitable photochromic agents that can be used as cure indicators include ethylviolet and Disperse Red 177.

A photochromic material can produce a reversible color feature change when irradiated. The reversible color change can be caused by a reversible transformation of the photochromic material between two molecular forms having different absorption spectra as a result of the absorption of electromagnetic radiation. When the source of radiation is withdrawn or turned off, the photochromic material normally reverts back to its first color state.

A photochromic material can exhibit an irreversible color change following exposure to radiation. For example, exposing the photochromic material to radiation can cause the photochromic material to change from a first state to a second state. When the radiation exposure is removed, the photochromic material is prevented from reverting back to the initial state as a result of a physical and/or chemical interaction with one or more components of the hybrid dual cure composition.

A hybrid dual cure composition provided by the present disclosure can include, for example, from 0.1 wt% to 10 wt% of a photochromic material, such as from 0.1 wt% to 5 wt%, or from 0.1 wt% to 2 wt%, where wt% is based on the total weight of the hybrid dual cure composition.

A hybrid dual cure composition can comprise a thermal stabilizer or combination of thermal stabilizers. Examples of thermal stabilizers include sterically hindered phenolic antioxidants such as pentaerythrityl tetrakis[3-(3,5-di-*tert*-butyl-4-hydroxyphenyl)propionate] (Irganox^{®} 1010, BASF), triethylene glycol bis[3-(3-*tert*-butyl-4-hydroxy-5-methylphenyl)propionate] (Irganox^{®} 245, BASF), 3,3'-bis[3-(3,5-di-*tert*-butyl-4-hydroxyphenyl)propionohydrazide] (Irganox^{®} MD 1024, BASF), hexamethylene glycol bis[3-(3,5-di-*tert*-butyl-4-hydroxyphenyl)propionate] (Irganox^{®} 259, BASF), and 3,5-di-*tert*-butyl-4-hydroxytoluene (Lowinox^{®} BHT, Chemtura).

[1] A hybrid dual cure composition can further comprise a shelf stabilizer, a thermal stabilizer, a UV stabilizer, a UV absorber, a hindered amine light stabilizer, a dichroic material, a photochromic material, a polymerization moderator, a monomer having a single ethylenically unsaturated radially polymerizable group, a monomer having two or more ethylenically unsaturated radically polymerizable groups, a pigment, a dye, or a combination of any of the foregoing.

[2] A hybrid dual cure composition provided by the present disclosure can comprise a shelf stabilizer or a combination of shelf stabilizers. Examples of suitable shelf stabilizers include 4-methoxyphenol, hydroquinone, pyrogallol, butylated hydroxytoluene (BHT), and 4-*tert*-butylcatechol.

[3] A hybrid dual cure composition provided by the present disclosure can comprise a thermal stabilizer or a combination of thermal stabilizers.

[4] A hybrid dual cure composition provided by the present disclosure can comprise a UV stabilizer or a combination of UV stabilizers. UV stabilizers include UV absorbers and hindered amine light stabilizers. Examples of suitable UV stabilizers include products under the tradenames Cyasorb^{®} (Solvay), Uvinul^{®} (BASF), Tinuvin^{®} (BASF).

A hybrid dual cure composition provided by the present disclosure can comprise a corrosion inhibitor or combination of corrosion inhibitors.

Examples of suitable corrosion inhibitors include, for example, zinc phosphate-based corrosion inhibitors, a lithium silicate corrosion inhibitor such as lithium orthosilicate (Li₄SiO₄) and lithium metasilicate (Li₂SiO₃), MgO, an azole, a monomeric amino acid, a dimeric amino acid. an oligomeric amino acid, a nitrogen-containing heterocyclic compound such as an azole, oxazole, thiazole, thiazolines, imidazole, diazole, pyridine, indolizine, and triazine, tetrazole, and/or tolyltriazole, corrosion resistant particles such as inorganic oxide particles, including for example, zinc oxide (ZnO), magnesium oxide (MgO), cerium oxide (CeO₂), molybdenum oxide (MoO₃), and/or silicon dioxide (SiO₂), and combinations of any of the foregoing

A hybrid dual cure composition can comprise less than 5 wt% of a corrosion inhibitor or combination of corrosion inhibitors, less than 3 wt%, less than 2 wt%, less than 1 wt%, or less than 0.5 wt% of a corrosion inhibitor or combination of a corrosion inhibitors, where wt% is based on the total weight of the hybrid dual cure composition.

A hybrid dual cure composition can comprise a fire retardant or combination of fire retardants.

A fire retardant can include an inorganic fire retardant, an organic fire retardant, or a combination thereof.

Examples of suitable inorganic fire retardants include aluminum hydroxide, magnesium hydroxide, zinc borate, antimony oxides, hydromagnesite, aluminum trihydroxide (ATH), calcium phosphate, titanium oxide, zinc oxide, magnesium carbonate, barium sulfate, barium borate, kaolinite, silica, antimony oxides, and combinations of any of the foregoing.

Examples of suitable organic fire retardants include halocarbons, halogenated esters, halogenated ethers, chlorinated and/or brominated flame retardants, halogen free compounds such as organophosphorus compounds, organonitrogen compounds, and combinations of any of the foregoing.

A hybrid dual cure composition can comprise, for example, from 1 wt% to 30 wt%, such as from 1 wt% to 20 wt%, or from 1 wt% to 10 wt% of a flame retardant or combination of flame retardants based on the total weight of the hybrid dual cure composition. For example, a hybrid dual cure composition can comprise less than 30 wt%, less than 20 wt%, less than 10 wt%, less than 5 wt%, or less than 2 wt%, of a flame retardant or combination of flame retardants based on the total weight of the hybrid dual cure composition.

A hybrid dual cure composition provided by the present disclosure can comprise, for example, from 45 wt% to 85 wt% of a thiol-functional prepolymer, from 2 wt% to 10 wt% of a polyalkenyl such as a bis(alkenyl) ether, from 5 wt% to 45 wt% of a filler, and from 0.5 wt% to 4.5 wt% of a multifunctional polythiol monomer, where wt% is based on the total weight of the hybrid dual cure composition.

A hybrid dual cure composition provided by the present disclosure can comprise, for example, from 50 wt% to 80 wt% of a thiol-functional prepolymer, from 3 wt% to 7 wt% of a polyalkenyl such as a bis(alkenyl) ether, from 10 wt% to 40 wt% of a filler, and from 1 wt% to 4 wt% of a multifunctional polythiol monomer, where wt% is based on the total weight of the hybrid dual cure composition.

A hybrid dual cure composition provided by the present disclosure can comprise, for example, from 55 wt% to 75 wt% of a thiol-functional prepolymer, from 4 wt% to 6 wt% of a polyalkenyl such as a bis(alkenyl) ether, from 15 wt% to 35 wt% of a filler, and from 1.5 wt% to 3.5 wt% of a multifunctional polythiol monomer, where wt% is based on the total weight of the hybrid dual cure composition.

A hybrid dual cure composition provided by the present disclosure can comprise, for example, greater than 45 wt% of a thiol-functional prepolymer, greater than 2 wt% of a polyalkenyl such as a bis(alkenyl) ether, greater than 45 wt% of a filler, and greater than 0.5 wt% of a multifunctional polythiol monomer, where wt% is based on the total weight of the hybrid dual cure composition.

A hybrid dual cure composition provided by the present disclosure can comprise, for example, less than 85 wt% of a thiol-functional prepolymer, less than 8 wt% of a polyalkenyl such as a bis(alkenyl) ether, less than 45 wt% of a filler, and less than 4.5 wt% of a multifunctional polythiol monomer, where wt% is based on the total weight of the hybrid dual cure composition.

In addition to any of the foregoing, a composition provided by the present disclosure can comprise less than 3 wt% of an organic peroxide, and less than 15 wt% of a polyepoxide or a combination of a polyepoxide and a polyamine. For example, a hybrid dual cure composition provided by the present disclosure can comprise from 0.1 wt% to 15 wt% of a polyepoxide or a combination of a polyepoxide and a polyamine , from 0.5 wt% to 10 wt%, from 0.5 wt% to 5 wt%, or from 0.5 wt% to 2 wt% of a polyepoxide or a combination of a polyepoxide and a polyamine; and from 0.1 wt% to 2 wt% of an organic peroxide, from 0.1 wt% to 1.5 wt%, or from 0.1 wt% to 1 wt% of an organic peroxide, wherein wt% is based on the total weight of the hybrid dual cure composition.

In addition to the foregoing, a hybrid dual cure composition provided by the present disclosure can comprise, less than 0.2 wt% of a transition metal complex, such as less than 0.15 wt%, less than 0.1 wt%, or less than 0.05 wt% of a transition metal complex, where wt% is based on the total weight of the hybrid dual cure composition. A hybrid dual cure composition provided by the present disclosure can comprise, for example, from 0.01 wt% to 0.2 wt% of a transition metal complex or from 0.05 wt% to 0.15 wt% of a transition metal complex, where wt% is based on the total weight of the hybrid dual cure composition.

A hybrid dual cure composition provided by the present disclosure can comprise, for example, from 45 wt% to 85 wt% of the thiol-functional prepolymer; from 2 wt% to 10 wt% of the polyalkenyl; from 0.01 wt% to 15 wt% of the polyepoxide or a combination of a polyepoxide and a polyamine; and from 0.01 wt% to 3 wt% of the organic peroxide.

A hybrid dual cure composition provided by the present disclosure can comprise, for example, from 50 wt% to 80 wt% of the thiol-functional prepolymer; from 2 wt% to 8 wt% of the polyalkenyl; from 0.01 wt% to 10 wt% of the polyepoxide or a combination of a polyepoxide and a polyamine; and from 0.01 wt% to 2 wt% of the organic peroxide.

A hybrid dual cure composition provided by the present disclosure can comprise, for example, from 60 wt% to 80 wt% of the thiol-functional prepolymer; from 2 wt% to 6 wt% of the polyalkenyl; from 0.01 wt% to 5 wt% of the polyepoxide or a combination of a polyepoxide and a polyamine; and from 0.01 wt% to 2 wt% of the organic peroxide.

A hybrid dual cure composition provided by the present disclosure can comprise a thiol-functional prepolymer, a polyalkenyl, a polyepoxide or a combination of a polyepoxide and a polyamine, and a photoinitiator.

A hybrid dual cure composition provided by the present disclosure can comprise a thiol-functional prepolymer, a polyalkenyl, a polyepoxide and/or a polyamine, a photoinitiator, an organic peroxide and with or without a transition metal.

A hybrid dual cure composition provided by the present disclosure can comprise a thiol-functional prepolymer, a polyalkenyl, a polyepoxide or a combination of a polyepoxide and a polyamine, an organic peroxide and with or without a transition metal.

These hybrid dual cure compositions exhibit improved adhesion to aerospace substrates compared to similar compositions without the polyamine and/or polyepoxide. The hybrid dual cure compositions without a photoinitiator can exhibit a long application time.

In addition to the foregoing, a hybrid dual cure composition provided by the present disclosure can comprise a reactive diluent, a photoinitiator, a plasticizer, and/or an adhesion promoter.

A hybrid dual cure composition provided by the present disclosure can be provided as a multicomponent system in which separate components can be prepared, stored, and combined and mixed at the time of use.

A multicomponent system provided by the present disclosure can be provided as two-components. The two components can be maintained separately and can be combined prior to use. A first component can comprise, for example, polyalkenyls, hydroxyl-functional vinyl ethers, inorganic filler, organic filler, and lightweight filler. A second component can comprise, for example, thiol-terminated sulfur-containing prepolymers, polythiols, organic filler, inorganic filler lightweight filler, and adhesion promoters. Optional additives that can be added to either component include plasticizers, pigments, solvents, reactive diluents, surfactants, thixotropic agents, fire retardants, and a combination of any of the foregoing. A transition metal complex can be added to the first component and an organic peroxide can be added to the second component. A transition metal complex can be added to the second component and an organic peroxide can be added to the first component.

The first component and the second component can be formulated to be rendered compatible when combined such that the constituents of the first and second parts can intermix and be homogeneously dispersed to provide a sealant or coating composition for application to a substrate. Factors affecting the compatibility of the first and second parts include, for example, viscosity, pH, density, and temperature. The components can be formulated such that the initial viscosity of each of the components to be combined and mixed is within +/-20%, such as within +/-10% or within +/-5%, at a temperature of 25 °C. Having a similar viscosity will facilitate the ability of the components to form a homogenous composition.

The first component and the second component can be stored separately and combined and mixed prior to use.

A first component with the polyalkenyl can comprise a polyepoxide crosslinker and the second component with the thiol-functional prepolymer can comprise a polyamine crosslinker.

A first component can comprise a polyalkenyl and a photoinitiator.

A first component. can comprise a polyalkenyl, such as from 50 wt% to 80 w%, from 55 wt% to 75 wt%, or from 60 wt% to 70 wt%, of a polyalkenyl, wherein wt% is based on the total wt% of the first component.

A first component can comprise a reactive diluent such as from 4 wt% to 14 wt%, from 5 wt% to 13 wt%, from 6 wt% to 12 wt%, from 7 wt% to 11 wt%, or from 8 wt% to 10 wt% of a reactive diluent, wherein wt% is based on the total wt% of the first component.

A first component can comprise a photoinitiator such as from 0.5 wt% to 2.5 wt%, from 0.75 wt% to 2.25 wt% from 1 wt% to 2 wt% or from 1.25 wt% to 1.75 wt% of a photoinitiator, wherein wt% is based on the total wt% of the first component.

A first component can comprise a polymeric polyol such as from 3 t% to 13 wt% of a polymeric polyol, from 4 wt% to 12 wt%, from 5 wt% to 11 wt%, from 6 wt% to 10 wt% or from 7 wt% to 9 wt% of a polymeric polyol, wherein wt% s based on the total wt% of the first component.

A first component can comprise a filler such as from 5 wt% to 25 wt% of a filler, from 10 wt% to 20 wt%, or from 12 wt% to 18 wt% of a filler, wherein wt% s based on the total wt% of the first component.

A first component can comprise an organic peroxide, a polyepoxide and/or a polyamine that can be added prior to use.

A first component can comprise, for example, from 0.5 wt% to 15 wt% of a polyepoxide

A second precursor composition can comprise a thiol-functional polythioether prepolymer. A second precursor composition can further comprise a filler and other additives.

A second component can comprise, for example, a thiol-functional prepolymer such as from 55 wt% to 85 wt%, from 60 wt%, to 80 wt%, or from 55 wt% to 75 wt% of a thiol-functional prepolymer, where wt% is based on the total weight of the second component.

A second component can comprise, for example, a monomeric polythiol such as from 0.5 wt% to 4.5 wt%, from 1 wt% to 4 wt%, from 1.5 wt% to 3.5 wt% or from 2 wt% to 3 wt% of a monomeric polythiol, where wt% is based on the total weight of the second component.

A component can comprise from 10 wt% to 50 wt% of a filler, from 15 wt% to 45 wt%, from 20 wt% to 40 wt% or from 25 wt% to 35 wt% of a filler, where wt% is based on the total weight of the second component.

A second component can comprise, for example, from an additive such as an adhesion promoter.

To form a curable composition the first component and the second component can be combined and mixed. The weight ratio of the first component to the second precursor composition can be, for example, from 100:6 to 100:10, from 100:7 to 100:9, or from 100:7.9 to 100 to 8.9.

The first component and/or the second component can comprise a radiation-activated polymerization initiator. Alternatively, a radiation-activated polymerization initiator can be added as a third component during mixing or can be added as a third component after the first and second components are mixed.

The first component and/or the second component can comprise a polyepoxide and/or a polyamine. A polyepoxide and/or polyamine can be added as a third component during mixing or can be added as a third component after the first and second components are combined and mixed, provided that the resulting composition comprises a polyepoxide or a combination of a polyepoxide and a polyamine.

The first component and/or the second component can comprise an organic peroxide. An organic peroxide can be added as a third component during mixing or can be added as a third component after the first and second components are combined and mixed.

The first component and/or the second component can comprise a transition metal complex. The transition metal complex can be in the component that does not contain an organic peroxide. A transition metal complex can be added as a third component during mixing or can be added after the first and second components are combined and mixed.

A hybrid dual cure composition provided by the present disclosure can be formulated as a sealant. By formulated is meant that in addition to the reactive species forming the cured polymer network, additional material can be added to a composition to impart desired properties to the uncured sealant and/or to the cured sealant. For the uncured sealant these properties can include viscosity, pH, and/or rheology. For cured sealants, these properties can include weight, adhesion, corrosion resistance, color, glass transition temperature, electrical conductivity, cohesion, chemical resistance. and/or physical properties such as tensile strength, % elongation, and hardness. Compositions provided by the present disclosure may comprise one or more additional components suitable for use in aerospace sealants and the selection can depend at least in part on the desired performance characteristics of the cured sealant under conditions of use.

Hybrid dual cure compositions provided by the present disclosure can be visually clear. A visually clear sealant can enable visual inspection of the quality of the seal. Hybrid dual cure compositions can be transmissive or partially transmissive to actinic radiation such as UV radiation. The materials forming a curable composition can be selected to provide a desired depth of cure following exposure to actinic radiation. For example, the filler used can be selected to be transmissive or partially transmissive to actinic radiation such as UV radiation and/or the size and geometry of the filler can be selected to forward scatter incident actinic radiation.

A hybrid dual cure composition provided by the present disclosure can have a viscosity, for example, less than 10,000 Pa·s [100,000 poise], less than 5,000 Pa·s [50,000 poise], less than 2,500 Pa·s [25,000 poise], or less than 1,000 Pa·s [10,000 poise] at 25 °C determined according to ASTM D-2849 § 79-90 using a Brookfield CAP 2000 viscometer with a No. 6 spindle, at speed of 300 rpm, and a temperature of 23 °C.

A composition provided by the present disclosure can exhibit an extrusion rate at 2 hours after mixing greater than 10 g/min, greater than 15 g/min, greater than 20 g/min, greater than 30 g/min, greater than 40 g/min, greater than 50 g/min, greater than 60 g/min, or greater than 70 g/min as determined according to AS5127(4) at 23 °C.

A hybrid dual cure composition provided by the present disclosure can have an extrusion rate, for example, greater than 10 g/min, greater than 15 g/min, greater than 20 g/min, greater than 30 g/min, greater than 60 g/min, greater than 90 g/min, or greater than 120 g/min at 2 hours at 23 °C, as determined according to AS5127/1 (5.6).

A hybrid dual cure composition provided by the present disclosure can have an extrusion rate, for example, from 15 g/min to 120 g/min, from 15 g/min to 50 g/min, from 30 g/min to 120 g/min or from 40 g/min to 100 g/min, at 2 hours at 23 °C, as determined according to AS5127/1 (5.6).

A hybrid dual cure composition provided by the present disclosure can have an application time at 23 °C, for example, from 2 hours to 12 hours, where the application time refers to the time from when the hybrid dual cure composition if first prepared or thawed to a temperature of 25 °C to when the extrusion rate determined according to AS5127(4) is less than 30 g/min at 23 °C.

A hybrid dual cure composition provided by the present disclosure can exhibit a tack free time of less than 48 hours, less than 36 hours, or less than 24 hours, where the tack free time is the duration from the time of mixing to the components to provide a hybrid dual cure composition as determined according to AS5127/1(5.8).

A hybrid dual cure composition provided by the present disclosure can exhibit a cure time, for example, of less than 10 days, less than 8 days, or less than 6 days, where the cure time is the duration following mixing to the time the sealant exhibits a hardness of Shore 30A as determined according to AS5127/1 (6.2).

A hybrid dual cure composition provided by the present disclosure can have a depth of cure following exposure to actinic radiation, for example, of less than 2 mm, less than 5 mm, less than 10 mm, less than 15 mm, less than 20 mm, or less than 25 mm, wherein depth of cure is determined according to AS5127 (4).

A hybrid dual cure composition provided by the present disclosure can be formulated to exhibit a desired cure profile. A cure profile can be characterized by an application time, a tack free time, and a cure time. Definitions of these times are provided herein. For example, a hybrid dual cure composition provided by the present disclosure can be formulated to exhibit an application time of 0.5 hours, a tack free time of less than 2 hours, and a cure time of 3 hours at conditions of 25 °C and 50%RH. Other formulations can exhibit, for example, an application time of 2 hours, a tack free time less than 8 hours, and a cure time of 9 hours; or an application time of 4 hours, a tack free time of less than 24 hours, and a cure time of less than 24 hours. Other cure profiles can be designed for a particular application and based on considerations such as volume of material, surface area, application method, thickness of coating, temperature, and humidity.

After a hybrid dual cure composition is prepared or thawed, the curing reaction can proceed, and the viscosity of the hybrid dual cure composition can increase and at some point, will no longer be workable. The duration between when the two components are mixed to form the hybrid dual cure composition to when the curable composition can no longer be reasonably or practically applied to a surface for its intended purpose can be referred to as the working time. As can be appreciated, the application time can depend on a number of factors including, for example, the curing chemistry, the catalyst used, the application method, and the temperature. Once a hybrid dual cure composition is applied to a surface (and during application), the curing reaction can proceed to provide a cured composition. A hybrid dual cure composition develops a tack-free surface, cures, and then fully cures over a period of time. A hybrid dual cure composition can be considered to be cured when the hardness of the surface is at least Shore 30A for a Class B sealant or a Class C sealant. After a hybrid dual cure composition has cured to a hardness of Shore 30A it can take from several days to several weeks for a hybrid dual cure composition fully cure. A hybrid dual cure composition is considered fully cured when the hardness is within 10% such as within 5% of the maximum hardness. Depending on the formulation, a fully cured sealant can exhibit, for example, a hardness from Shore 40A to Shore 70A. Shore A hardness is, determined according to ISO 868. For coating applications, a hybrid dual cure composition can have a viscosity, for example, from 200 cps to 800 cps (0.2 Pa-sec to 0.8 Pa-sec). For sprayable coating and sealant compositions, a curable composition can have a viscosity, for example, from 15 cps to 100 cps (0.015 Pa-sec to 0.1 Pa-sec), such as from 20 cps to 80 cps (0.02 Pa-sec to 0.0.8 Pa-sec).

Depending on the application an acceptable extrusion rate can be at least 15 g/min, at least 20 g/min, at least 30 g/min, at least 40 g/min, at least 50 g/min, or at least 60 g/min when extruded through a No. 404 nozzle at a pressure of 90 psi (620 kPa).

For certain applications it can be desirable that the application time be, for example, at least 2 hours, hat least 5 hours, at least 10 hours, at least 15 hours, at least 20 hours, or at least 25 hours.

The cure time is defined as the duration after the time when the components of the sealant composition are first combined until the time when the surface hardness of the sealant is Shore 30A. Shore A hardness can be measured using Type A durometer according to ASTM D2240.

A hybrid dual cure composition provided by the present disclosure can be used, for example, as a sealant or as a coating. A hybrid dual cure composition can be used as a sealant such as a sealant for a vehicle such as an aerospace vehicle.

A hybrid dual cure composition provided by the present disclosure may be applied directly onto the surface of a substrate or over an underlayer such as a primer by any suitable application process.

A method of using a hybrid dual cure composition provided by the present disclosure can include applying a hybrid dual cure composition of the present disclosure to a surface of a part to a desired thickness, exposing at least a portion of the applied hybrid dual cure composition to actinic radiation, and allowing the part to fully cure.

A hybrid dual cure composition provided by the present disclosure may be applied to any suitable substrate. Examples of suitable substrates to which a composition may be applied include metals such as titanium, stainless steel, steel alloy, aluminum, and aluminum alloy, any of which may be anodized, primed, organic-coated or chromate-coated; epoxy; urethane; graphite; fiberglass composite; Kevlar^{®}; acrylics; and polycarbonates. A hybrid dual cure composition provided by the present disclosure may be applied to a substrate such as aluminum and aluminum alloy.

Surfaces include joints, fillets, and fay surfaces.

A hybrid dual cure composition can be applied to a thickness, for example, greater than 0.1 mm, greater than 0.5 mm, greater than 1 mm, greater than 5 mm, greater than 10 mm, or greater than 20 mm. A hybrid dual cure composition can be applied to a thickness, for example, less than 40 mm, less than 20 mm, less than 10 mm, less than 5 mm, less than 1 mm, less than 0.5 mm, or less than 0.1 mm.

A hybrid dual cure composition can be applied to a surface by any suitable method such as, for example, extrusion, roller coating, spreading, painting, or spraying. A method of applying the hybrid dual cure composition can be manual or automated. An example of an automated method includes three-dimensional printing.

A hybrid dual cure composition provided by the present disclosure is curable without exposure to actinic radiation such as exposure to UV radiation. A hybrid dual cure composition can be at least partly cured upon exposure to actinic radiation. The actinic radiation such as UV radiation can be applied to at least a portion of an applied sealant. A hybrid dual cure composition can be accessible to the actinic radiation and the portion of sealant exposed to the UV radiation can be a surface depth. For example, the actinic radiation can initiate the photopolymerization reaction to a depth, for example, of at least 4 mm, at least 6 mm, at least 8 mm, or at least 10 mm. A portion of the hybrid dual cure composition may not be accessible to actinic radiation either because of absorption or scattering of the actinic radiation of the sealant which prevents the actinic radiant from interacting with the full thickness of the sealant. A portion of the hybrid dual cure composition may be obscured by the geometry of the part being sealed or may be obscured by an overlying structure.

A hybrid dual cure composition provided by the present disclosure can be exposed to UV radiation to initiate the hybrid dual curing reactions. A composition can be exposed to a UV dose of, for example, from 1 J/cm² to 4 J/cm². The UV dose can be selected, for example, to provide a depth of UV cure from 1 mm to 25 mm, from 2 mm to 20 mm, from 5 mm to 18 mm, or from 10 mm to 15 mm. Any suitable UV wavelength can be used that initiates the generation of free radicals. For example, suitable UV wavelengths can be within a range, for example, from 365 nm to 395 nm.

A hybrid dual cure composition provided by the present disclosure, following application to a part, can be exposed to actinic radiation for a sufficient time to fully or partially cure the surface of the hybrid dual cure composition. The full depth of the sealant can then cure with time via dark cure mechanisms. Providing a fully or partially cured surface can facilitate handling of the part.

A hybrid dual cure composition provided by the present disclosure can be exposed to actinic radiation, for example, for 120 seconds or less, from 90 seconds or less, for 60 seconds or less, for 30 seconds or less, or 15 seconds or less. A hybrid dual cure composition provided by the present disclosure can be exposed to actinic radiation, for example, within a range from 10 seconds to 120 seconds, from 15 seconds to 120 seconds, for 30 seconds to 90 seconds, or from 30 seconds to 60 seconds.

A hybrid dual cure composition can be applied to a surface. A hybrid dual cure composition can be exposed to actinic radiation. The actinic radiation can extend to a depth in the thickness of the applied sealant, such as, for example, to a depth of 6,35 mm [0.25 inches], 1.27 cm [0.5 inches], 1.91 cm [0.75 inches], 2.54 cm [1 inch], 3.18 cm [1.25 inches] or 3.81 cm [1.5 inches]. The portion of the sealant exposed to the actinic radiation can cure by a free radical mechanism. The depth of actinic radiation exposure can depend on a number of factors including, for example, absorption by the materials forming the hybrid dual cure composition, scattering or radiation by materials forming the hybrid dual cure composition such as by filler, and/or the geometry of the applied hybrid dual cure composition.

The radiation-initiated free radical photopolymerization reaction can be initiated by exposing a hybrid dual cure composition provided by the present disclosure to actinic radiation such as UV radiation, for example, for less than 120 seconds, less than 90 seconds, less than 60 seconds, or less than 30 seconds.

The free radical photopolymerization reaction can be initiated by exposing a hybrid dual cure composition provided by the present disclosure to actinic radiation such as UV radiation, for example, for from 15 seconds to 120 seconds, from 15 seconds to 90 seconds, for rom 15 seconds to 60 seconds.

The UV radiation can include irradiation at a wavelength at 394 nm.

The intensity of the UV radiation can be, for example, from 0.05 W/cm² to 10 W/cm², from 0.1 W/cm² to 5 W/cm², from 0.2 W/cm² to 2 W/cm², from 0.2 W/cm² to 1 W/cm². for a duration, for example, from 5 seconds to 5 minutes, from 10 seconds to 5 minutes, from 10 seconds to 2 minutes, or from 15 seconds to 1 minute. The UV radiation can be within a range, for example, from 380 nm to 410 nm, such as from 385 nm to 400 nm, such as 395 nm.

A hybrid dual cure composition provided by the present disclosure can be exposed to a UV dose of 1 J/cm² to 4 J/cm² to cure the sealant. The UV source is a 8W lamp with a UVA spectrum. Other doses and/or other UV sources can be used. A UV dose for curing a hybrid dual cure composition can be, for example, from 0.5 J/cm² to 4 J/cm², from 0.5 J/cm² to 3 J/cm², from 1 J/cm² to 2 J/cm², or from 1 J/cm2 to 1.5 J/cm².

A hybrid dual cure composition provided by the present disclosure can also be cured with radiation at blue wavelength ranges such as from an LED.

Actinic radiation can be applied to a hybrid dual cure composition at any time during the curing process. For example, actinic radiation can be applied to an applied sealant shortly after application or at any time while the hybrid dual cure composition is curing. For example, it can be desirable to coat a large surface area with a sealant and then expose the entire surface to actinic radiation. Actinic radiation can be applied once or several times during the curing process. In general, exposing the sealant to actinic radiation will cure the sealant to a certain depth. The depth of cure induced by the actinic radiation can depend on a number of factors such as, for example, the sealant formulation, the filler content and type, and the irradiation conditions. Actinic radiation can be applied to the sealant at any time during the cure. A hybrid dual cure composition provided by the present disclosure can also cure upon exposure to room lighting.

After exposing to actinic radiation, an exposed hybrid dual cure composition can be allowed to fully cure to a maximum hardness.

The azo polymerization initiators included in a hybrid dual cure composition provided by the present disclosure can be selected to provide desired cured profiles to achieve a fully cured composition at a temperature from 20 °C to 25 °C.

An exposed hybrid dual cure composition provided by the present disclosure can be allowed to cure under ambient conditions, where ambient conditions refers to a temperature from 20 °C to 25 °C, and atmospheric humidity such as 50%RH. A hybrid dual cure composition can be cured under conditions encompassing a temperature range from a 0 °C to 100 °C and a humidity from 0% relative humidity to 100% relative humidity. A hybrid dual cure composition may be cured at an elevated temperature such as, for example, greater than 25 °C, greater than 30 °C, greater than 40 °C, or greater than 50 °C. A composition may be cured at room temperature, e.g., 23 °C.

After the cure time, the hardness of the hybrid dual cure composition will continue to increase until the composition is fully cured. A fully cured sealant can have a hardness, for example from Shore 40A to Shore 80A, from Shore 45A to Shore 70A, or from Shore 50A to Shore 60A. Following curing to a hardness of Shore 30A, the composition can fully curie within, for example, from 1 day to 6 weeks, from 3 days to 5 weeks, from 4 days to 4 weeks, or from 1 week to 3 weeks.

A hybrid dual cure composition provided by the present disclosure can be formulated as a sealant.

A sealant composition refers to a composition that is capable of producing a cured material that has the ability to resist atmospheric conditions, such as moisture and temperature and at least partially block the transmission of materials, such as water, fuel, and other liquid and gasses. A sealant composition of the present disclosure can be useful, for example, as aerospace sealants.

A hybrid dual cure sealant composition provided by the present disclosure can be formulated as Class A, Class B, or Class C sealants. A Class A sealant refers to a brushable sealant having a viscosity of 1 poise to 500 poise (0.1 Pa-sec to 50 Pa-sec) and is designed for brush application. A Class B sealant refers to an extrudable sealant having a viscosity from 4,500 poise to 20,000 poise (450 Pa-sec to 2,000 Pa-sec).and is designed for application by extrusion via a pneumatic gun. A Class B sealant can be used to form fillets and sealing on vertical surfaces or edges where low slump/slag is required. A Class C sealant has a viscosity from 500 poise to 4,500 poise (50 Pa-sec to 450 Pa-sec) and is designed for application by a roller or combed tooth spreader. A Class C sealant can be used for fay surface sealing. Viscosity can be measured according to Section 5.3 of SAE Aerospace Standard AS5127/1C published by SAE International Group.

A sealant composition can comprise prepolymers and monomers having a high sulfur content such as a sulfur content greater than 10 wt% as disclosed herein.

A cured hybrid dual cure composition can exhibit a tensile strength, for example, greater than 1.38 MPa [200 psi], greater than 2.07 MPa [300 psi], or greater than 2.76 MPa [400 psi], where tensile strength is determined according to AS5127/1(7.7).

A cured hybrid dual cure composition can exhibit a % elongation, for example, greater than 250%, greater than 300%, greater than 350%, or greater than 400%, where the tensile elongation is determined according to AS5127/1(7.7).

A hybrid dual cure composition provided by the present disclosure, such as a cured sealant, can exhibit properties acceptable for use in aerospace sealant applications. In general, it is desirable that sealants used in aviation and aerospace applications exhibit the following properties: peel strength greater than 3.50 N/mm [20 pounds per linear inch (pli)] on Aerospace Material Specification (AMS) 3265B substrates determined under dry conditions, following immersion in JRF Type I for 7 days, and following immersion in a solution of 3% NaCl according to AMS 3265B test specifications; tensile strength between 300 pounds per square inch (psi) and 2.76 MPa [400 psi]; tear strength greater than 8.76 N/mm [50 pounds per linear inch (pli)]; elongation between 250% and 300%; and hardness greater than 40 Durometer A. These and other cured sealant properties appropriate for aviation and aerospace applications are disclosed in AMS 3265B. It is also desirable that, when cured, compositions provided by the present disclosure used in aviation and aircraft applications exhibit a percent volume swell not greater than 25% following immersion for one week at 60 °C (140 °F) at 760 torr (101 kPa) in Jet Reference Fluid (JRF) Type 1. Other properties, ranges, and/or thresholds may be appropriate for other sealant applications.

A hybrid dual cure composition provided by the present disclosure can provide a cured sealant exhibiting a tensile elongation of at least 200% and a tensile strength of at least 1.38 MPa [200 psi] when measured in accordance with the procedure described in AMS 3279, § 3.3.17.1, test procedure AS5127/1, § 7.7. In general, for a Class A sealant there is no tensile and elongation requirement. For a Class B sealant, as a general requirement, tensile strength is equal to or greater than 200 psi (1.38 MPa) and elongation is equal to or greater than 200%. Acceptable elongation and tensile strength can be different depending on the application.

A hybrid dual cure composition can provide a cured product, such as a sealant, that exhibits a lap shear strength of greater than 200 psi (1.38 MPa), such as at least 220 psi (1.52 MPa), at least 250 psi (1.72 MPa), and, in some cases, at least 400 psi (2.76 MPa), when measured according to the procedure described in SAE AS5127/1 paragraph 7.8.

A cured sealant prepared from a hybrid dual cure composition provided by the present disclosure can meet or exceeds the requirements for aerospace sealants as set forth in AMS 3277.

A sealant refers to a curable composition that has the ability when cured to resist atmospheric conditions such as moisture and temperature and at least partially block the transmission of materials such as water, water vapor, fuel, solvents, and/or liquids and gases.

The chemical resistance can be with respect to cleaning solvents, fuels, hydraulic fluids, lubricants, oils, and/or salt spray. Chemical resistance refers to the ability of a part to maintain acceptable physical and mechanical properties following exposure to atmospheric conditions such as moisture and temperature and following exposure to chemicals such as cleaning solvents, fuels, hydraulic fluid, lubricants, and/or oils. In general, a chemically resistant sealant can exhibit a % swell less than 25%, less than 20%, less than 15%, or less than 10%, following immersion in a chemical for 7 days at 70 °C, where % swell is determined according to EN ISO 10563.

A cured hybrid dual cure composition provided by the present disclosure can be fuel resistant. "Fuel resistant" means that a composition, when applied to a substrate and cured, can provide a cured product, such as a sealant, that exhibits a percent volume swell of not greater than 40%, in some cases not greater than 25%, in some cases not greater than 20%, and in other cases not more than 10%, after immersion for one week at 140 °F (60 °C) and 760 torr (101 kPa) in JRF Type I according to methods similar to those described in ASTM D792 (American Society for Testing and Materials) or AMS 3269 (Aerospace Material Specification). JRF Type I, as employed for determination of fuel resistance, has the following composition: toluene: 28 ± 1% by volume; cyclohexane (technical): 34 ± 1% by volume; isooctane: 38 ± 1% by volume; and tertiary dibutyl disulfide: 1 ± 0.005% by volume (see AMS 2629, issued July 1, 1989, § 3.1.1., available from SAE (Society of Automotive Engineers)).

Following exposure to Jet Reference Fluid (JRF Type 1) according to ISO 1817 for 168 hours at 60 °C, a cured composition provided can exhibit a tensile strength greater than 1.4 MPa determined according to ISO 37, a tensile elongation greater than 150% determined according to ISO 37, and a hardness greater than Shore 30A determined according to ISO 868, where the tests are performed at a temperature of 23 °C, and a humidity of 55%RH.

Following exposure to de-icing fluid according to ISO 11075 Type 1 for 168 hours at 60 °C, a cured composition can exhibit a tensile strength greater than 1 MPa determined according to ISO 37, and a tensile elongation greater than 150% determined according to ISO 37, where the tests are performed at a temperature of 23 °C, and a humidity of 55%RH.

Following exposure to phosphate ester hydraulic fluid (Skydrol^{®} LD-4) for 1,000 hours at 70 °C, a cured composition can exhibit a tensile strength greater than 1 MPa determined according to ISO 37, a tensile elongation greater than 150% determined according to ISO 37, and a hardness greater than Shore 30A determined according to ISO 868, where the tests are performed at a temperature of 23°C, and a humidity of 55%RH. A chemically resistant composition can exhibit a % swell less than 25%, less than 20%, less than 15%, or less than 10%, following immersion in a chemical for 7 days at 70 °C, where % swell is determined according to EN ISO 10563.

A cured composition can exhibit a hardness, for example, greater than Shore 20A, greater than Shore 30A, greater than Shore 40A, greater than Shore 50A, or greater than Shore 60A, where hardness is determined according to ISO 868 at 23 °C/55%RH.

A curd composition can exhibit a tensile elongation of at least 200% and a tensile strength of at least 1.38 MPa [200 psi] when measured in accordance with the procedure described in AMS 3279, § 3.3.17.1, test procedure AS5127/1, § 7.7.

A cured composition can exhibit a lap shear strength of greater than 200 psi (1.38 MPa), such as at least 220 psi (1.52 MPa), at least 250 psi (1.72 MPa), and, in some cases, at least 400 psi (2.76 MPa), when measured according to the procedure described in SAE AS5127/1 paragraph 7.8.

A cured composition provided by the present disclosure can exhibit 100% cohesion at a load, for example, from 20 lbs/in (35 N/cm) to 100 lbs/in (175 N/cm), or from 40 lbs/in (70 N/cm) to 60 lbs/in (105 N-cm) to anodized aluminum, stainless steel, titanium, and polyurethane substrates, wherein adhesion is determined according to AS5127.

A cured composition provided by the present disclosure can exhibit 100% cohesion at a load, for example, greater than 20 lbs/in (35 N/cm), greater than 40 lbs/in (70 N/cm), greater than 60 lbs/in (105 N/cm), greater than 80 lbs/in (140 N/cm), or greater than 100 lbs/in (175 N/cm) to anodized aluminum, stainless steel, titanium, and polyurethane substrates, wherein adhesion is determined according to AS5127.

A cured composition prepared from a hybrid dual cure composition provided by the present disclosure can meet or exceed the requirements for aerospace sealants as set forth in AMS 3277.

A hybrid dual cure composition provided by the present disclosure can be used to fabricate layers such as sealant layers, coatings, and objects.

A hybrid dual cure composition provided by the present disclosure can be used to fabricate a part in the form of a layer or more than one layer. For example, the layer can be a coating, a sealant layer, an interface, or an overlayer. **In** other words, a part includes substantially two-dimensional parts as well as three-dimensional parts. A sealant layer can comprise an vehicles sealant layer such as an aerospace sealant layer. The sealant layer, for example, can be in the form of a sealing component such as a gasket or can be in the form of a sheet of sealant material applied to a surface or a portion of a surface.

Apertures, surfaces, joints, fillets, fay surfaces including apertures, surfaces, fillets, joints, and fay surfaces of aerospace vehicles, sealed with compositions provided by the present disclosure are also disclosed. A hybrid dual cure composition provided by the present disclosure can be used to seal a part. A part can include multiple surfaces and joints. A part can include a portion of a larger part, assembly, or apparatus. A portion of a part can be sealed with a composition provided by the present disclosure or the entire part can be sealed.

A hybrid dual cure composition provided by the present disclosure can be used to seal parts exposed or potentially exposed to fluids such as solvents, hydraulic fluids, and/or fuel.

A hybrid dual cure composition provided by the present disclosure can be used to seal parts and surfaces of vehicles such as fuel tank surfaces and other surfaces exposed to or potentially exposed to aerospace solvents, aerospace hydraulic fluids, and aerospace fuels.

A hybrid dual cure composition provided by the present disclosure can be used to fabricate any suitable object.

For example, a hybrid dual cure composition can be used to fabricate a sealing component such as a seal cap or a gasket.

A hybrid dual cure composition provided by the present disclosure can be used to seal a part including a surface of a vehicle.

The present invention includes parts sealed with a hybrid dual cure composition provided by the present disclosure, and assemblies and apparatus comprising a part sealed with a composition provided by the present disclosure.

The present invention includes vehicles comprising a part such as a surface sealed with a composition provided by the present disclosure. For example, an aircraft comprising a fuel tank or portion of a fuel tank sealed with a sealant provided by the present disclosure is included within the scope of the invention.

Sealing components can be used to seal the interface from liquids and solvents, can be used to accommodate non-planarity between opposing surfaces, and/or can conform to changes in the relative position of the opposing surfaces during use. Examples of sealing components include gaskets, shims, washers, grommets, O-rings, spacers, packing, cushions, mating material, flanges, and bushings.

A hybrid dual cure composition provided by the present disclosure can be used to fabricate a seal cap. Seal caps provided by the present disclosure can be used to seal fasteners. Examples of fasteners include anchors, cap screws, cotter pins, eyebolts, nuts, rivets, self-clinching fasteners, self-tapping screws, sockets, thread cutting screws, tum and wing screws, weld screws, bent bolts, captive panel fasteners, machine screws, retaining rings, screw driver insert bits, self-drilling screws, SEMS, spring nuts, thread rolling screws, and washers.

A fastener can be a fastener on the surface of a vehicle including, for example, motor vehicles, aerospace vehicles, automobiles, trucks, buses, vans, motorcycles, scooters, recreational motor vehicles; railed vehicles trains, trams, bicycles, airplanes, rockets, spacecraft, jets, helicopters, military vehicles including jeeps, transports, combat support vehicles, personnel carriers, infantry fighting vehicles, mine-protected vehicles, light armored vehicles, light utility vehicles, military trucks, watercraft including ships, boats, and recreational watercraft. The term vehicle is used in its broadest sense and includes all types of aircraft, spacecraft, watercraft, and ground vehicles. For example, a vehicle can include aircraft such as airplanes including private aircraft, and small, medium, or large commercial passenger, freight, and military aircraft; helicopters, including private, commercial, and military helicopters; aerospace vehicles including rockets and other spacecraft. A vehicle can include a ground vehicle such as, for example, trailers, cars, trucks, buses, vans, construction vehicles, golf carts, motorcycles, bicycles, trains, and railroad cars. A vehicle can also include watercraft such as, for example, ships, boats, and hovercraft.

A seal cap can be used to seal fasteners. Examples of fasteners include anchors, cap screws, cotter pins, eyebolts, nuts, rivets, self-clinching fasteners, self-tapping screws, sockets, thread cutting screws, tum and wing screws, weld screws, bent bolts, captive panel fasteners, machine screws, retaining rings, screw driver insert bits, self-drilling screws, sems, spring nuts, thread rolling screws, and washers.

A seal cap can have properties suitable for a specific use application. Relevant properties include chemical resistance, low-temperature flexibility, hydrolytic stability, high temperature resistance, tensile strength, %elongation, substrate adhesion, adhesion to an adjoining sealant layer, tack-free time, time to Shore 10A hardness, electrical conductivity, static dissipation, thermal conductivity, low-density, corrosion resistance, surface hardness, fire retardance, UV resistance, rain erosion resistance, dielectric breakdown strength, and combinations of any of the foregoing.

For aerospace applications, useful properties can include, chemical resistance such as resistance to fuels, hydraulic fluids, oils, greases, lubricants and solvents, low temperature flexibility, high temperature resistance, ability to dissipate electrical charge, and/or dielectric breakdown strength. When fully cured a seal cap can be visually transparent to facilitate visual inspection of the interface between a fastener and the sealant.

When fully cured the shell and the interior volume comprising the cured second composition can exhibit one or more different properties. For example, the shell can exhibit chemical resistance, electrical conductivity, hydrolytic stability, high dielectric breakdown strength, or a combination of any of the foregoing. For example, when cured, the second composition can exhibit adhesion to a fastener, chemical resistance, low-density, high tensile strength, high %elongation, or a combination of any of the foregoing.

A hybrid dual cure composition provided by the present disclosure can be used to fabricate parts using three-dimensional printing.

A three-dimensional printing apparatus for fabricating a part can comprise one or more pumps, one or more mixers, one or more nozzles, one or more material reservoirs, and automated control electronics.

A three-dimensional printing apparatus can comprise pressure controls, extrusion dies, coextrusion dies, coating applicators, temperature control elements, elements for irradiating a hybrid dual cure composition, or combinations of any of the foregoing.

A three-dimensional printing apparatus can comprise an apparatus such as a gantry for moving a nozzle with respect to a surface. The apparatus can be controlled by a processor.

A hybrid dual cure composition can be deposited using any suitable three-dimensional printing equipment. The selection of suitable three-dimensional printing can depend on a number of factors including the deposition volume, the viscosity of the A hybrid dual cure composition, the deposition rate, the gel time of the composition, and the complexity of the part being fabricated. A nozzle can be coupled to the mixer and the mixed A hybrid dual cure composition can be pushed under pressure or extruded through the nozzle.

A pump can be, for example, a positive displacement pump, a syringe pump, a piston pump, or a progressive cavity pump. The two pumps delivering the two reactive components can be placed in parallel or placed in series. A suitable pump can be capable of pushing a liquid or viscous liquid through a nozzle orifice. This process can also be referred to as extrusion.

A hybrid dual cure composition can be premixed and deposited using three-dimensional printing to fabricate an object. A hybrid dual cure composition can be provided as a two-part composition and combined and mixed before building an object. For, example Part A and Part B as described in Example 1 can be provided as separate coreactive components and combined and mixed prior to use.

For example, the two or more coreactive components can be deposited by dispensing materials through a disposable nozzle attached to a progressive cavity two-component system where the coreactive components are mixed in-line. A two-component system can comprise, for example, two progressive cavity pumps that separately dose reactants into a disposable static mixer dispenser or into a dynamic mixer. Other suitable pumps include positive displacement pumps, syringe pumps, piston pumps, and progressive cavity pumps. After mixing the two or more coreactive components to form a coreactive composition, the coreactive composition is formed into an extrudate as it is forced under pressure through one or more dies and/or one or nozzles to be deposited onto a base to provide an initial layer of a vehicle part, and successive layers can be deposited adjacent a previously deposited layer. The deposition system can be positioned orthogonal to the base, but also may be set at any suitable angle to form the extrudate such that the extrudate and deposition system form an obtuse angle with the extrudate being parallel to the base. The extrudate refers to the coreactive composition after the coreactive components are mixed, for example, in a static mixer or in a dynamic mixer. The extrudate can be shaped upon passing through a die and/or nozzle.

The base, the deposition system, or both the base and the deposition system may be moved to build up a three-dimensional article. The motion can be made in a predetermined manner, which may be accomplished using any suitable CAD/CAM method and apparatus such as robotics and/or computerize machine tool interfaces.

An extrudate may be dispensed continuously or intermittently to form an initial layer and successive layers. For intermittent deposition, a deposition system may interface with a switch to shut off the pumps, such as the progressive cavity pumps and interrupt the flow of one or more of the coreactive components and/or the hybrid dual cure composition.

A hybrid dual cure composition provided by the present disclosure can be used in vehicle applications.

A sealing component can be used to seal adjoining surface on a vehicle such as an automotive vehicle or an aerospace vehicle.

A vehicle can include, for example, motor vehicles, automobiles, trucks, buses, vans, motorcycles, scooters, recreational motor vehicles; railed vehicles trains, trams, bicycles, aerospace vehicles, airplanes, rockets, spacecraft, jets, helicopters, military vehicles including jeeps, transports, combat support vehicles, personnel carriers, infantry fighting vehicles, mine-protected vehicles, light armored vehicles, light utility vehicles, military trucks, watercraft including ships, boats, and recreational watercraft. The term vehicle is used in its broadest sense and includes all types of aircraft, spacecraft, watercraft, and ground vehicles. For example, a vehicle can include, aircraft such as airplanes including private aircraft, and small, medium, or large commercial passenger, freight, and military aircraft; helicopters, including private, commercial, and military helicopters; aerospace vehicles including, rockets and other spacecraft. A vehicle can include a ground vehicle such as, for example, trailers, cars, trucks, buses, vans, construction vehicles, golf carts, motorcycles, bicycles, trains, and railroad cars. A vehicle can also include watercraft such as, for example, ships, boats, and hovercraft.

A vehicle can be an aerospace vehicle. Examples of aerospace vehicles include F/A-18 jet or related aircraft such as the F/A-18E Super Hornet and F/A-18F; in the Boeing 787 Dreamliner, 737, 747, 717 passenger jet aircraft, a related aircraft (produced by Boeing Commercial Airplanes); in the V-22 Osprey; VH-92, S-92, and related aircraft (produced by NAVAIR and Sikorsky); in the G650, G600, G550, G500, G450, and related aircraft (produced by Gulfstream); and in the A350, A320, A330, and related aircraft (produced by Airbus). A hybrid dual cure composition can be sued with to seal or fabricate a part used in any suitable commercial, military, or general aviation aircraft such as, for example, those produced by Bombardier Inc. and/or Bombardier Aerospace such as the Canadair Regional Jet (CRJ) and related aircraft; produced by Lockheed Martin such as the F-22 Raptor, the F-35 Lightning, and related aircraft; produced by Northrop Grumman such as the B-2 Spirit and related aircraft; produced by Pilatus Aircraft Ltd.; produced by Eclipse Aviation Corporation; or produced by Eclipse Aerospace (Kestrel Aircraft).

Vehicles such as automotive vehicles and aerospace vehicles comprising sealed with a sealing component fabricated using a method provided by the present disclosure are also included within the scope of the invention.

### EXAMPLES

Embodiments provided by the present disclosure are further illustrated by reference to the following examples, which describe the compositions provided by the present disclosure and uses of such compositions. It will be apparent to those skilled in the art that many modifications, both to materials and methods, may be practiced without departing from the scope of the disclosure.

### Example 1

### Hybrid dual Cure Composition

A hybrid dual cure sealant composition was prepared by combining Part A and Part B.

The constituents of Part A are listed in Table 1 and the constituents of Part B are listed in Table 2.

**Table 1. Part A component.**

| Part A | |
|---|---|
| Constituent | Amount wt% |
| Cycloaliphatic bis(alkenyl)ether | 66.6 |
| Hydroxyl-functional vinyl ether | 9.1 |
| UV photoinitiator | 1.5 |
| Hydroxyl-functional polybutadiene | 8.1 |
| Calcium Carbonate | 0.9 |
| Fumed Silica | 9.8 |
| PDMS-treated Fumed Silica | 4.0 |

**Table 2. Part B component.**

| Part B | |
|---|---|
| Constituent | Amount wt% |
| Permapol^{®} P-3.1E | 57.4 |
| Permapol^{®} P-3.1E-2.8 functional | 13.9 |
| Trifunctional Polythiol | 2.5 |
| Organic filler | 5.4 |
| Fumed silica | 1.9 |
| PDMS-treated fumed silica | 2.2 |
| Silica Gel | 16.4 |
| Low-density filler | 0.2 |
| Organo-functional polyalkoxysilane | 0.1 |

Part A and Part B were combined and mixed to form a curable sealant composition.

The amounts of Part A, Part B, the transition metal complex, polyepoxide, polyamine, and organic peroxide used to prepare (comparative) Sealants 1-8 is provided in Table 3. Sealant Samples 2, 3, 5, and 7 do not comprise a polyepoxide and are comparative.

For (comparative) Sealants 2, 3, and 5-8, before combining Parts A and B, the transition metal complex, organic peroxide, polyepoxide, and polyamine were added to Part B before mixing Parts A and B.

For Sealant 1, before combining and mixing Parts A and B, the transition metal complex was mixed into Part B, and the organic peroxide and polyepoxide were mixed into Part A.

For Sealant 4, before combining and mixing Parts A and B, the transition metal complex and polyamine were mixed into Part B, and the organic peroxide and the polyepoxide were mixed into Part A.

**Table 3. Sealant compositions.**

| Sealant Sample | Part A (g) | Part B (g) | Transition Metal Complex | Polyepoxide | Polyamine | Organic Peroxide |
|---|---|---|---|---|---|---|
| 2* | 8.37 | 100.00 | Part B | 0 | 0 | Part B |
| 8 | 8.37 | 100.00 | Part B | Part B | 0 | Part B |
| 3* | 8.37 | 100.00 | Part B | 0 | Part B | Part B |
| 4 | 8.37 | 100.00 | Part A | Part B | Part A | Part B |
| 5* | 8.37 | 100.00 | Part B | 0 | 0 | Part B |
| 1 | 8.37 | 100.00 | Part A | Part B | 0 | Part B |
| 7* | 8.37 | 100.00 | Part B | 0 | Part B | Part B |
| 6 | 8.37 | 100.00 | Part B | Part B | Part B | Part B |

| | | | | | | |
|---|---|---|---|---|---|---|
| *Comparative Sample | | | | | | |

Properties of the sealant compositions are provided in Table 4. The procedures used to measure the extrusion rate, the tack free time (TFT), and the cure rate are provided in Example 4. The amount of the polyepoxide and/or the polyamine is indicated in Table 4.

**Table 4. Sealant properties.**

| Sealant Sample | Transition Metal Complex (g) | Polyepoxide (g) | Polyamine (g) | Organic Peroxide (g) | Extrusion rate (g/min) | TFT (days) | Cure Rate (Dark Cure) Days / Shore A hardness |
|---|---|---|---|---|---|---|---|
| 2* | 0.005 | 0 | 0 | 1 | 184 | 10 | 15 / 20A |
| 8 | 0.005 | 0.5 | 0 | 1 | 186 | 5 | 12 / 34A |
| 3* | 0.005 | 0 | 0.5 | 1 | 63 | 1 | 5 / 32A |
| 4 | 0.005 | 0.5 | 0.5 | 1 | 89 | 1 | 5 / 31A |
| 5* | 0.03 | 0 | 0 | 1 | 145 | 5 | 12 / 37A |
| 1 | 0.03 | 0.5 | 0 | 1 | 169 | 2 | 7 / 33A |
| 7* | 0.03 | 0 | 0.5 | 1 | 10 | 1 | 5 / 34A |
| 6 | 0.03 | 0.5 | 0.5 | 1 | 35 | 1 | 5 / 36A |

The effect of the polyepoxide/polyamine mix ratio is shown in Table 5. Sealant 9 contained 0.5 g of a polyepoxide and 0.5 g of a polyamine; Sample 10 contained 0.7 g of a polyepoxide and 0.33 g of a polyamine, and Sealant 11 contained 0.33 g of a polyepoxide and 0.66 g of a polyamine. The concentration of the transition metal and the organic peroxide was the same in each composition. The sealant compositions were the same as described in Example 1. The extrusion rate, the tack free time (TFT), and the cure rate were measured as described in Example 4.

**Table 5. Effect of polyepoxide/polyamine ratio on sealant properties.**

| Sealant Sample | Polyepoxide/Polyamine Ratio (wt/wt) | TFT (Dark cure) (hours) | Cure rate (Dark Cure) (Shore A hardness at day 4) | Extrusion rate (g/min) |
|---|---|---|---|---|
| 9 | 1:1 | 20 | 35A | 24 |
| 10 | 2:1 | > 20 | 30A | 103 |
| 11 | 1:2 | 20 | 31A | 24 |

The impact of the amount of transition metal complex, the polyepoxide and the polyamine for the same content of the organic peroxide on the properties of the sealant composition before and after curing are provided in Table 6. For the sealant compositions in Table 6, the amount of the transition metal complex was varied from 0.02 g to 0.20 g and either 0 g or 0.5 g of the polyepoxide and/or 0 g or 0.5 g of the polyamine. The procedures used to measure the extrusion rate (ER), the tack free time (TFT), the cure rate, the depth of cure (DOC), and the tensile strength and % elongation (T/E) following UV exposure or under dark conditions are described in Example 4.

**Table 6. Effect of the amounts of the transition metal complex, the polyepoxide and the polyamine on the sealant properties.**

| Sealant Sample | Transition Metal Complex (g) | Polyep oxide (g) | Polya mine (g) | Orga inic Pero xide (g) | ER (g/min) | TFT (days) | Cure rate (Dark Cure) (days/Shore A) | DOC | T/E (UV) (MPa [psi]/%) | T/E (Dark) (MPa [psi]/%) |
|---|---|---|---|---|---|---|---|---|---|---|
| 12* | 0.02 | 0 | 0 | 1 | 160 | 8 | 21 / 30A | 9.5 | 2.64 [383] / 311 | 1.59 [230] / 349 |
| 13 | 0.02 | 0.5 | 0.5 | 1 | 20 | 1 | 4 / 35A | 8 | 3.20 [464] / 308 | 2.72 [394] / 297 |
| 7* | 0.03 | 0 | 0.5 | 1 | 10 | 1 | 5 / 34A | 8.1 | 2.52 [366] / 412 | 2.76 [401] / 366 |
| 1 | 0.03 | 0.5 | 0 | 1 | 169 | 2 | 7 / 33A | 9.1 | 3.00 [435] / 437 | ¹ - |
| 14* | 0.20 | 0 | 0 | 1 | 96 | 1 | - | 4.1 | - | - |

| | | | | | | | | | | |
|---|---|---|---|---|---|---|---|---|---|---|
| *Comparative Sample ¹ Not measured. | | | | | | | | | | |

### Example 4

### Sample Preparation and Test Methods

### Depth of Cure AS5127 (4)

The jig for measuring the depth of cure had a thickness greater than 0.375 in (9.5 mm) and was made from opaque polytetrafluoroethylene (PTFE). The jig had a bottom orifice masked off with masking tape flush with the jig. The sealant samples were extruded into the jig, completely filling the orifice and leveled to the surface of the jig. The sealant was then cured under UV light. The sealant was allowed to stabilize at standard conditions in accordance with AS5127 (4) for a minimum of 10 min. The masking tape was removed from the underside of the jig and extra uncured sealant was removed. The maxima depth of cured material was measured.

### Tack Free Time (AS5127/1 (5.8))

The following method as described in AS5127/1 (5.8) was used to measure the tack free time.

A metal or plastic substrate was cleaned in accordance with AS5127 (6.1). Sealant was applied to the substrate at a minimum thickness of 0.125 in (3.18 mm) and cured at standard conditions under darkness in accordance with AS5127 (4).

To determine whether the surface of the sealant composition was tack free, a single 1 inch × 7 inch (25 mm × 178 mm) strip of low density polyethylene film 0.005 in ± 0.002 in (0.13 mm ± 0.05 mm) thick, cleaned with AMS3819 cloth wipes and cleaning solvent conforming to AMS3167, was applied onto the sealant surface such that the plastic was in intimate contact with the sealant, and held in place with a minimum pressure of 0.5 oz/in² (0.0002 N/mm²) for 2 min. The strip was then slowly and evenly peeled back at right angles to the sealant surface. When the surface was tack free, the polyethylene comes away clean and free from the sealant.

### Tensile Strength and % Elongation (AS5127/1(7.7))

The following method as described in AS5127/1(7.7) was used to measure the tensile strength and % elongation.

A 0.125-in ± 0.015-in (3.18 mm ± 0.4 mm) thick sheet of sealant was prepared by pressing freshly mixed sealant between two plates covered with two transparent low-density polyethylene release sheets avoiding air entrapment and voids. The top plate was removed, and the sealant cured through the polyethylene sheet under UV light or under darkness at 77 ± 5 °F (25 ± 3 °C) and 50 ± 5%RH in accordance with AS5127.

Tensile specimens were cut from the cured sheet using Die C as specified in ASTM D412. The tensile and elongation tests were measured at standard test conditions in accordance with AS5127 and tested in accordance with ASTM D412 using a jaw separation rate of 20 in ± 1 in (508 mm ± 25 mm) per minute.

### Application Time (AS5127/1 (5.6))

The mixed sealant was filled into a sealing gun cartridge having a nozzle with an orifice of 0.125 in ± 0.010 in (3.18 mm ± 0.25 mm) and a length of 4.0 in ± 0.1 in (102 mm ± 2.5 mm). The sealing gun and sealant were maintained at standard conditions in accordance with AS5127 throughout the test.

The sealing gun was attached to a constant air supply of 90 psi ± 5 psi (621 kPa ± 34 kPa). From 2 in to 3 in (51 mm to 76 mm) of the sealant was extruded initially to clear any entrapped air. The sealant was extruded onto a previously weighed receptacle for 60 sec ± 1 sec and the weight of extruded sealant determined within ±0.1 g, and the extrusion rate was determined.

### Cure Rate (AS5127/1 (6.2))

The instantaneous Shore A hardness was determined in accordance with ASTM D2240 on a sample of cured sealant having a thickness of 0.25 in (6.4 mm).

### Solvent Resistance and Thermal Aging

The properties of sealant compositions was determined following thermal aging of the compositions following immersion in JRF Type I for 3 at 60 °C (140 °F) according to AMS2629, followed by 3 days at (49 °C) 120 °F, and followed by 7 days at (141 °C) 285 °F.

### Example 5

### Hybrid Dual Cure Composition with Tertiary Amine Base

A hybrid dual cure sealant composition was prepared by combining Part A and Part B.

The constituents of Part A are listed in Table 7 and the constituents of Part B are listed in Table 8.

**Table 7. Part A composition.**

| Component | Weight % |
|---|---|
| Tri(ethylene glycol) divinyl ether | 57.14 |
| 4-Hydroxybutyl vinyl ether | 7.64 |
| Photoinitiator (Darocur^{®} TPO) | 0.25 |
| Photoinitiator (Irgacure^{®} 651) | 1.00 |
| Hydroxyl Terminated Polybutadiene | 6.67 |
| Calcium Carbonate | 0.73 |
| Cab-o-sil^{®} TS720 | 8.14 |
| Aerosil^{®} R202 | 3.33 |
| ¹ Polyepoxide | 15.01 |

**Table 8. Part B composition.**

| Component | Weight % |
|---|---|
| ² Permapol^{®} P-3.1E (2.2 functional) | 57.39 |
| ² Permapol^{®} P-3.1E (2.8 functional) | 13.85 |
| Thiocure^{®} 331 / TEMPIC | 2.49 |
| Trithiol MW 526 | |
| Acumist^{®} A6 | 5.38 |
| Cab-o-sil^{®} M5 | 1.94 |
| Aerosil^{®} R202 | 2.22 |
| Gasil^{®} IJ35 | 16.35 |
| Expancel^{®} 920 DE40 D30 | 0.25 |
| Silquest^{®} A -189 silane | 0.13 |
| ³ Base | (0.38) |

| | |
|---|---|
| ¹ Sealants 1, 2, and 5: Epon^{®} 828; Sealants 3 and 4: Erisys^{®} GE-21. ² Permapol^{®} 3.1e(2.2) and Permapol^{®} 3.1e (2.8) available from PPG Aerospace. ³ Sealants 2 and 4: DABCO^{®} 33-LV; Sealant 5: 1-Benzyl-2-methyl-1*H*-imidazole. | |

Part A and Part B were combined and mixed to form a curable sealant composition.

The amounts of Part A, Part B, the polyepoxide and tertiary amine base to prepare Sealants 1-5 is provided in Table 9.

Before combining Parts A and B, the polyepoxide was added to Part A and the tertiary amine base was added to Part B before mixing Parts A and B.

**Table 9. Polyepoxide and tertiary amine base content of Part A and Part B compositions**

| Component | Sealant 1 | Sealant 2 | Sealant 3 | Sealant 4 | Sealant 5 |
|---|---|---|---|---|---|
| Part A Composition | | | | | |
| ¹ Epon^{®} 828 (wt%) | 15.01 | 15.01 | ⁴ - | - | 15.01 |
| ² Erisys^{®} GE-21 (wt%) | - | - | 15.01 | 15.01 | - |

| Part B Composition | | | | | |
|---|---|---|---|---|---|
| ³ DABCO^{®} 33-LV (wt%) | - | 0.38 | - | 0.38 | - |
| 1-Benzyl-2-methyl-1H-imidazole (wt%) | - | - | - | - | 0.38 |
| | | | | | |
| Mix Ratio (Part B to Part A) | 100: 9.88 | 100 : 9.85 | 100 : 9.88 | 100 : 9.85 | 100 : 9.85 |

| | | | | | |
|---|---|---|---|---|---|
| ¹ Difunctional polyepoxide, MW 855 ² Difunctional polyepoxide epoxidized butanediol; 1,4-butanediol diglycidyl ether. ³ Tertiary amine. ⁴ Not added. | | | | | |

The adhesion of the sealants to anodized aluminum (AMS2471), stainless steel (AMS5516), titanium (AMS4911), and polyurethane (AMS-C-27725) substrates was determined according to AS5127. The adhesion of the inventive sealants (Sealants 1-5) was compared to a comparative sealant prepared by combining Part B (Table 11) and Part A (Table 10) in a weight ratio of 100 : 9.85. The comparative sealant did not include a polyamine or a polyepoxide.

**Table 10. Part A comparative sealant composition.**

| Component | Weight % |
|---|---|
| Cyclohexanedimethanol divinyl-ether | 66.64 |
| 4-Hydroxybutyl vinyl ether | 9.11 |
| Photoinitiator (Lucirin^{®} TPO) | 0.30 |
| Photoinitiator (Irgacure^{®} 651) | 1.20 |
| Hydroxyl Terminated Polybutadiene | 8.12 |
| Calcium Carbonate | 0.87 |
| Cab-o-sil^{®} TS720 | 9.77 |
| Aerosil^{®} R202 | 3.99 |

**Table 11. Part B comparative sealant composition.**

| Component | Weight % |
|---|---|
| 3 Polythioether prepolymer (2.2 functional) | 57.39 |
| 3 Polythioether prepolymer (2.8 functional) | 13.85 |
| Thiocure^{®} 331 | 2.49 |
| Acumist^{®} A6 | 5.38 |
| Cab-o-sil^{®} M5 | 1.94 |
| Aerosil^{®} R202 | 2.22 |
| Gasil^{®} IJ35 | 16.35 |
| Expancel^{®} 920 DE40 D30 | 0.25 |
| Silquest^{®} A -189 silane | 0.13 |

An adhesion promoter was applied to the substrates before applying the sealant. The results of the adhesion tests are presented in Table 12.

**Table 12. Adhesion test results.**

| Adherend | Conditioning | Comparative Example | | Sealant 1 | | Sealant 2 | |
|---|---|---|---|---|---|---|---|
| | | Load (N/mm [lbs/in]) | % Cohesion | Load (N/mm [lbs/in]) | % Cohesion | Load (N/mm [lbs/in]) | % Cohesion |
| AMS2471 (Anodized Al) | Heat Cycle per AMS3277 Section 4.6.1.1 | 8.41 [48] | 90 | 7.88 [45] | 100 | 9.28 [53] | 100 |
| | | 5.95 [34] | 60 | 8.58 [49] | 100 | 10.2 [58] | 100 |
| AMS5516 (Stainless Steel) | Heat Cycle per AMS3277 Section 4.6.1.1 | 4.55 [26] | 23 | 8.06 [46] | 100 | 9.63 [55] | 100 |
| | | 2.63 [15] | 10 | 8.41 [48] | 100 | 9.98 [57] | 100 |
| AMS4911 (Titanium) | 70 days @ 60 °C in AMS2629 /SW | 8.06 [46] | 88 | 8.06 [46] | 100 | 9.63 [55] | 100 |
| | | 3.85 [22] | 38 | 8.41 [48] | 100 | 9.98 [57] | 100 |
| AMS-C-27725 (Polyurethane) | 70 days @ 60 °C in AMS2629 /SW | 7.01 [40] | 75 | 8.06 [46] | 100 | 9.63 [55] | 100 |
| | | 7.71 [44] | 58 | 8.41 [48] | 100 | 9.98 [57] | 100 |

**Table 12 (continued). Adhesion test results.**

| Adherend | Conditioning | Sealant 3 | | Sealant 4 | | Sealant 5 | |
|---|---|---|---|---|---|---|---|
| | | Load (lbs/in) | % Cohesion | Load (lbs/in) | % Cohesion | Load (lbs/in) | % Cohesion |
| AMS2471 (Anodized Al) | Heat Cycle per AMS3277 Section 4.6.1.1 | 7.88 [45] | 100 | 9.11 [52] | 100 | 8.41 [48] | 100 |
| | | 8.06 [46] | 100 | 8.77 [50] | 100 | 4.20 [24] | 90 |
| AMS5516 (Stainless Steel) | Heat Cycle per AMS3277 Section 4.6.1.1 | 8.93 [51] | 100 | 8.41 [48] | 100 | 9.11 [52] | 100 |
| | | 9.28 [53] | 100 | 9.63 [55] | 100 | 9.63 [55] | 100 |
| AMS4911 (Titanium) | 70 days @ 60 °C in AMS2629 /SW | 6.48 [37] | 70 | 8.06 [46] | 100 | 7.88 [45] | 100 |
| | | 6.13 [35] | 65 | 8.41 [48] | 100 | 7.36 [42] | 100 |
| AMS-C-27725 (Polyurethane) | 70 days @ 60 °C in AMS2629 /SW | 4.38 [25] | 45 | 7.88 [45] | 100 | 7.01 [40] | 100 |
| | | 3.15 [18] | 38 | 10.2 [58] | 100 | 7.53 [43] | 100 |

## Claims

1. A composition comprising:
a thiol-functional prepolymer;
a polyalkenyl;
a crosslinker comprising a polyepoxide, or a combination of a polyepoxide and a polyamine; and
a free radical polymerization initiator.

2. The composition of claim 1, wherein the composition comprises from 45 wt% to 85 wt% of the thiol-functional prepolymer, wherein wt% is based on the total weight of the composition; and/or
wherein the thiol-functional prepolymer has an average thiol-functionality from 2.1 to 2.9; and/or
wherein the thiol-functional prepolymer has a number average molecular weight from 1,000 Daltons to 10,000 Daltons determined as indicated in the description; and/or
wherein the thiol-functional prepolymer comprises a thiol-functional sulfur-containing prepolymer, wherein the thiol-functional sulfur-containing prepolymer preferably comprises a thiol-functional polythioether prepolymer, a thiol-functional polysulfide prepolymer, a thiol-functional sulfur-containing polyformal prepolymer, a thiol-functional monosulfide prepolymer, or a combination of any of the foregoing; and/or
wherein the composition comprises from 1 wt% to 10 wt% of a polyalkenyl, wherein wt% is based on the total weight of the composition; and/or
wherein the polyalkenyl comprises a polyalkenyl prepolymer, a monomeric polyalkenyl, or a combination thereof; and/or
wherein the polyalkenyl comprises a polyalkenyl ether of Formula (16) a polyalkenyl compound of Formula (14), or a combination thereof:
B(-R¹-O-CH=CH₂)_{z} (16)
B(-R¹-CH=CH₂)_{z} (14)
wherein,
B is a core of an alkenyl polyfunctionalizing agent;
z is an integer from 3 to 6; and
R¹ is an organic moiety selected from C₁₋₆ alkanediyl, C₅₋₁₂ cycloalkanediyl, C₆₋₂₀ alkanecycloalkane-diyl, C₁₋₆ heteroalkanediyl, C₅₋₁₂ heterocycloalkanediyl, C₆₋₂₀ heteroalkanecycloalkane-diyl, substituted C₁₋₆ alkanediyl, substituted C₅₋₁₂ cycloalkanediyl, substituted C₆₋₂₀ alkanecycloalkane-diyl, substituted C₁₋₆ heteroalkanediyl, substituted C₅₋₁₂ heterocycloalkanediyl, and substituted C₆₋₂₀ heteroalkanecycloalkane-diyl; and/or
wherein the polyalkenyl comprises a bis(alkenyl) ether, wherein the bis(alkenyl) ether preferably comprises a bis(alkenyl ether of Formula (17):
CH₂=CH-O-(R²-O-)ₘCH=CH₂ (17)
wherein,
m is an integer from 2 to 6; and
each R² is independently selected from C₁₋₁₀ alkanediyl, C₆₋₈ cycloalkanediyl, C₆₋₁₄ alkanecycloalkanediyl, and -[(CHR³)ₚ-X-]_{q}(CHR³)ᵣ-, wherein,
each R³ is independently selected from hydrogen and methyl;
each X is independently selected from O, S, and NR wherein R is selected from hydrogen and methyl;
p is an integer from 2 to 6;
q is an integer from 1 to 5; and
r is an integer from 2 to 10; and/or
wherein the polyalkenyl has a molecular weight less than 1,000 Daltons;
and/or
wherein the polyalkenyl comprises tri(ethylene glycol) divinyl ether; and/or
wherein the composition comprises from 0.01 wt% to 15 wt% of the crosslinker, wherein wt% is based on the total weight of the composition; and/or
wherein the crosslinker comprises a polyamine, wherein the polyamine preferably has a molecular weight from 150 Daltons to 1,500 Daltons and/or comprises a primary amine, a secondary amine, or a combination thereof and/or a cycloaliphatic polyamine and/or 4,4'-methylene(cyclohexylamine); and/or
wherein the polyepoxide has a molecular weight from 150 Daltons to 1,500 Daltons; and/or
wherein the polyepoxide comprises an aliphatic polyepoxide, an aromatic polyepoxide, or a combination thereof; and/or
wherein the polyepoxide comprises a difunctional polyepoxide; and/or
wherein the polyepoxide comprises a difunctional bisphenol A/epichlorohydrin derived polyepoxide, 1,4-butanediol diglycidyl ether, or a combination thereof; and/or
wherein the composition has a weight ratio of the polyamine to the polyepoxide from 20:1 to 1:20 or from 2:1 to 1:2; and/or
wherein the free radical polymerization initiator comprises an organic peroxide free radical polymerization initiator, an actinic radiation-activated free radical photoinitiator, or a combination thereof; and/or
wherein the composition comprises from 0.01 wt% to 3 wt% of the free radical polymerization initiator, wherein wt% is based on the total weight of the composition; and/or
wherein the free radical polymerization initiator comprises an organic peroxide free radical polymerization initiator, wherein the organic peroxide free radical polymerization initiator preferably comprises *tert*-butyl peroxybenzoate, peroxydicarbonate, or a combination thereof; *tert-*butylperoxy 2-ethylhexyl carbonate, *tert*-amyl peroxy-2-ethylhexyl carbonate, *tert*-butylperoxy isopropyl carbonate, tert-butyl isopropyl monoperoxycarbonate, *tert*-amyl isopropyl monoperoxycarbonate, *tert-*butyl-2 ethyl hexyl monoperoxycarbonate, *tert*-amyl-2-ethyl hexyl monoperoxycarbonate, or a combination of any of the foregoing; or *tert-*butyl peroxy-3,5,5-trimethyl-hexanoate, 1,1-di(tert-butylperoxy)cyclohexane, *tert*-amyl peroxyacetate, *tert*-amylperoxy-(2-ethylhexyl)carbonate, 1,1-di(*tert*-butylperoxy)-3,5,5-trimethylcyclohexane, 1,1-di(*tert*-amylperoxy)cyclohexane, *tert*-butyl-monoperoxy-maleate, 1,1'-azodi(hexahydrobenzonitrile), or a combination of any of the foregoing; and/or
wherein the free radical polymerization initiator comprises an actinic radiation-activated free radical polymerization initiator, wherein the actinic radiation-activated free radical polymerization initiator preferably comprises a photoinitiator, wherein the photoinitiator preferably comprises a UV photoinitiator and/or a visible photoinitiator; and/or wherein the photoinitiator comprises diphenyl (2,4,6-trimethylbenzoyl)-phosphine oxide, 2,2-dimethoxy-2-phenylacetophenone, and a combination thereof.

3. The composition of any one of claims 1 to 2, wherein the composition comprises a transition metal complex,
wherein the transition metal complex preferably comprises a complex of Co(II), Co(III), Mn(II), Mn(III), Fe(II), Fe(III), Cu(II), V(III), or a combination of any of the foregoing; or cobalt(II)bis(2-ethyl hexanoate), manganese(III)(acetylacetonate)₃, iron(III)(acetylacetonate)₃, or a combination of any of the foregoing; and/or
wherein the composition comprises preferably from 0.01 wt% to 3 wt% of the transition metal complex, wherein wt% is based on the total weight of the composition; and/or
wherein the composition comprises a tertiary amine base,
wherein the composition preferably comprises from 0.01 wt% to 5 wt% of the tertiary amine base, wherein wt% is based on the total weight of the composition; and/or
wherein the tertiary amine base preferably comprises 1,4-diazobicyclo[2,2,2]octane, 1-benzyl-2-methyl-1*H*-imidazole, and a combination thereof; and/or
wherein the composition comprises a hydroxyl-functional compound,
wherein the hydroxyl-functional compound preferably has an average hydroxyl functionality from 1.6 to 2.7 and/or comprises a hydroxyl-functional alkenyl ether, a hydroxyl-functional polybutadiene, or a combination thereof,
wherein, the hydroxyl-functional alkenyl ether preferably
- has the structure of Formula (10):
CH₂=CH-O-(CH₂)ₜ-OH (10)
where t is an integer from 2 to 10; and/or
- has a molecular weight from 150 g/mol to 600 g/mol; and/or
- comprises 1-methyl-3-hydroxypropyl vinyl ether, 4-hydroxybutyl vinyl ether, or a combination thereof; and/or
wherein the hydroxyl-functional polybutadiene preferably
- has a OH value from 0.15 to 2.0 meq/g; and/or
- has a number average molecular weight from 1,000 Daltons to 10,000 Daltons; and/or
wherein the composition preferably comprises from 0.1 wt% to 5 wt% of the hydroxyl-functional compound comprising a hydroxyl-functional alkenyl ether, a hydroxyl-functional polybutadiene, or a combination thereof, wherein wt% is based on the total weight of the composition.

4. The composition of any one of claims 1 to 3, wherein,
Option 1:
the crosslinker comprises a polyamine;
the free radical polymerization initiator comprises an organic peroxide free radical polymerization initiator; and
the composition comprises a transition metal complex; or
Option 2:
the composition comprises:
from 45 wt% to 85 wt% of the thiol-functional prepolymer;
from 2 wt% to 10 wt% of the polyalkenyl;
from 0.01 wt% to 15 wt% of the crosslinker; and
from 0.01 wt% to 3 wt% of the free radical polymerization initiator,
wherein wt% is based on the total weight of the composition,
wherein the free radical polymerization initiator preferably comprises an organic peroxide free radical polymerization initiator; and/or
wherein the composition preferably comprises from 0.01 wt% to 3 wt% of the transition metal complex; and/or
Option 3:
the composition comprises from 0.01 wt% to 3 wt% of a tertiary amine base; and
wt% is based on the total weight of the composition,
wherein the composition preferably comprises from 0.1 wt% to 5 wt% of a hydroxyl-functional compound.

5. The composition of any one of claims 1 to 4, wherein,
the thiol-functional prepolymer comprises a thiol-functional polythioether; and
the polyalkenyl comprises a bis(alkenyl) ether.

6. The composition of any one of claims 1 to 5, further comprising a filler,
wherein the filler preferably comprises an inorganic filler, an organic filler, a low-density filler, a conductive filler, or a combination of any of the foregoing; and/or
wherein the composition preferably comprises from 0.1 wt% to 60 wt% of the filler, wherein wt% is based on the total weight of the composition;
and/or from 1 vol% to 60 vol% of the filler, wherein vol% is based on the total volume of the composition; and/or
wherein the composition comprises a thiol-functional polyfunctionalizing agent,
wherein the thiol-functional polyfunctionalizing agent preferably has a molecular weight less than 2,000 Da and/or a thiol functionality from 3 to 6; and/or
wherein the composition preferably comprises from 0.1 wt% to 10 wt% of the thiol-functional polyfunctionalizing agent, wherein wt% is based on the total weight of the composition; and/or
wherein the composition comprises a polyalkynyl,
wherein the composition preferably comprises from 1 wt% to 10 wt% of a polyalkynyl, wherein wt% is based on the total weight of the composition; and/or
wherein the composition comprises a reactive diluent, a plasticizer, an adhesion promoter, a corrosion inhibitor, a fire retardant, a UV stabilizer, an antioxidant, a colorant, a cure indicator, an erosion inhibitor, or a combination of any of the foregoing; and/or
wherein the composition comprises a photochromic agent, and/or
wherein the composition has an extrusion rate greater than 15 g/min at two hours after mixing, as determined according to AS5127/1(5.6) at a temperature of 23 °C; and/or
wherein the composition has a tack free time of less than less than 48 hours, wherein the tack free time is determined according to AS5127/1 (5.8); and/or
wherein the composition has a cure time less than 7 days; and/or
wherein the composition, when cured, exhibits 100% cohesion at a load greater than 20 lbs/in (35 N/cm) to anodized aluminum, stainless steel, titanium, and polyurethane substrates, wherein adhesion is determined according to AS5127.

7. A system for preparing the composition of any one of claims 1 to 6, wherein
the system comprises:
a first component, wherein the first component comprises:
the polyalkenyl; and
the free radical polymerization initiator; and
a second component, wherein the second component comprises:
the thiol-functional prepolymer,
wherein the first component comprises a polyepoxide crosslinker and the second component optionally comprises a polyamine crosslinker,
wherein the composition preferably is formulated as a sealant.

8. A cured composition prepared from the composition of any one of claims 1 to 7.

9. A surface comprising the cured composition of claim 8.

10. A part comprising the cured composition of claim 9,
wherein the part preferably comprises a seal cap, a gasket, and a sealing component and/or an aerospace vehicle part.

11. A vehicle comprising the cured composition of claim 8,
wherein the vehicle preferably is an aerospace vehicle.

12. A method of coating a surface, comprising:
applying the composition of any one of claims 1 to 7 to a surface; and
curing the applied composition to seal the surface.

13. The method of claim 12, wherein coating comprises sealing, and the composition is formulated as a sealant; and/or
wherein curing comprises exposing at least a portion of the applied composition to actinic radiation; and/or
wherein applying comprises three-dimensional printing.

14. A method of fabricating a part, comprising:
forming the composition of any one of claims 1 to 7 into a shape of a part; and
curing the composition to cure to form the part.

15. The method of claim 14, wherein forming comprises coreactive three-dimensional printing and/or extrusion; and/or
wherein curing comprises exposing at least a portion of the applied composition to actinic radiation and/or
wherein curing comprises allowing to cure under dark conditions.

## Patentansprüche

1. Eine Zusammensetzung umfassend:
ein thiolfunktionelles Präpolymer;
ein Polyalkenyl;
einen Vernetzer umfassend ein Polyepoxid oder eine Kombination eines Polyepoxids und eines Polyamins; und
einen freien Radikalpolymerisationsstarter.

2. Die Zusammensetzung gemäß Anspruch 1, wobei die Zusammensetzung von 45 Gew.-% bis 85 Gew.-% des thiolfunktionellen Präpolymers umfasst,
wobei sich Gew.-% auf das Gesamtgewicht der Zusammensetzung bezieht; und/oder
wobei das thiolfunktionelle Präpolymer eine durchschnittliche Thiolfunktionalität von 2,1 bis 2,9 aufweist; und/oder
wobei das thiolfunktionelle Präpolymer ein gewichtsmittleres Molekulargewicht von 1.000 Dalton bis 10.000 Dalton, bestimmt wie in der Beschreibung angegeben, aufweist; und/oder
wobei das thiolfunktionelle Präpolymer ein thiolfunktionelles schwefelhaltiges Präpolymer umfasst, wobei das thiolfunktionelle schwefelhaltige Präpolymer vorzugsweise ein thiolfunktionelles Polythioletherpolymer, ein thiolfunktionelles Polysulfidpräpolymer, ein thiolfunktionelles schwefelhaltiges Polyformalpräpolymer, ein thiolfunktionelles Monosulfidpräpolymer oder eine Kombination von jeglichen der Vorgenannten umfasst; und/oder
wobei die Zusammensetzung von 1 Gew.-% bis 10 Gew.-% eines Polyalkenyls umfasst, wobei Gew.-% sich auf das Gesamtgewicht der Zusammensetzung bezieht; und/oder
wobei das Polyalkenyl ein Polyalkenylpräpolymer, ein monomeres Polyalkenyl oder eine Kombination derselben umfasst; und/oder
wobei das Polyalkenyl einen Polyalkenylether der Formel (16), eine Polyalkenylverbindung der Formel (14) oder eine Kombination derselben umfasst:
B(-R¹-O-CH=CH₂)_{z} (16)
B(-R¹-CH=CH₂)_{z} (14)
wobei
B der Kern eines alkenylpolyfunktionalisierenden Mittels ist;
z eine ganze Zahl von 3 bis 6 ist; und
R¹ eine organische Gruppe ausgewählt aus C₁₋₆-Alkandiyl, C₅₋₁₂-Cyclo-alkandiyl, C₆₋₂₀-Alkancycloalkandiyl, C₁₋₆-Heteroalkandiyl, C₅₋₁₂-Hetero-cycloalkandiyl, C₆₋₂₀-Heteroalkancycloalkandiyl, substituiertem C₁₋₆-Alkan-diyl, substituiertem C₅₋₁₂-Cycloalkandiyl, substituiertem C₆₋₂₀-Alkancyclo-alkandiyl, substituiertem C₁₋₆-Heteroalkandiyl, substituiertem C₅₋₁₂-Hetero-cycloalkandiyl und substituiertem C₆₋₂₀-Heteroalkancycloalkandiyl ist;
und/oder
wobei das Polyalkenyl einen Bis(alkenyl)ether umfasst, wobei der Bis(alkenyl)ether vorzugsweise einen Bis(alkenyl)ether der Formel (17) umfasst:
CH₂=CH-O-(R²-O-)ₘCH=CH₂ (17)
wobei
m eine ganze Zahl von 2 bis 6 ist; und
jedes R² unabhängig aus C₁₋₁₀-Alkandiyl, C₆₋₈-Cycloalkandiyl, C₆₋₁₄-Alkan-cycloalkandiyl und -[(CHR³)ₚ-X-]_{q}(CHR³)ᵣ-, wobei
jedes R³ unabhängig aus Wasserstoff und Methyl ausgewählt ist;
jedes X unabhängig aus O, S und NR ausgewählt ist, wobei R aus Wasserstoff und Methyl ausgewählt ist, ausgewählt ist;
p eine ganze Zahl von 2 bis 6 ist;
q eine ganze Zahl von 1 bis 5 ist; und
r eine ganze Zahl von 2 bis 10 ist, und/oder
wobei das Polyalkenyl ein Molekulargewicht von weniger als 1.000 Dalton aufweist; und/oder
wobei das Polyalkenyl Tri(ethylenglykol)divinylether umfasst; und/oder
wobei die Zusammensetzung von 0,01 Gew.-% bis 15 Gew.-% des Vernetzers umfasst, wobei Gew.-% sich auf das Gesamtgewicht der Zusammensetzung bezieht; und/oder
wobei der Vernetzer ein Polyamin umfasst, wobei das Polyamin vorzugsweise ein Molekulargewicht von 150 Dalton bis 1.500 Dalton aufweist,
und/oder ein primäres Amin, ein sekundäres Amin oder eine Kombination derselben und/oder ein cycloaliphatisches Polyamin und/oder 4,4'-Methylen(cyclohexylamin) umfasst; und/oder
wobei das Polyepoxid ein Molekulargewicht von 150 bis 1.500 Dalton aufweist; und/oder
wobei das Polyepoxid ein aliphatisches Polyepoxid, ein aromatisches Polyepoxid oder eine Kombination derselben umfasst; und/oder
wobei das Polyepoxid ein difunktionelles Polyepoxid umfasst; und/oder
wobei das Polyepoxid ein difunktionelles von Bisphenol A/Epichlorhydrin abgeleitetes Polyepoxid, 1,4-Butandioldiglycidylether oder eine Kombination derselben umfasst; und/oder
wobei die Zusammensetzung ein Gewichtsverhältnis des Polyamins zu dem Polyepoxid von 20:1 bis 1:20 oder von 2:1 bis 1:2 aufweist; und/oder
wobei der freie Radikalpolymerisationsstarter einen freien Radikalpolymerisationsstarter auf Basis eines organischen Peroxids, einen mit actinischer Strahlung aktivierten freien Radikalphotostarter oder eine Kombination derselben umfasst; und/oder
wobei die Zusammensetzung von 0,01 Gew.-% bis 3 Gew.-% des freien Radikalpolymerisationsstarters umfasst, wobei Gew.-% sich auf das Gesamtgewicht der Zusammensetzung bezieht; und/oder
wobei der freie Radikalpolymerisationsstarter einen freien Radikalpolymerisationsstarter auf Basis eines organischen Peroxids umfasst, wobei der freie Radikalpolymerisationsstarter auf Basis eines organisches Peroxids vorzugsweise tert.-Butylperoxybenzoat, Peroxydicarbonat, oder eine Kombination derselben; tert.*-*Butylperoxy-2-ethylhexylcarbonat, tert.-Amylper-oxy-2-ethylhexylcarbonat, tert.-Butylperoxyisopropylcarbonat, tert.-Butyl-isopropylmonoperoxycarbonat, tert.-Amylisopropylmonoperoxycarbonat, tert.-Butyl-2-ethylhexylmonoperoxycarbonat, tert.-Amyl-2-ethylhexylmono-peroxycarbonat oder eine Kombination von jeglichen der Vorgenannten;
oder tert.-Butylperoxy-3,5,5-trimethylhexanoat, 1,1-Di(tert.-butylperoxy)-cyclohexan, tert.-Amylperoxyacetat, tert.-Amylperoxy-(2-ethylhexyl)-carbonat, 1,1-Di(tert.-butylperoxy)-3,5,5-trimethylcyclohexan, 1,1-Di(tert.-amylperoxy)cyclohexan, tert.-Butyl-monoperoxymaleat, 1,1'-Azodi(hexa-hydrobenzonitril), oder eine Kombination von jeglichen der Vorgenannten umfasst; und/oder
wobei der freie Radikalpolymerisationsstarter einen mit actinischer Strahlung aktivierten freien Radikalpolymerisationsstarter umfasst, wobei der mit actinischer Strahlung aktivierte freie Radikalpolymerisationsstarter vorzugsweise einen Photostarter umfasst, wobei der Photostarter vorzugsweise einen UV-Photostarter oder im sichtbaren aktivierbaren Photostarter umfasst und/oder wobei der Photostarter Diphenyl(2,4,6-trimethylbenzoyl)-phosphinoxid, 2,2-Dimethoxy-2-phenylacetophenon und eine Kombination derselben umfasst.

3. Die Zusammensetzung gemäß irgendeinem der Ansprüche 1 bis 2, wobei die Zusammensetzung einen Übergangsmetallkomplex umfasst,
wobei der Übergangsmetallkomplex vorzugsweise einen Komplex von Co(II), Co(III), Mn(II), Mn(III), Fe(II), Fe(III), Cu(II), V(III) oder eine Kombination von jeglichen der Vorgenannten; oder Kobalt(II), Cu(II), V(III) oder eine Kombination von jeglichen der Vorgenannten; oder Kobalt(II)bis(2-ethylhexanoat), Magnesium(III)(acetylacetonat)₃, Eisen(III)(acetylacetonat)₃, oder eine Kombination von jeglichen der Vorgenannten umfasst;
und/oder
wobei die Zusammensetzung vorzugsweise von 0,01 bis 3 Gew.-% des Übergangsmetallkomplexes umfasst, wobei sich Gew.-% auf das Gesamtgewicht der Zusammensetzung bezieht; und/oder
wobei die Zusammensetzung eine tertiäre Aminbase umfasst,
wobei die Zusammensetzung vorzugsweise von 0,01 Gew.-% bis 5 Gew.-% der tertiären Aminbase umfasst, wobei sich Gew.-% auf das Gesamtgewicht der Zusammensetzung bezieht; und/oder
wobei die tertiäre Aminbase vorzugsweise 1,4-Diazobicyclo[2,2,2]octan, 1-Benzyl-2-methyl-1*H*-imidazol und eine Kombination derselben umfasst; und/oder
wobei die Zusammensetzung eine hydroxylfunktionelle Verbindung umfasst, wobei die hydroxylfunktionelle Verbindung vorzugsweise eine durchschnittliche Hydroxylfunktionalität von 1,6 bis 2,7 aufweist und/oder einen hydroxylfunktionellen Alkenylether, ein hydroxylfunktionelles Polybutadien oder eine Kombination derselben umfasst,
wobei der hydroxylfunktionelle Alkenylether vorzugsweise
- die Struktur der Formel (10) aufweist:
CH₂=CH-O-(CH₂)ₜ-OH (10)
wobei t eine ganze Zahl von 2 bis 10 ist; und/oder
- ein Molekulargewicht von 150 g/mol bis 600 g/mol aufweist; und/oder
- 1-Methyl-3-hydroxypropylvinylether, 4-Hydroxybutylvinylether oder eine Kombination derselben umfasst; und/oder
wobei das hydroxyfunktionelle Polybutadien vorzugsweise
- einen OH-Wert von 0,15 bis 2,0 meq/g aufweist; und/oder
- ein gewichtsmittleres Molekulargewicht von 1.000 Dalton bis 10.000 Dalton aufweist; und/oder
wobei die Zusammensetzung vorzugsweise von 0,1 Gew.-% bis 5 Gew.-% der hydroxyfunktionellen Verbindung umfassend einen hydroxyfunktionellen Alkenylether, ein hydroxyfunktionelles Polybutadien oder eine Kombination derselben aufweist, wobei Gew.-% sich auf das Gesamtgewicht der Zusammensetzung bezieht.

4. Die Zusammensetzung gemäß irgendeinem der Ansprüche 1 bis 3, wobei
Option 1:
der Vernetzer ein Polyamin umfasst;
der freie Radikalpolymerisationsstarter einen freien Radikalpolymerisationsstarter auf Basis eines organischen Peroxids umfasst; und
die Zusammensetzung einen Übergangsmetallkomplex aufweist; oder
Option 2:
die Zusammensetzung umfasst:
von 45 Gew.-% bis 85 Gew.-% des thiolfunktionellen Präpolymers;
von 2 Gew.-% bis 10 Gew.-% des Polyalkenyls;
von 0,01 Gew.-% bis 15 Gew.-% des Vernetzers; und
von 0,01 Gew.-% bis 3 Gew.-% des freien Radikalpolymerisationsstarters;
wobei Gew.-% sich auf das Gesamtgewicht der Zusammensetzung bezieht,
wobei der freie Radikalpolymerisationsstarter vorzugsweise einen freien Radikalpolymerisationsstarter auf Basis eines organischen Peroxids umfasst; und/oder
wobei die Zusammensetzung vorzugsweise von 0,01 Gew.-% bis 3 Gew.-% des Übergangsmetallkomplexes umfasst; und/oder
Option 3:
die Zusammensetzung von 0,01 Gew.-% bis 3 Gew.-% einer tertiären Aminbase umfasst; und
Gew.-% sich auf das Gesamtgewicht der Zusammensetzung bezieht,
wobei die Zusammensetzung vorzugsweise von 0,01 Gew.-% bis 5 Gew.-% einer hydroxylfunktionellen Verbindung umfasst.

5. Die Zusammensetzung gemäß irgendeinem der Ansprüche 1 bis 4, wobei
das thiolfunktionelle Präpolymer einen thiolfunktionellen Polythioether umfasst; und
das Polyalkenyl einen Bis(alkenyl)ether umfasst.

6. Die Zusammensetzung gemäß irgendeinem der Ansprüche 1 bis 5, des Weiteren umfassend einen Füllstoff, wobei der Füllstoff vorzugsweise einen anorganischen Füllstoff, einen organischen Füllstoff, einen Füllstoff geringer Dichte, eine leitfähigen Füllstoff oder eine Kombination von jeglichen der Vorgenannten umfasst; und/oder
wobei die Zusammensetzung vorzugsweise von 0,1 Gew.-% bis 60 Gew.-% des Füllstoffs, wobei Gew.-% sich auf das Gesamtgewicht der Zusammensetzung bezieht; und/oder von 1 Vol.-% bis 60 Vol.-% des Füllstoffs, wobei Vol.-% sich auf das Gesamtvolumen der Zusammensetzung bezieht, umfasst; und/oder
wobei die Zusammensetzung ein thiolfunktionelles polyfunktionalisierendes Mittel umfasst,
wobei das thiolfunktionelle polyfunktionalisierende Mittel vorzugsweise ein Molekulargewicht von weniger als 2.000 Dalton und/oder eine Thiolfunktionalität von 3 bis 6 aufweist; und/oder
wobei die Zusammensetzung vorzugsweise von 0,1 Gew.-% bis 10 Gew.-% des thiolfunktionellen polyfunktionalisierenden Mittels umfasst;
wobei Gew.-% sich auf das Gesamtgewicht der Zusammensetzung bezieht; und/oder
wobei die Zusammensetzung ein Polyalkinyl umfasst,
wobei die Zusammensetzung vorzugsweise von 1 Gew.-% bis 10 Gew.-% eines Polyalkinyls umfasst, wobei Gew.-% sich auf das Gesamtgewicht der Zusammensetzung bezieht; und/oder
wobei die Zusammensetzung einen Reaktivverdünner, einen Weichmacher, einen Haftvermittler, einen Korrosionsinhibitor, ein Flammhemmmittel, einen UV-Stabilisator, ein Antioxidationsmittel, ein Färbemittel, einen Härtungsindikator, einen Erosionsinhibitor oder eine Kombination von jeglichen der Vorgenannten umfasst; und/oder
wobei die Zusammensetzung ein photochromes Mittel umfasst; und/oder wobei die Zusammensetzung eine Extrusionsrate von mehr als 15 g/min 2 Std. nach dem Mischen, wie gemäß AS5127/1(5.6) bei einer Temperatur von 23 °C bestimmt, aufweist; und/oder
wobei die Zusammensetzung eine Antrocknungszeit von weniger als 48 Std. aufweist, wobei die Antrocknungszeit gemäß AS5127/1(5.6) bestimmt wird; und/oder
wobei die Zusammensetzung eine Härtungszeit von weniger als 7 Tagen aufweist; und/oder
wobei die Zusammensetzung, wenn gehärtet, 100% Kohäsion bei einer Belastung von mehr als 20 Pfund/Inch (35 N/cm) gegenüber anodisiertem Aluminium, Edelstahl, Titan und Polyurethansubstraten aufweist, wobei die Adhäsion gemäß AS5127 bestimmt wird.

7. Ein System zur Herstellung der Zusammensetzung gemäß irgendeinem der Ansprüche 1 bis 6, wobei das System umfasst:
eine erste Komponente, wobei die erste Komponente umfasst:
das Polyalkenyl; und
den freien Radikalpolymerisationsstarter; und
eine zweite Komponente, wobei die zweite Komponente umfasst:
das thiolfunktionelle Präpolymer;
wobei die erste Komponente einen Polyepoxidvernetzer umfasst und die zweite Komponente wahlweise einen Polyaminvernetzer umfasst,
wobei die Zusammensetzung vorzugsweise als Dichtmittel formuliert ist.

8. Eine gehärtete Zusammensetzung hergestellt aus der Zusammensetzung gemäß irgendeinem der Ansprüche 1 bis 7.

9. Eine Oberfläche umfassend die gehärtete Zusammensetzung gemäß Anspruch 8.

10. Ein Teil umfassend die gehärtete Zusammensetzung gemäß Anspruch 9, wobei der Teil vorzugsweise eine Verschlusskappe, eine Dichtung und ein Dichtelement und/oder einen Luftfahrzeugteil umfasst.

11. Ein Fahrzeug umfassend die gehärtete Zusammensetzung gemäß Anspruch 8, wobei das Fahrzeug vorzugsweise ein Luftfahrzeug ist.

12. Ein Verfahren zum Beschichten einer Oberfläche umfassend:
Aufbringen der Zusammensetzung gemäß irgendeinem der Ansprüche 1 bis 7 auf eine Oberfläche; und
Härten der aufgebrachten Zusammensetzung, um die Oberfläche zu versiegeln.

13. Das Verfahren gemäß Anspruch 12, wobei das Beschichten Abdichten umfasst und die Zusammensetzung als ein Dichtmittel formuliert ist;
und/oder
wobei Härten das Aussetzen mindestens eines Teils der aufgebrachten Beschichtung gegenüber actinischer Strahlung umfasst; und/oder
wobei Aufbringen dreidimensionales Drucken umfasst.

14. Ein Verfahren zur Herstellung eines Teils umfassend:
Bringen der Zusammensetzung gemäß irgendeinem der Ansprüche 1 bis 7 in eine Form eines Teils; und
Härten der Zusammensetzung, um den Teil beim Härten auszubilden.

15. Das Verfahren gemäß Anspruch 14, wobei das Ausbilden coreaktives dreidimensionales Drucken und/oder Extrusion umfasst; und/oder wobei das Härten Aussetzen mindestens eines Teils der aufgebrachten Zusammensetzung gegenüber actinischer Strahlung umfasst; und/oder wobei das Härten ein Härten lassen unter dunklen Bedingungen umfasst.

## Revendications

1. Composition comprenant :
un prépolymère à fonction thiol ;
un polyalcényle ;
un agent de réticulation comprenant un polyépoxyde, ou une association d'un polyépoxyde et d'une polyamine ; et
un amorceur de polymérisation radicalaire.

2. Composition selon la revendication 1, dans laquelle la composition comprend de 45 % en poids à 85 % en poids du prépolymère à fonction thiol, le pourcentage en poids étant par rapport au poids total de la composition ; et/ou
dans laquelle le prépolymère à fonction thiol présente une fonctionnalité thiol moyenne de 2,1 à 2,9 ; et/ou
dans laquelle le prépolymère à fonction thiol a une masse moléculaire moyenne en nombre de 1 000 daltons à 10 000 daltons, déterminée comme indiqué dans la description ; et/ou
dans laquelle le prépolymère à fonction thiol comprend un prépolymère contenant du soufre à fonction thiol, le prépolymère contenant du soufre à fonction thiol comprenant de préférence un prépolymère polythioéther à fonction thiol, un prépolymère polysulfure à fonction thiol, un prépolymère polyformal contenant du soufre à fonction thiol, un prépolymère monosulfure à fonction thiol, ou une association de prépolymères quelconques parmi les précédents ; et/ou
dans laquelle la composition comprend de 1 % en poids à 10 % en poids d'un polyalcényle, le pourcentage en poids étant par rapport au poids total de la composition ; et/ou
dans laquelle le polyalcényle comprend un prépolymère polyalcényle, un polyalcényle monomère, ou une association de ceux-ci ; et/ou
dans laquelle le polyalcényle comprend un éther polyalcénylique de formule (16), un composé polyalcényle de formule (14), ou une association de ceux-ci :
B(-R1⁻O-CH=CH2₎z (16)
B(-R1⁻CH=CH2₎z (14)
où :
B est un noyau d'un agent de polyfonctionnalisation alcénylique ;
z est un nombre entier valant de 3 à 6 ; et
R¹ est un groupe organique choisi parmi les groupes alcanediyle en C₁-C₆, cycloalcanediyle en C₅-C₁₂, alcanecycloalcanediyle en C₆-C₂₀, hétéroalcanediyle en C₁-C₆, hétérocycloalcanediyle en C₅-C₁₂, hétéroalcanecycloalcanediyle en C₆-C₂₀, alcanediyle en C₁-C₆ portant des substituants, cycloalcanediyle en C₅-C₁₂ portant des substituants, alcanecycloalcanediyle en C₆-C₂₀ portant des substituants, hétéroalcanediyle en C₁-C₆ portant des substituants, hétérocycloalcanediyle en C₅-C₁₂ portant des substituants et hétéroalcanecycloalcanediyle en C₆-C₂₀ portant des substituants ; et/ou
dans laquelle le polyalcényle comprend un éther bisalcénylique, l'éther bisalcénylique comprenant de préférence un éther bisalcénylique de formule (17) :
CH2₌CH-O-(R2⁻O-)m_{C}H=CH2 (17)
dans laquelle
m est un nombre entier valant de 2 à 6 ; et
chaque R² est choisi indépendamment parmi les groupes alcanediyle en C₁-C₁₀, cycloalcanediyle en C₆-C₈, alcanecycloalcanediyle en C₆-C₁₄ et -[(CHR³)ₚ-X-]_{q}(CHR³)ᵣ-, où
chaque R³ est choisi indépendamment parmi un atome d'hydrogène et un groupe méthyle ;
chaque X est choisi indépendamment parmi les atomes d'oxygène et de soufre et un groupe NR, R étant choisi parmi un atome d'hydrogène et un groupe méthyle ;
p est un nombre entier valant de 2 à 6 ;
q est un nombre entier valant de 1 à 5 ; et
r est un nombre entier valant de 2 à 10 ; et/ou
dans laquelle le polyalcényle a une masse moléculaire inférieure à 1 000 daltons ; et/ou
dans laquelle le polyalcényle comprend l'éther divinylique de triéthylène-glycol ; et/ou
dans laquelle la composition comprend de 0,01 % en poids à 15 % en poids de l'agent de réticulation, le pourcentage en poids étant par rapport au poids total de la composition ; et/ou
dans laquelle l'agent de réticulation comprend une polyamine, la polyamine ayant de préférence une masse moléculaire de 150 daltons à 1 500 daltons et/ou comprend une amine primaire, une amine secondaire, ou une association de celles-ci, et/ou une polyamine cycloaliphatique, et/ou la 4,4'-méthylène(cyclohexylamine) ; et/ou
dans laquelle le polyépoxyde a une masse moléculaire de 150 daltons à 1 500 daltons ; et/ou
dans laquelle le polyépoxyde comprend un polyépoxyde aliphatique, un polyépoxyde aromatique ou une association de ceux-ci ; et/ou
dans laquelle le polyépoxyde comprend un polyépoxyde difonctionnel ; et/ou
dans laquelle le polyépoxyde comprend un polyépoxyde difonctionnel dérivé de bisphénol A/épichlorhydrine, l'éther diglycidylique de 1,4-butanediol, ou une association de ceux-ci ; et/ou
dans laquelle la composition présente un rapport en poids de la polyamine au polyépoxyde de 20:1 à 1:20 ou de 2:1 à 1:2 ; et/ou
dans laquelle l'amorceur de polymérisation radicalaire comprend un amorceur de polymérisation radicalaire de type peroxyde organique, un photoamorceur radicalaire activé par un rayonnement actinique, ou une association de ceux-ci ; et/ou
dans laquelle la composition comprend de 0,01 % en poids à 3 % en poids de l'amorceur de polymérisation radicalaire, le pourcentage en poids étant par rapport au poids total de la composition ; et/ou
dans laquelle l'amorceur de polymérisation radicalaire comprend un amorceur de polymérisation radicalaire de type peroxyde organique, l'amorceur de polymérisation radicalaire de type peroxyde organique comprenant de préférence le peroxybenzoate de *tert*-butyle, un peroxydicarbonate, ou une association de ceux-ci ; le carbonate de *tert*-butylperoxy-2-éthylhexyle, le carbonate de *tert*-amylperoxy-2-éthylhexyle, le carbonate de *tert*-butylperoxy-isopropyle, le monoperoxycarbonate de *tert*-butyle et d'isopropyle, le monoperoxycarbonate de *tert*-amyle et d'isopropyle, le monoperoxycarbonate de *tert*-butyle et de 2-éthylhexyle, le monoperoxycarbonate de *tert*-amyle et de 2-éthylhexyle, ou une association de quelconques peroxydes parmi les précédents ; ou le peroxy-3,5,5-triméthylhexanoate de *tert*-butyle, le 1,1-di(*tert-*butylperoxy)cyclohexane, le peroxyacétate de *tert*-amyle, le carbonate de *tert-*amylperoxy-2-éthylhexyle, le 1,1-di(*tert*-butylperoxy)-3,5,5-triméthylcyclohexane, le 1,1-di(*tert*-amylperoxy)cyclohexane, le monoperoxymaléate de *tert*-butyle, le 1,1'-azodi(hexahydrobenzonitrile), ou une association de quelconques peroxydes parmi les précédents ; et/ou
dans laquelle l'amorceur de polymérisation radicalaire comprend un amorceur de polymérisation radicalaire activé par un rayonnement actinique, l'amorceur de polymérisation radicalaire activé par un rayonnement actinique comprenant de préférence un photoamorceur, le photoamorceur comprenant de préférence un photoamorceur UV et/ou un photoamorceur visible ; et/ou le photoamorceur comprenant l'oxyde de diphényl(2,4,6-triméthylbenzoyl)phosphine, la 2,2-diméthoxy-2-phénylacétophénone, et une association de tels photoamorceurs.

3. Composition selon l'une quelconque des revendications 1 et 2, dans laquelle la composition comprend un complexe de métal de transition,
dans laquelle le complexe de métal de transition comprend de préférence un complexe de Co(II), Co(III), Mn(II), Mn(III), Fe(II), Fe(III), Cu(II), V(III), ou une association de quelconques complexes parmi les précédents ; ou le bis(2-éthylhexanoate) de cobalt(II), l'acétylacétonate de manganèse(III), l'acétylacétonate de fer(III), ou une association de quelconques complexes parmi les précédents ; et/ou
dans laquelle la composition comprend de préférence de 0,01 % en poids à 3 % en poids du complexe de métal de transition, le pourcentage en poids étant par rapport au poids total de la composition ; et/ou
dans laquelle la composition comprend une base de type amine tertiaire,
dans laquelle la composition comprend de préférence de 0,01 % en poids à 5 % en poids de la base de type amine tertiaire, le pourcentage en poids étant par rapport au poids total de la composition ; et/ou
dans laquelle la base de type amine tertiaire comprend de préférence le 1,4-diazabicyclo[2,2,2]octane, le 1-benzyl-2-méthyl-1*H*-imidazole, et une association de ceux-ci ; et/ou
dans laquelle la composition comprend un composé à fonction hydroxy,
dans laquelle le composé à fonction hydroxy présente de préférence une fonctionnalité hydroxy moyenne de 1,6 à 2,7 et/ou comprend un éther alcénylique à fonction hydroxy, un polybutadiène à fonction hydroxy, ou une association de ceux-ci,
dans laquelle l'éther alcénylique à fonction hydroxy de préférence
- a la structure de la formule (10) :
CH2₌CH-O-(CH2₎t₋OH (10)
où t est un nombre entier valant de 2 à 10 ; et/ou
- a une masse moléculaire de 150 g/mole à 600 g/mole ; et/ou
- comprend l'éther vinylique de 1-méthyl-3-hydroxypropyle, l'éther vinylique de 4-hydroxybutyle, ou une association de ceux-ci ; et/ou
dans laquelle le polybutadiène à fonction hydroxy de préférence
- a un indice d'OH de 0,15 à 2,0 méq/g ; et/ou
- a une masse moléculaire moyenne en nombre de 1 000 daltons à 10 000 daltons ; et/ou
dans laquelle la composition comprend de préférence de 0,1 % en poids à 5 % en poids du composé à fonction hydroxy comprenant un éther alcénylique à fonction hydroxy, un polybutadiène à fonction hydroxy, ou une association de ceux-ci, le pourcentage en poids étant par rapport au poids total de la composition.

4. Composition selon l'une quelconque des revendications 1 à 3, dans laquelle,
option 1 :
l'agent de réticulation comprend une polyamine ;
l'amorceur de polymérisation radicalaire comprend un amorceur de polymérisation radicalaire de type peroxyde organique ; et
la composition comprend un complexe de métal de transition ; ou
option 2 :
la composition comprend :
de 45 % en poids à 85 % en poids du prépolymère à fonction thiol ;
de 2 % en poids à 10 % en poids du polyalcényle ;
de 0,01 % en poids à 15 % en poids de l'agent de réticulation ; et
de 0,01 % en poids à 3 % en poids de l'amorceur de polymérisation radicalaire,
le pourcentage en poids étant par rapport au poids total de la composition,
dans laquelle l'amorceur de polymérisation radicalaire comprend de préférence un amorceur de polymérisation radicalaire de type peroxyde organique ; et/ou
dans laquelle la composition comprend de préférence de 0,01 % en poids à 3 % en poids du complexe de métal de transition ; et/ou
option 3 :
la composition comprend de 0,01 % en poids à 3 % en poids d'une base de type amine tertiaire ; et
le pourcentage en poids est par rapport au poids total de la composition,
dans laquelle la composition comprend de préférence de 0,1 % en poids à 5 % en poids d'un composé à fonction hydroxy.

5. Composition selon l'une quelconque des revendications 1 à 4, dans laquelle :
le prépolymère à fonction thiol comprend un polythioéther à fonction thiol ; et
le polyalcényle comprend un éther bis(alcénylique).

6. Composition selon l'une quelconque des revendications 1 à 5, comprenant en outre une charge,
dans laquelle la charge comprend de préférence une charge inorganique, une charge organique, une charge à faible densité, une charge conductrice ou une association de quelconques charges parmi les précédentes ; et/ou
dans laquelle la composition comprend de préférence de 0,1 % en poids à 60 % en poids de la charge, le pourcentage en poids étant par rapport au poids total de la composition ; et/ou
de 1 % en volume à 60 % en volume de la charge, le pourcentage en volume étant par rapport au volume total de la composition ; et/ou
dans laquelle la composition comprend un agent de polyfonctionnalisation à fonction thiol,
dans laquelle l'agent de polyfonctionnalisation à fonction thiol a de préférence une masse moléculaire inférieure à 2 000 Da et/ou une fonctionnalité thiol valant de 3 à 6 ; et/ou
dans laquelle la composition comprend de préférence de 0,1 % en poids à 10 % en poids de l'agent de polyfonctionnalisation à fonction thiol, le pourcentage en poids étant par rapport au poids total de la composition ; et/ou
dans laquelle la composition comprend un polyalcynyle,
dans laquelle la composition comprend de préférence de 1 % en poids à 10 % en poids d'un polyalcynyle, le pourcentage en poids étant par rapport au poids total de la composition ; et/ou
dans laquelle la composition comprend un diluant réactif, un plastifiant, un promoteur d'adhérence, un agent anti-corrosion, un retardateur de flamme, un stabilisant UV, un antioxydant, un colorant, un indicateur de durcissement, un inhibiteur d'érosion, ou une association de quelconques composés parmi les précédents ; et/ou
dans laquelle la composition comprend un agent photochrome, et/ou
dans laquelle la composition présente un débit d'extrusion supérieur à 15 g/min deux heures après le mélange, comme déterminé conformément à AS5127/1 (5.6) à une température de 23 °C ; et/ou
dans laquelle la composition présente un temps hors poisse inférieur à 48 heures, le temps hors poisse étant déterminé conformément à AS5127/1 (5.8) ; et/ou
dans laquelle la composition présente un temps de durcissement inférieur à 7 jours ; et/ou
dans laquelle la composition, une fois durcie, présente une cohésion de 100 % sous une charge supérieure à 20 livres/pouce (35 N/cm) sur des subjectiles en aluminium anodisé, acier inoxydable, titane, et polyuréthane, l'adhérence étant déterminée conformément à AS5127.

7. Système destiné à la préparation de la composition selon l'une quelconque des revendications 1 à 6, dans lequel le système comprend :
un premier composant, le premier composant comprenant :
le polyalcényle ; et
l'amorceur de polymérisation radicalaire ; et
un second composant, le second composant comprenant :
le prépolymère à fonction thiol,
dans lequel le premier composant comprend un agent de réticulation polyépoxyde et le second composant comprend en option un agent de réticulation polyamine,
dans lequel la composition est de préférence formulée sous forme d'un mastic d'étanchéité.

8. Composition durcie, préparée à partir de la composition selon l'une quelconque des revendications 1 à 7.

9. Surface comprenant la composition durcie selon la revendication 8.

10. Pièce comprenant la composition durcie de la revendication 9,
dans laquelle la pièce comprend de préférence un capuchon d'étanchéité, un joint d'étanchéité, et un composant d'étanchéité et/ou une pièce destinée à un véhicule aérospatial.

11. Véhicule comprenant la composition durcie selon la revendication 8,
dans lequel le véhicule est de préférence un véhicule aérospatial.

12. Procédé de revêtement d'une surface, comprenant :
l'application sur une surface de la composition selon l'une quelconque des revendications 1 à 7 ; et
le durcissement de la composition appliquée afin d'étanchéifier la surface.

13. Procédé selon la revendication 12, dans lequel le revêtement comprend une étanchéification, et la composition est formulée sous forme d'un mastic d'étanchéité ; et/ou
dans lequel le durcissement comprend l'exposition d'au moins une partie de la composition appliquée à un rayonnement actinique ; et/ou
dans lequel l'application comprend une impression en trois dimensions.

14. Procédé de fabrication d'une pièce, comprenant :
le formage de la composition selon l'une quelconque des revendications 1 à 7 en une forme d'une pièce ; et
le durcissement de la composition à durcir pour obtenir la pièce.

15. Procédé selon la revendication 14, dans lequel le formage comprend une impression en trois dimensions co-réactive et/ou une extrusion ; et/ou
dans lequel le durcissement comprend l'exposition d'au moins une partie de la composition appliquée à un rayonnement actinique et/ou
dans lequel le durcissement comprend le fait de laisser durcir à l'abri de la lumière.
